(19) Europäisches Patentamt / European Patent Office / Office européen des brevets

(11) **EP 2 570 259 A1**

(12) **EUROPEAN PATENT APPLICATION**
published in accordance with Art. 153(4) EPC

(43) Date of publication:
**20.03.2013 Bulletin 2013/12**

(51) Int Cl.:
***B32B 27/18*** *(2006.01)*

(21) Application number: **11780520.0**

(22) Date of filing: **27.04.2011**

(86) International application number:
**PCT/JP2011/060264**

(87) International publication number:
**WO 2011/142263 (17.11.2011 Gazette 2011/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
18.02.2011 JP 2011033251
09.02.2011 JP 2011025814
19.11.2010 JP 2010258593
08.11.2010 JP 2010249649
04.11.2010 JP 2010247020
01.11.2010 JP 2010245166
01.11.2010 JP 2010245164
18.10.2010 JP 2010233409
08.10.2010 JP 2010228207
22.09.2010 JP 2010211702
22.09.2010 JP 2010211701
10.05.2010 JP 2010108511

(71) Applicant: **Nitto Denko Corporation**
**Ibaraki-shi, Osaka 567-8680 (JP)**

(72) Inventors:
• **SUGINO, Yusuke**
**Ibaraki-shi**
**Osaka 567-8680 (JP)**
• **NAGASAKI, Kunio**
**Ibaraki-shi**
**Osaka 567-8680 (JP)**
• **DOI, Kohei**
**Ibaraki-shi**
**Osaka 567-8680 (JP)**
• **HIDA, Takafumi**
**Ibaraki-shi**
**Osaka 567-8680 (JP)**

(74) Representative: **Müller-Boré & Partner**
**Patentanwälte**
**Grafinger Straße 2**
**81671 München (DE)**

(54) **FLAME-RETARDANT POLYMER MEMBER, FLAME-RETARDANT PRODUCT, AND FLAME-RETARDING METHOD**

(57) Provided is a flame-retardant member having flexibility and a high degree of flame retardancy. A flame-retardant polymer member of the present invention is a flame-retardant polymer member having a polymer layer (B) and a flame-retardant layer (A) on at least one surface of the polymer layer (B), in which the flame-retardant layer (A) is a layer containing a layered inorganic compound (f) in a polymer **(X)**.

FIG. **1**

**Description**

Technical Field

The present invention relates to a flame-retardant polymer member. The flame-retardant polymer member of the present invention is excellent in flexibility, and can make various adherends flame-retardant by being flexibly attached to the various adherends. In addition, the member can provide an article provided with flame retardancy by being attached to any one of the various adherends.

Background Art

Criteria for combustibility are classified into five stages, i.e., noncombustible, extremely flame-retardant, flame-retardant, slow-burning, and combustible in order of decreasing difficulty in combustion. In a printed matter to be attached to a building material such as an interior material, exterior material, or decorative laminate for a building or housing, or to an interior material or glass portion in a carrier such as a railway vehicle, a ship, or an aircraft, flame retardancy that can be adopted is specified for each of its applications.
A printed matter to be attached to a wall surface in an ordinary shop or the like, a wall surface in a railway vehicle, or a glass portion inside or outside the railway vehicle is as described below. A pattern to be displayed is printed on one surface of a base material sheet such as paper or a film, a pressure-sensitive adhesive layer is provided on the other surface thereof, and the printed matter is attached through the pressure-sensitive adhesive layer. However, such printed matter is combustible and hence most of the printed matter burns out when its combustion is left.
Accordingly, a possible approach to imparting flame retardancy to the base material sheet is to use a flame-retardant resin sheet as the base material sheet. A halogen-based resin such as a fluorine-based resin or a vinyl chloride resin has been conventionally used as such flame-retardant resin sheet (Patent Literature 1). However, the use of a halogen-based resin sheet has started to be regulated because of such problems of a halogen-containing substance as described below. The substance produces a toxic gas or produces dioxin when burnt. Accordingly, in recent years, the following method has been widely known for imparting flame retardancy to the resin material of a resin sheet (Patent Literature 2). A non-halogen-based flame retardant such as a phosphate or a metal hydrate is added to the resin. In this case, however, a large amount of the flame retardant must be added, with the result that a problem in that the transparency of the resin sheet reduces or a problem such as a defect in the external appearance of the resin sheet is induced.
To laminate, from above the printed matter on which the pattern has been printed, the flame-retardant resin sheet through the pressure-sensitive adhesive layer is also conceivable. In this case, however, a problem in that the clarity of the pattern on the printed matter reduces arises because the resin sheet is laminated on the printed matter through the pressure-sensitive adhesive layer, though flame retardancy is obtained as in the foregoing.
In addition, a material for the flame-retardant resin sheet is a resin. Accordingly, the sheet shows some degree of flame retardancy but does not have such flame retardancy as to be capable of blocking a flame, and hence its flame retardancy when the sheet is in direct contact with the flame is not sufficient.
In addition, as long as re-peelability can be imparted to a flame-retardant member having flame retardancy, the member can be easily re-peeled after having been attached to, for example, an adherend, and is hence expected to find use in various applications.
In addition, as long as strong pressure-sensitive adhesive property can be imparted to the flame-retardant member having flame retardancy, for example, when the member is attached to an adherend, the member hardly peels off the adherend, its attached state can be maintained over a long time period, and hence the member is expected to find use in various applications.
In addition, as long as low-outgas property can be imparted to the flame-retardant resin sheet, the amount of an outgas from a flame-retardant polymer member can be reduced.
In addition, the surface of even the polymer member having flame retardancy may be singed or perforated with a hole by a burning cigarette end. Cigarette resistance is needed for protecting the polymer member from the approach or contact of the burning cigarette end due to carelessness, mischief, or the like. To produce a member having a plurality of functions through the lamination of a layer having flame retardancy and a layer having cigarette resistance is also conceivable. However, when each of the layers is produced before their lamination, a problem in that time and effort are needed, or a problem in that an interfacial failure between the layers occurs arises (Patent Literature 3).
In addition, a conventional flame-retardant sheet involves the following problem. The sheet is apt to curl during its storage or the like, and hence an end portion thereof floats upon its attachment to any one of the various adherends.
In addition, the flame retardancy of the conventional flame-retardant sheet remarkably reduces when both surfaces of the flame-retardant sheet are exposed to a flame.
In addition, an odor specific to a material for the conventional flame-retardant sheet exists. When the sheet is used (for example, applied) in a closed space, e.g., in a room, such odor involves such a problem as to deteriorate a working environment.

In addition, the conventional flame-retardant sheet involves the following problem. The sheet is poor in weatherability and hence yellows when exposed to UV light for a long time period, with the result that its transparency reduces.

In addition, the conventional flame-retardant sheet involves a problem in that its dimensional stability is low. Specifically, the film expands in its surface direction owing to high-temperature storage.

In addition, when the flame-retardant sheet as a resin sheet burns, the following problem arises. As its polymer component vigorously burns during the burning, the quantity of heat to be generated is large and the amount of a gas to be produced is also large.

Citation List

Patent Literature

[PTL 1] JP 2005-015620 A
[PTL 2] JP 2001-040172 A
[PTL 3] JP 05-9876 A

Summary of Invention

Technical Problem

An object of the present invention is to provide a flame-retardant member having flexibility and a high degree of flame retardancy. Another object of the present invention is to provide, as a preferred embodiment, a flame-retardant member having excellent re-peelability as well. Another object of the present invention is to provide, as a preferred embodiment, a flame-retardant member having strong pressure-sensitive adhesive property as well. Another object of the present invention is to provide, as a preferred embodiment, a flame-retardant member having excellent low-outgas property as well. Another object of the present invention is to provide, as a preferred embodiment, a flame-retardant member having excellent cigarette resistance as well. Another object of the present invention is to provide, as a preferred embodiment, a flame-retardant member having excellent curl resistance as well. Another object of the present invention is to provide, as a preferred embodiment, a flame-retardant member having an extremely high degree of flame retardancy as well. Another obj ect of the present invention is to provide, as a preferred embodiment, a flame-retardant member having excellent odor-alleviating property as well. Another obj ect of the present invention is to provide, as a preferred embodiment, a flame-retardant member having excellent weatherability as well. Another object of the present invention is to provide, as a preferred embodiment, a flame-retardant member having excellent heat resistance as well. Another object of the present invention is to provide, as a preferred embodiment, a flame-retardant member having excellent low-heat-generating property and excellent low-smoking property as well.

In addition, another object of the present invention is to provide a flame-retardant article obtained by attaching the flame-retardant member to any one of the various adherends. Further, another object of the present invention is to provide a flame-retarding method for an adherend including attaching the flame-retardant member to any one of the various adherends.

Solution to Problem

The inventors of the present invention have made extensive studies to solve the problems, and as a result, have found that the problems can be solved with the following flame-retardant polymer member. Thus, the inventors have completed the present invention.

The flame-retardant polymer member of the present invention is a flame-retardant polymer member, including: a polymer layer **(B) ;** and a flame-retardant layer **(A)** on at least one surface of the polymer layer **(B),** in which the flame-retardant layer **(A)** includes a layer containing a layered inorganic compound **(f)** in a polymer **(X).**

In a preferred embodiment, the flame-retardant polymer member of the present invention has the flame-retardant layer **(A)** on one surface of the polymer layer **(B),** and the surface opposite to the flame-retardant layer **(A)** of the flame-retardant polymer member has an adhesion for a stainless plate at a peel rate of 50 mm/min, a peel angle of 180°, and 23°C of less than 10 N/20 mm.

In a preferred embodiment, the outermost layer opposite to the flame-retardant layer **(A)** of the flame-retardant polymer member is the polymer layer **(B).**

In a preferred embodiment, the outermost layer opposite to the flame-retardant layer **(A)** of the flame-retardant polymer member is a pressure-sensitive adhesive layer **(H)** provided on the polymer layer **(B)**.

In a preferred embodiment, the pressure-sensitive adhesive layer **(H)** is at least one kind selected from an acrylic pressure-sensitive adhesive, a urethane-based pressure-sensitive adhesive, a silicone-based pressure-sensitive adhesive, a natural rubber-based pressure-sensitive adhesive, a synthetic rubber-based pressure-sensitive adhesive, and a vinyl acetate-based pressure-sensitive adhesive.

In a preferred embodiment, the flame-retardant polymer member of the present invention has the flame-retardant layer **(A)** on one surface of the polymer layer **(B),** and the surface opposite to the flame-retardant layer **(A)** of the flame-retardant polymer member has an adhesion for a stainless plate at a peel rate of 50 mm/min, a peel angle of 180°, and 23°C of 10 N/20 mm or more.

In a preferred embodiment, the outermost layer opposite to the flame-retardant layer **(A)** of the flame-retardant polymer member is the polymer layer **(B)**.

In a preferred embodiment, the outermost layer opposite to the flame-retardant layer **(A)** of the flame-retardant polymer member is a pressure-sensitive adhesive layer **(H)** provided on the polymer layer **(B)**.

In a preferred embodiment, the pressure-sensitive adhesive layer **(H)** is at least one kind selected from an acrylic pressure-sensitive adhesive, a urethane-based pressure-sensitive adhesive, a silicone-based pressure-sensitive adhesive, a natural rubber-based pressure-sensitive adhesive, a synthetic rubber-based pressure-sensitive adhesive, and a vinyl acetate-based pressure-sensitive adhesive.

In a preferred embodiment, the amount of a volatile component when the flame-retardant polymer member is heated at 150°C is 5,000 ppm or less.

In a preferred embodiment, in a horizontal firing test involving horizontally placing the flame-retardant polymer member with its side of the flame-retardant layer **(A)** as a lower surface so that the lower surface is in contact with air, placing a Bunsen burner so that a flame port of the Bunsen burner is positioned at a lower portion distant from the lower surface on the side of the flame-retardant layer **(A)** by 45 mm, and bringing a flame of the Bunsen burner having a height of 55 mm from the flame port into contact with the lower surface of the flame-retardant layer **(A)** for 30 seconds while preventing the flame from being in contact with an end portion of the flame-retardant polymer member, the flame-retardant polymer member of the present invention has flame retardancy capable of blocking the flame.

In a preferred embodiment, the polymer (**X**) contains a cross-linked polymer.

In a preferred embodiment, the flame-retardant polymer member of the present invention has cigarette resistance in a cigarette resistance test involving: horizontally placing the flame-retardant polymer member with its side of the flame-retardant layer **(A)** as an upper surface; laying a live cigarette on the upper surface for 30 seconds; removing the cigarette after the laying; and examining the upper surface for the presence or absence of a singe and a hole when the upper surface is wiped.

In a preferred embodiment, the cross-linked polymer is obtained by polymerizing a polymerizable monomer containing a polyfunctional monomer.

In a preferred embodiment, the content of the polyfunctional monomer in the polymerizable monomer is 10 to 100 wt%.

In a preferred embodiment, the structure of a polymer in the polymer layer **(B)** is an uncross-linked structure or a semi-interpenetrating polymer network structure.

In a preferred embodiment, a flavoring agent is incorporated into at least one of the flame-retardant layer **(A)** and the polymer layer **(B)**.

In a preferred embodiment, the flavoring agent is at least one kind selected from an organic, chain low-molecular weight compound, an alicyclic compound, a terpene compound, and an aromatic compound.

In a preferred embodiment, a weathering agent is incorporated into at least one of the flame-retardant layer **(A)** and the polymer layer **(B)**.

In a preferred embodiment, the weathering agent is at least one kind selected from a UV absorbing agent and an antioxidant.

In a preferred embodiment, the UV absorbing agent is at least one kind selected from an oxybenzophenone-based compound, a benzotriazole-based compound, a salicylate-based compound, a benzophenone-based compound, and a cyanoacrylate-based compound.

In a preferred embodiment, the antioxidant is at least one kind selected from a phenol-based stabilizer, a phosphorus-based stabilizer, a thioether-based stabilizer, and an amine-based stabilizer.

In a preferred embodiment, a heat-resistant resin is incorporated into at least one of the flame-retardant layer **(A)** and the polymer layer **(B)**.

In a preferred embodiment, the heat-resistant resin has a glass transition temperature Tg of 120°C or more.

In a preferred embodiment, the polymer layer **(B)** contains inorganic particles.

In a preferred embodiment, the inorganic particles are at least one kind selected from silica, silicone, calcium carbonate, clay, titanium oxide, talc, a layered silicate, a clay mineral, metal powder, glass, glass beads, a glass balloon, an alumina balloon, a ceramic balloon, titanium white, and carbon black.

In a preferred embodiment, the content of the inorganic particles in the polymer layer **(B)** is 0.001 to 1,000 wt%.

In a preferred embodiment, a thickness of the flame-retardant layer **(A)** accounts for 50% or less of a total thickness of the flame-retardant layer **(A)** and the polymer layer **(B)**.

In a preferred embodiment, the flame-retardant layer **(A)** has a thickness of 3 to 1,000 μm.

In a preferred embodiment, a content of ash in the flame-retardant layer **(A)** is 3 wt% or more and less than 70 wt%.

In a preferred embodiment, the layered inorganic compound **(f)** in the flame-retardant layer **(A)** includes a layered clay mineral.

In a preferred embodiment, the flame-retardant layer **(A)** and/or the polymer layer **(B)** each have/has pressure-sensitive adhesive property.

In a preferred embodiment, the flame-retardant polymer member of the present invention is obtained by laminating a syrupy polymerizable composition layer **(a)** formed of a polymerizable composition (α) containing a polymerizable monomer **(m)** and the layered inorganic compound **(f)**, and a solid monomer-absorbing layer **(b)** containing a polymer **(p)** and capable of absorbing the polymerizable monomer **(m)**, and performing polymerization.

In a preferred embodiment, a drying step is performed after the performance of the polymerization.

In a preferred embodiment, a drying temperature in the drying step is 50 to 200°C.

In a preferred embodiment, a drying time in the drying step is 1 minute to 3 hours.

In a preferred embodiment, the polymerizable monomer **(m)** contains a polyfunctional monomer.

In a preferred embodiment, the structure of the polymer **(p)** is an uncross-linked structure.

In a preferred embodiment, the gel fraction of the polymer **(p)** is 10 wt% or less.

In a preferred embodiment, a flavoring agent is incorporated into at least one of the polymerizable composition layer **(a)** and the monomer-absorbing layer **(b)**.

In a preferred embodiment, a weathering agent is incorporated into at least one of the polymerizable composition layer **(a)** and the monomer-absorbing layer **(b)**.

In a preferred embodiment, a heat-resistant resin is incorporated into at least one of the polymerizable composition layer **(a)** and the monomer-absorbing layer **(b)**.

In a preferred embodiment, inorganic particles are incorporated into the monomer-absorbing layer **(b)**.

In a preferred embodiment, the flame-retardant polymer **member** of the present invention is obtained by laminating a solid layered inorganic compound-containing polymer layer $(a_p)$, which is obtained by polymerizing a polymerizable composition layer **(a)** formed of a polymerizable composition (α) containing a polymerizable monomer **(m)** and the layered inorganic compound **(f)**, and a solid monomer-absorbing layer **(b)** containing a polymer **(p)** and capable of absorbing the polymerizable monomer **(m)**.

In a preferred embodiment, a drying step is performed after the performance of the lamination.

In a preferred embodiment, a drying temperature in the drying step is 50 to 200°C.

In a preferred embodiment, a drying time in the drying step is 1 minute to 3 hours.

In a preferred embodiment, the polymerizable monomer **(m)** contains a polyfunctional monomer.

In a preferred embodiment, the structure of the polymer **(p)** is an uncross-linked structure.

In a preferred embodiment, the gel fraction of the polymer **(p)** is 10 wt% or less.

In a preferred embodiment, a flavoring agent is incorporated into at least one of the layered inorganic compound-containing polymer layer $(a_p)$ and the monomer-absorbing layer **(b)**.

In a preferred embodiment, a weathering agent is incorporated into at least one of the layered inorganic compound-containing polymer layer $(a_p)$ and the monomer-absorbing layer **(b)**.

In a preferred embodiment, a heat-resistant resin is incorporated into at least one of the layered inorganic compound-containing polymer layer $(a_p)$ and the monomer-absorbing layer **(b)**.

In a preferred embodiment, inorganic particles are incorporated into the monomer-absorbing layer **(b)**.

In a preferred embodiment, the flame-retardant polymer member of the present invention is obtained by laminating a syrupy polymerizable composition layer **(a')** formed of a polymerizable composition (α) containing a polymerizable monomer **(m1)** and the layered inorganic compound **(f)**, and a syrupy polymerizable composition layer **(b')** containing a polymerizable monomer **(m2)** and a polymer **(p2)**, and performing polymerization.

In a preferred embodiment, a drying step is performed after the performance of the polymerization.

In a preferred embodiment, a drying temperature in the drying step is 50 to 200°C.

In a preferred embodiment, a drying time in the drying step is 1 minute to 3 hours.

In a preferred embodiment, the polymerizable monomer **(m1)** contains a polyfunctional monomer.

In a preferred embodiment, the structure of the polymer **(p2)** is an uncross-linked structure.

In a preferred embodiment, the gel fraction of the polymer **(p2)** is 10 wt% or less.

In a preferred embodiment, a flavoring agent is incorporated into at least one of the polymerizable composition layer **(a')** and the polymerizable composition layer **(b')**.

In a preferred embodiment, a weathering agent is incorporated into at least one of the polymerizable composition layer **(a')** and the polymerizable composition layer **(b')**.

In a preferred embodiment, a heat-resistant resin is incorporated into at least one of the polymerizable composition layer **(a')** and the polymerizable composition layer **(b')**.

In a preferred embodiment, inorganic particles are incorporated into the polymerizable composition layer **(b')**.

In a preferred embodiment, the flame-retardant polymer member of the present invention is a flame-retardant polymer member having: the polymer layer **(B)** ; a flame-retardant layer **(A1)** provided on one surface of the polymer layer **(B)** ; and a flame-retardant layer **(A2)** provided on the other surface of the polymer layer **(B),** in which each of the flame-retardant layer **(A1)** and the flame-retardant layer **(A2)** is a layer containing the layered inorganic compound **(f)** in the polymer **(X)**.

In a preferred embodiment, in a horizontal firing test involving horizontally placing the flame-retardant polymer member with its side of the flame-retardant layer **(A1)** or the flame-retardant layer **(A2)** as a lower surface so that the lower surface is in contact with air, placing a Bunsen burner so that a flame port of the Bunsen burner is positioned at a lower portion distant from the lower surface on the side of the flame-retardant layer **(A1)** or the flame-retardant layer **(A2)** by 45 mm, and bringing a flame of the Bunsen burner having a height of 55 mm from the flame port into contact with the lower surface of the flame-retardant layer **(A1)** or the flame-retardant layer **(A2)** for 30 seconds while preventing the flame from being in contact with an end portion of the flame-retardant polymer member, the flame-retardant polymer member of the present invention has flame retardancy capable of blocking the flame.

In a preferred embodiment, the content of ash in at least one of the flame-retardant layer **(A1)** and the flame-retardant layer **(A2)** is 3 wt% or more and less than 70 wt%.

In a preferred embodiment, the layered inorganic compound (f) in each of the flame-retardant layer **(A1)** and the flame-retardant layer **(A2)** is a layered clay mineral.

In a preferred embodiment, the flame-retardant polymer member of the present invention is obtained by attaching a flame-retardant polymer member **(M1)** obtained by providing the flame-retardant layer **(A1)** on one surface of a polymer layer **(B1)**, and a flame-retardant polymer member **(M2)** obtained by providing the flame-retardant layer **(A2)** on one surface of a polymer layer **(B2)** to each other so that the polymer layer **(B1)** and the polymer layer **(B2)** are in contact with each other.

Another embodiment of the present invention provides a flame-retardant article. The flame-retardant article of the present invention is obtained by attaching the flame-retardant polymer member of the present invention to an adherend.

In a preferred embodiment, the adherend includes paper, lumber, a plastic material, a metal, a plaster board, glass, or a composite containing two or more thereof.

Another embodiment of the present invention provides a flame-retarding method for an adherend. The flame-retarding method for an adherend of the present invention includes attaching the flame-retardant polymer member of the present invention to an adherend to make the adherend flame-retardant.

In a preferred embodiment, the adherend includes paper, lumber, a plastic material, a metal, a plaster board, glass, or a composite containing two or more thereof.

Advantageous Effects of Invention

The flame-retardant layer **(A)** exerts a high degree of flame retardancy by virtue of the fact that the layer is a layer containing the layered inorganic compound **(f)** in the polymer **(X)**. Despite the fact that the flame-retardant polymer member of the present invention has the polymer, the member does not burn and can block a flame for some time even when the member is in direct contact with the flame.

As the flame-retardant layer **(A)** has the polymer **(X)**, the member can favorably maintain its flexibility, and has so wide a scope of applications as to be applicable to various applications.

There is no need to incorporate any halogen-based resin into the flame-retardant polymer member of the present invention.

In addition, the member is excellent in transparency because the ratio of the layered inorganic compound **(f)** in the polymer **(X)** in the flame-retardant layer **(A)** can be controlled so as to be relatively small. In particular, the member can exert flame retardancy even when the content of ash in the flame-retardant layer **(A)** is a content as small as less than 70 wt%. As described above, the flame-retardant polymer member of the present invention can effectively exert its flame retardancy while satisfying its flexibility and transparency.

In addition, the flame-retardant polymer member of the present invention is excellent in flame retardancy particularly when the flame-retardant polymer member of the present invention is obtained by laminating a syrupy polymerizable composition layer **(a)** formed of a polymerizable composition ($\alpha$) containing a polymerizable monomer **(m)** and the layered inorganic compound **(f),** and a solid monomer-absorbing layer **(b)** containing a polymer **(p)** and capable of absorbing the polymerizable monomer **(m),** and performing polymerization, and when the flame-retardant polymer member of the present invention is obtained by laminating a syrupy polymerizable composition layer **(a')** formed of a polymerizable composition (α) containing a polymerizable monomer (**m1**) and the layered inorganic compound **(f),** and a syrupy polymerizable composition layer **(b')** containing a polymerizable monomer **(m2)** and a polymer **(p2),** and performing polymerization.

The flame-retardant polymer member of the present invention is environmentally advantageous because there is no need to remove a volatile component (such as an organic solvent or an organic compound) in the polymerizable composition (α) through evaporation upon its production and hence a load on an environment can be reduced.

As the flame-retardant polymer member of the present invention has excellent re-peelability, the member can be easily re-peeled after having been attached to, for example, an adherend, and is hence expected to find use in various applications.

As the strongly adherent, flame-retardant polymer member of the present invention has strong pressure-sensitive adhesive property, when the member is attached to an adherend, the member hardly peels off the adherend, its attached state can be maintained over a long time period, and hence the member is expected to find use in various applications.

The flame-retardant polymer member of the present invention can preferably reduce the amount of an outgas from the flame-retardant polymer member.

The flame-retardant polymer member of the present invention can express excellent cigarette resistance when the polymer (**X**) in the flame-retardant layer (**A**) contains a cross-linked polymer. The member can express additionally excellent cigarette resistance particularly when the polyfunctional monomer is incorporated at 10 to 100 wt% into the polymerizable monomer for building the cross-linked polymer.

The flame-retardant polymer member of the present invention can express excellent curl resistance by adopting an uncross-linked structure or a semi-interpenetrating polymer network structure as the structure of the polymer in the polymer layer (**B**).

The flame-retardant polymer member of the present invention can express extremely excellent flame retardancy because the member has a flame-retardant layer on the outermost layer of each of both of its surfaces. In particular, the flame-retardant polymer member of the present invention does not burn and can block a flame for some time even when both of its surfaces are exposed to the flame. For example, even when a flame takes a roundabout path from the front surface of the flame-retardant polymer member of the present invention to its back surface during a fire, the member can express an extremely high degree of flame retardancy.

The flavoring agent can be incorporated into at least one of the flame-retardant layer (**A**) and polymer layer (**B**) of the flame-retardant polymer member of the present invention. With such procedure, the member can express extremely excellent odor-alleviating property, and hence can provide a good working environment when used (for example, applied) in a closed space, e.g., in a room.

The weathering agent can be incorporated into at least one of the flame-retardant layer (**A**) and polymer layer (**B**) of the flame-retardant polymer member of the present invention. With such procedure, the member can express extremely excellent weather ability, and hence does not yellow even when exposed to UV light for a long time period and can maintain its transparency.

The heat-resistant resin can be incorporated into at least one of the flame-retardant layer (**A**) and polymer layer (**B**) of the heat-resistant,flame-retardant polymer member of the present invention. With such procedure, the member can express extremely excellent heat resistance and is excellent in dimensional stability during high-temperature storage.

The flame-retardant polymer member of the present invention exerts high degrees of low-heat-generating property and low-smoking property because the polymer layer (**B**) can contain the inorganic particles.

Brief Description of Drawings

FIG. **1** is an example of a schematic sectional view of a flame-retardant polymer member of the present invention.
FIGS. **2** are each an example of a schematic sectional view of the flame-retardant polymer member of the present invention.
FIG. **3** is a schematic view of a method for a horizontal firing test for evaluating the flame-retardant polymer member of the present invention for its flame retardancy.
FIGS. **4** are examples of schematic sectional views of the flame-retardant polymer member of the present invention and a production method therefor.
FIGS. **5** are examples of schematic sectional views of the flame-retardant polymer member of the present invention and the production method therefor.
FIG. **6** is a scanning electron microscope photograph entirely showing a section of a flame-retardant polymer sheet obtained in Example 1.
FIG. **7** is a scanning electron microscope photograph showing a layered clay mineral-unevenly distributed portion in a section of the flame-retardant polymer sheet obtained in Example 1.

Description of Embodiments

<<1. Flame-retardant polymer member>>

A flame-retardant polymer member of the present invention has a polymer layer (B) and a flame-retardant layer (A) on at least one surface of the polymer layer (B). The flame-retardant layer (A) is a layer containing a layered inorganic compound (f) in a polymer (X). The polymer (X) may contain a cross-linked polymer. The structure of a polymer in the polymer layer (B) may be an uncross-linked structure or a semi-interpenetrating polymer network structure. The term "semi-interpenetrating polymer network structure" as used herein refers to a structure also referred to as "semi-IPN structure." When two kinds of polymers A and B are present in a system, such a structure that the polymer A has a cross-linked structure formed only of the polymer A and the polymer B has a cross-linked structure formed only of the polymer B is referred to as "interpenetrating polymer network structure (IPN structure)." In contrast, such a structure that the polymer A has an uncross-linked structure and the polymer B has a cross-linked structure is referred to as "semi-interpenetrating polymer network structure."

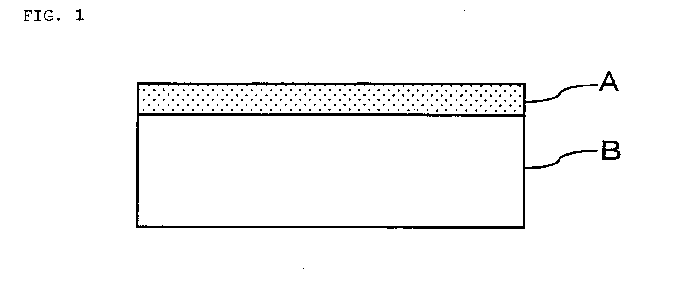

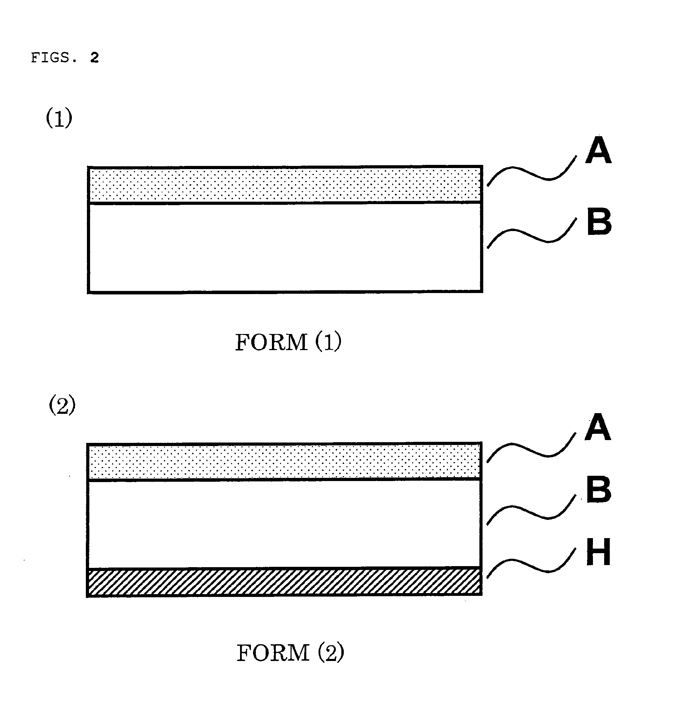

FIG. 1 illustrates a schematic view of the flame-retardant polymer member of the present invention. Although the flame-retardant layer (A) is provided on one surface of the polymer layer (B) in FIG. 1, the flame-retardant layer (A) can be provided on each of both surfaces of the polymer layer (B). When the flame-retardant polymer member of the present invention has the flame-retardant layer (A) on one surface of the polymer layer (B), the outermost layer opposite to the flame-retardant layer (A) of the flame-retardant polymer member may be the polymer layer (B), or the outermost layer opposite to the flame-retardant layer (A) of the flame-retardant polymer member may be a pressure-sensitive adhesive layer (H) provided on the polymer layer (B). FIG. 2 illustrates two forms, i.e., a form in which the polymer layer (B) can serve as the outermost layer to express re-peelability or strong pressure-sensitive adhesive property, and a form in which the pressure-sensitive adhesive layer (H) provided on the polymer layer (B) can serve as the outermost layer to express re-peelability or strong pressure-sensitive adhesive property.

One embodiment of the flame-retardant polymer member of the present invention has the polymer layer (B), a flame-retardant layer (A1) provided on one surface of the polymer layer (B), and a flame-retardant layer (A2) provided on the other surface of the polymer layer (B). Each of the flame-retardant layer (A1) and the flame-retardant layer (A2) is a layer containing the layered inorganic compound (f) in the polymer. FIGS. 2 each illustrate a schematic view of the flame-retardant polymer member of the present invention when such embodiment is adopted.

The flame-retardant polymer member of the present invention may be such that a flavoring agent is incorporated into at least one of the flame-retardant layer (A) and the polymer layer (B).

The flame-retardant polymer member of the present invention may be such that a weathering agent is incorporated into at least one of the flame-retardant layer (A) and the polymer layer (B).

The flame-retardant polymer member of the present invention may be such that a heat-resistant resin is incorporated into at least one of the flame-retardant layer (A) and the polymer layer (B).

The flame-retardant polymer member of the present invention may be such that inorganic particles are incorporated into the polymer layer (B).

<1-1. Polymer layer (B)>

The polymer layer (B) contains various polymers at preferably 80 wt% or more, more preferably 90 wt% or more, still more preferably 95 wt% or more, particularly preferably 98 wt% or more, most preferably substantially 100 wt%.

The structure of a polymer in the polymer layer (B) may be an uncross-linked structure or a semi-interpenetrating polymer network structure. When the structure of the polymer in the polymer layer (B) is an uncross-linked structure or a semi-interpenetrating polymer network structure, the flame-retardant polymer member of the present invention can express excellent curl resistance.

Examples of the polymer in the polymer layer (B) include: an acrylic resin; an urethane-based resin; an olefin-based resin containing α-olefin as a monomer component such as a polyethylene (PE), a polypropylene (PP), an ethylene-propylene copolymer, or an ethylene-vinyl acetate copolymer (EVA); a polyester-based resin such as a polyethylene terephthalate (PET), a polyethylene naphthalate (PEN), or a polybutylene terephthalate (PBT); a vinyl acetate-based resin, a polyphenylene sulfide (PPS); a polyamide (nylon); an amide-based resin such as an all-aromatic polyamide (aramid) ; a polyimide-based resin; a polyether ether ketone (PEEK) ; an epoxy resin; an oxetane-based resin; a vinyl ether-based resin; a natural rubber; and a synthetic rubber. The polymer in the polymer layer (B) is preferably an acrylic resin.

The number of kinds of polymers in the polymer layer (B) may be only one, or may be two or more.

The number of kinds of polymerizable monomers that can be used for obtaining the polymer in the polymer layer **(B)** may be only one, or may be two or more.

Any appropriate polymerizable monomer can be adopted as a polymerizable monomer that can be used for obtaining the polymer in the polymer layer **(B).**

Examples of the polymerizable monomer that can be used for obtaining the polymer in the polymer layer **(B)** include a monofunctional monomer, a polyfunctional monomer, a polar group-containing monomer, and any other copolymerizable monomer. Any appropriate content can be adopted as the content of each monomer component such as the monofunctional monomer, the polyfunctional monomer, the polar group-containing monomer, or the other copolymerizable monomer in the polymerizable monomer that can be used for obtaining the polymer in the polymer layer **(B)** depending on target physical properties of the polymer to be obtained.

Any appropriate monofunctional monomer can be adopted as the monofunctional monomer as long as the monomer is a polymerizable monomer having only one polymerizable group. The number of kinds of the monofunctional monomers may be only one, or may be two or more.

The monofunctional monomer is preferably an acrylic monomer. The acrylic monomer is preferably an alkyl (meth) acrylate having an alkyl group. The number of kinds of the alkyl (meth) acrylates each having an alkyl group may be only one, or may be two or more. It should be noted that the term "(meth) acryl" refers to "acryl" and/or "methacryl."

Examples of the alkyl (meth)acrylate having an alkyl group include an alkyl (meth) acrylate having a linear or branched alkyl group, and an alkyl (meth) acrylate having a cyclic alkyl group. It should be noted that the alkyl (meth)acrylate as used herein means a monofunctional alkyl (meth)acrylate.

Examples of the alkyl (meth)acrylate having a linear or branched alkyl group include an alkyl (meth) acrylate having an alkyl group having 1 to 20 carbon atoms such as methyl (meth) acrylate, ethyl meth(acrylate), propyl (meth) acrylate, isopropyl (meth) acrylate, butyl (meth) acrylate, isobutyl (meth) acrylate, s-butyl (meth)acrylate, t-butyl (meth) acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth) acrylate, isodecyl (meth)acrylate, undecyl (meth)acrylate, dodecyl (meth)acrylate, tridecyl (meth) acrylate, tetradecyl (meth) acrylate, pentadecyl (meth)acrylate, hexadecyl (meth) acrylate, heptadecyl (meth)acrylate, octadecyl (meth) acrylate, nonadecyl (meth)acrylate, or eicosyl (meth)acrylate. Of those, an alkyl (meth)acrylate having an alkyl group having 2 to 14 carbon atoms is preferred, and an alkyl (meth)acrylate having an alkyl group having 2 to 10 carbon atoms is more preferred.

Examples of the alkyl (meth)acrylate having a cyclic alkyl group include cyclopentyl (meth)acrylate, cyclohexyl (meth)acrylate, and isobornyl (meth)acrylate.

Any appropriate polyfunctional monomer can be adopted as the polyfunctional monomer. By adopting the polyfunctional monomer, a cross-linked structure may be given to the polymer in the polymer layer (**B**). The number of kinds of the polyfunctional monomers may be only one, or may be two or more.

Examples of the polyfunctional monomer include 1, 9-nonanediol di (meth) acrylate, 1, 6-hexanediol di (meth) acrylate, 1,4-butanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate. Of those, an acrylate-based polyfunctional monomer is preferred, and 1,9-nonanediol di(meth)acrylate and 1,6-hexanediol di(meth)acrylate are more preferred in terms of having high reactivity and possibly expressing excellent cigarette resistance.

Any appropriate polar group-containing monomer can be adopted as the polar group-containing monomer. The adoption of the polar group-containing monomer can improve the cohesive strength of the polymer in the polymer layer (**B**), or can increase the adhesive strength of the polymer layer (**B**). The number of kinds of the polar group-containing monomers may be only one, or may be two or more.

Examples of the polar group-containing monomer include: carboxyl group-containing monomers such as (meth)acrylic acid, itaconic acid, maleic acid, fumalic acid, crotonic acid, and isocrotonic acid, or anhydride thereof (for example, maleic anhydride) ; hydroxy group-containing monomers such as hydroxyalkyl (meth) acrylate such as hydroxyethyl (meth)acrylate, hydroxypropyl (meth)acrylate, or hydroxybutyl (meth)acrylate, vinyl alcohol, and allyl alcohol; amide group-containing monomers such as (meth)acrylamide, N,N-dimethyl (meth)acrylamide, N-methylol (meth)acrylamide, N-methoxymethyl (meth)acrylamide, and N-butoxymethyl (meth)acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth) acrylate; cyano group-containing monomers such as acrylonitrile and methacrylonitrile; heterocycle-containing vinyl-based monomers such as N-vinyl-2-pyrrolidone and (meth)acryloyl morpholine, as well as N-vinylpyridine, N-vinylpiperidone, N-vinylpyrimidine, N-vinylpiperazine, N-vinylpyrrole, N-vinylimidazole, and N-vinyloxazole; alcoxyalkyl (meth) acrylate-based monomers such as methoxyethyl (meth)acrylate and ethoxyethyl (meth)acrylate; sulfonate group-containing monomers such as sodium vinylsulfonate; phosphate group-containing monomers such as 2-hydroxyethyl acryloyl phosphate; imide group-containing monomers such as cyclohexyl maleimide and isopropyl maleimide; and isocyanate group-containing monomers such as 2-methacryloyloxyethyl isocyanate. The polar group-containing monomer is preferably a carboxy group-containing monomer or an anhydride thereof, more preferably acrylic acid.

Any appropriate other copolymerizable monomer can be adopted as the other copolymerizable monomer. The adoption of the other copolymerizable monomer can improve the cohesive strength of the polymer in the polymer layer (**B**), or can increase the adhesive strength of the polymer layer (**B**). The number of kinds of the other copolymerizable monomers may be only one, or may be two or more.

Examples of the other copolymerizable monomer include: an alkyl (meth) acrylate such as a (meth) acrylate having an aromatic hydrocarbon group such as phenyl (meth) acrylate; vinyl esters such as vinyl acetate and vinyl propionate; aromatic vinyl compounds such as styrene and vinyl toluene; olefins and dienes such as ethylene, butadiene, isoprene, and isobutylene; vinyl ethers such as a vinyl alkyl ether; vinyl chloride; alcoxyalkyl (meth)acrylate-based monomers such as methoxyethyl (meth)acrylate and ethoxyethyl (meth) acrylate; sulfonate group-containing monomers such as sodium vinyl sulfonate; phosphate group-containing monomers such as 2-hydroxyethyl acryloyl phosphate; imide group-containing monomers such as cyclohexylmaleimide and isopropylmaleimide; isocyanate group-containing monomers such as 2-methacryloyloxyethyl isocyanate; fluorine atom-containing (meth) acrylates; and silicone atom-containing (meth)acrylates.

The polymer layer (**B**) may contain a flame retardant. Any appropriate flame retardant can be adopted as the flame retardant. Examples of such flame retardant include: organic flame retardants such as a phosphorus-based flame retardant; and inorganic flame retardants such as magnesium hydroxide, aluminum hydroxide, and a layered silicate.

The polymer layer (**B**) may contain the layered inorganic compound (**f**) as a flame retardant as in the flame-retardant layer (**A**). In this case, the ratio at which the layered inorganic compound (**f**) is filled into the polymer layer (**B**) is preferably set so as to be lower than the ratio at which the the layered inorganic compound (**f**) is filled into the flame-retardant layer (**A**). Thus, the flame-retardant layer (**A**) and the polymer layer (**B**) are differentiated from each other in terms of degree of flame retardancy.

Any appropriate thickness can be adopted as the thickness of the polymer layer (**B**). The thickness of the polymer layer (**B**) is, for example, preferably 1 to 3,000 μm, more preferably 2 to 2,000 μm, still more preferably 5 to 1,000 μm. In addition, the polymer layer (**B**) may be a single layer, or may be a laminate formed of a plurality of layers.

Pressure-sensitive adhesive property can be imparted to the polymer layer (**B**) through the selection of a polymer that is a material for forming the layer. For example, an acrylic resin, an epoxy resin, an oxetane-based resin, a vinyl ether-based resin, an urethane-based resin, and a polyester-based resin function as a base polymer for an acrylic pressure-sensitive adhesive, a base polymer for an epoxy-based pressure-sensitive adhesive, a base polymer for an oxetane-based pressure-sensitive adhesive, a base polymer for a vinyl ether-based pressure-sensitive adhesive, a base polymer for a urethane-based pressure-sensitive adhesive, and a base polymer for a polyester-based pressure-sensitive adhesive, respectively.

The polymer layer (**B**) can contain a flavoring agent. When the polymer layer (**B**) contains the flavoring agent, its content is preferably $1.0 \times 10^{-5}$ to $1.0 \times 10^{-1}$ wt%, more preferably $1.0 \times 10^{-4}$ to $1.0 \times 10^{-2}$ wt% with respect to the weight of the entirety of the polymer layer (**B**). When the polymer layer (**B**) contains the flavoring agent, the flame-retardant polymer member of the present invention can express extremely excellent odor-alleviating property as long as the content falls within the range. When the content of the flavoring agent in the polymer layer (**B**) is excessively small, it may be unable to sufficiently alleviate the odor of the member. When the content of the flavoring agent in the polymer layer (**B**) is excessively large, the flavor of the flavoring agent may be felt unpleasant.

Any appropriate flavoring agent can be adopted as the flavoring agent that can be incorporated into at least one of the flame-retardant layer (**A**) and the polymer layer (**B**) as long as the flavoring agent has flavor and does not inhibit photopolymerization. Examples of such flavoring agent include a natural flavoring agent and a synthetic flavoring agent. Such flavoring agent is preferably an agent that is a liquid under normal temperature, and is preferably an agent having a boiling point of 150°C or more under normal pressure. Specifically, such flavoring agent is preferably at least one kind selected from an organic, chain low-molecular weight compound, an alicyclic compound, a terpene compound, and an aromatic compound. Only one kind of flavoring agents may be used, or two or more kinds thereof may be used in combination.

Preferred examples of the organic, chain low-molecular weight compound as a flavoring agent include alcohols that are organic, chain low-molecular weight compounds, aldehydes that are organic, chain low-molecular weight compounds, and ketones that are organic, chain low-molecular weight compounds. Specific examples of such organic, chain low-molecular weight compound include an alcohol having 6 to 12 carbon atoms, cis-3-hexenol, 3,3,5-trimethylhexanol, an aldehyde having 6 to 12 carbon atoms, 2,6,10-trimethyl-9-undecen-1-al, and methyl amyl ketone. Only one kind of organic, chain low-molecular weight compounds as flavoring agents may be used, or two or more kinds thereof may be used in combination.

Preferred examples of the alicyclic compound as a flavoring agent include alcohols that are alicyclic compounds, aldehydes that are alicyclic compounds, ketones that are alicyclic compounds, esters that are alicyclic compounds, ethers that are alicyclic compounds, and hydrocarbons that are alicyclic compounds. Examples of such alicyclic compound include p-t-butylcyclohexanol, o-t-butylcyclohexanol, synthetic sandals, 4-(tricyclo[5,2,1,02,6]-decylidene-8-butanal, 2,4-dimethylcyclohex-3-ene-3-carboaldehyde, p-t-butylcyclohexyl acetate, o-t-butylcyclohexylacetate, tricyclo [5,2,1,02,6]-dec-3-en-8 (or 9) -yl acetate, 4-acetoxy-3-pentyltetrahydrobilane, ethylene brassylate, o-t-butylcyclohexanone,p-t-amylcyclohexanone, and2-ethylhexanal ethylene glycol acetal. Only one kind of alicyclic compounds as flavoring agents may be used, or two or more kinds thereof may be used in combination.

Preferred examples of the terpene compound as a flavoring agent include alcohols that are terpene compounds, aldehydes that are terpene compounds, ketones that are terpene compounds, esters that are terpene compounds, and ethers that are terpene compounds. Examples of such terpene compound include linalool, terpineol, citronellol, geraniol, borneol, cedrol, lavandulol, 2,6-dimethyl-heptan-2-ol, citral, citronellal, methoxycitronellal, hydroxycitronellal, geranoxyacetoaldehyde, 4-(4-methyl-3-pentenyl)-cyclohex-3-ene-1-carboaldehyde, 2,4,6-trimethylcyclohex-3-ene-1-carboaldehyde, iso-bornyl acetate, ionone, methylionone, acetyl cedrene, 2,2,7,7-tetramethyl-2-tricyclo[6,2,1,03,8]-undecan-4-one, camphor, menton, d-limonene, 1-limonene, p-cimene, β-caryophyllene, rose oxide, linalool oxide, dodecahydro-3a,6,6,9a-tetramethylnaphto-[2,1-b]-furan, and 4-methylene-1-oxaspiro-[5,5]-undecane. Only one kind of terpene compounds as flavoring agents may be used, or two or more kinds thereof may be used in combination.

Preferred examples of the aromatic compound as a flavoring agent include alcohols that are aromatic compounds, aldehydes that are aromatic compounds, ketones that are aromatic compounds, and ethers that are aromatic compounds. Examples of such aromatic compound include phenylethyl alcohol, anisic alcohol, phenylethyldimethyl carbinol, eugenol, iso-eugenol, cinnamic alcohol, hexylcinnamic aldehyde, p-tert-butyl-2-methylhydrocinnamic aldehyde, anisic aldehyde, cuminaldehyde, phenoxyacetoaldehyde, heliotropin, vanillin, p-ethyl-2,2-dimethylhydrocinnamic aldehyde, benzophenone, p-methoxyacetophenone, β-methyl naphthyl ketone, aurantiol, phenylacetoaldehyde, dimethyl acetal, nitromusks, coumarine, isocoumarone-based musks, methyl anthranilate, iso-butylquinoline, p-cresyl methyl ether, methyl eugenol, and anethole. Only one kind of aromatic compounds as flavoring agents may be used, or two or more kinds thereof may be used in combination.

The polymer layer **(B)** can contain a weathering agent. When the polymer layer **(B)** contains the weathering agent, its content is preferably 0.001 to 30 wt%, more preferably 0.01 to 20 wt%, still more preferably 0.1 to 10 wt%, particularly preferably 0.3 to 5 wt% with respect to the weight of the entirety of the polymer layer **(B)**. When the polymer layer **(B)** contains the weathering agent, the flame-retardant polymer member of the present invention can express extremely excellent weatherability as long as the content falls within the range.

Any appropriate weathering agent can be adopted as the weathering agent that can be incorporated into at least one of the flame-retardant layer **(A)** and the polymerlayer **(B)**. Such weathering agent is preferably at least one kind selected from a UV absorbing agent and an antioxidant. Only one kind of weathering agents may be used, or two or more kinds thereof may be used in combination.

The UV absorbing agent as a weathering agent is, for example, at least one kind selected from an oxybenzophenone-based compound, a benzotriazole-based compound, a salicylate-based compound, a benzophenone-based compound, and a cyanoacrylate-based compound. Only one kind of UV absorbing agents as weathering agents may be used, or two or more kinds thereof may be used in combination. Examples of the benzotriazole-based compound include 2-(2'-hydroxyphenyl)benzotriazoles (such as 2-(2'-hydroxyphenyl)-2H-benzotriazole and its 5'-methyl derivative, 3',5'-di-tert-butyl derivative, 5'-(1,1,3,3-tetramethylbutyl)derivative, 5-chloro-3',5'-di-tert-butyl derivative, 5-chloro-3'-tert-butyl-5'-methyl derivative, 3'-sec-butyl-5'-tert-butyl derivative, 4'-octoxy derivative, 3',5'-di-tert-amyl derivative, and 3', 5'-bis(α,α-dimethylbenzyl) derivative), 2-(2-hydroxy)-2H-benzotriazole, 2-(2-hydroxy-5-vinylphenyl)-2H-benzotriazole, 2-(2-hydroxy-5-acrylyloxyphenyl)-2H-benzotriazole, 2-(2-hydroxy-3-methacrylamidemethyl-5-tert-octylphenyl)benzotriazole, 2-(2H-benzotriazol-2-yl)-6-dodecyl-4-methylphenol, and 2-(2H-benzotriazol-2-yl)-4,6-di-tert-pentylphenol, 2-(2H-benzotriazol-2-yl)-4-(1,1,3,3-tetramethylbutyl)phenol. Examples of the benzophenone-based compound and oxybenzophenone-based compound include 2,4-dihydroxy benzophenone, 2-hydroxy-4-methoxybenzophenone, 2-hydroxy-4-methoxybenzophenone-5-sulfonic acid (anhydride and trihydrate), 2-hydroxy-4-octyloxybenzophenone, 4-dodecyloxy-2-hydroxybenzophenone, 4-benzyloxy-2-hydroxybenzophenone, 2,2',4,4'-tetrahydroxybenzophenone, and 2,2'-dihydroxy-4,4'-dimethoxybenzophenone. Examples of the salicylate-based compound include phenyl-2-acryloyloxybenzoate, phenyl-2-acryloyloxy-3-methylbenzoate, phenyl-2-acryloyloxy-4-methylbenzoate, phenyl-2-acryloyloxy-5-methylbenzoate, phenyl-2-acryloyloxy-3-methoxybenzoate, phenyl-2-hydroxybenzoate, phenyl-2-hydroxy-3-methylbenzoate, phenyl-2-hydroxy-4-methylbenzoate, phenyl-2-hydroxy-5-methylbenzoate, and phenyl-2-hydroxy-3-methoxybenzoate. Examples of the cyanoacrylate-based compound include an alkyl-2-cyanoacrylate, a cycloalkyl-2-cyanoacrylate, a cycloalkyl-2-cyanoacrylate, a alcoxyalkyl-2-cyanoacrylate, a alkenyl-2-cyanoacrylate, and a alkynyl-2-cyanoacrylate.

The antioxidant as a weathering agent is, for example, at least one kind selected from a phenol-based stabilizer, a phosphorus-based stabilizer, a thioether-based stabilizer, and an amine-based stabilizer. Only one kind of antioxidants as weathering agents may be used, or two or more kinds thereof may be used in combination. Examples of the phenol-based stabilizer include 2,6-di-tert-butyl-4-methylphenol, 4-hydroxymethyl-2,6-di-tert-butylphenol, 2,6-di-tert-butyl-4-ethylphenol, butylated hydroxy anisole, n-octadecyl-3-(4-hydroxy-3,5-di-tert-butylphenyl)propionate, distearyl-(4-hydroxy-3-methyl-5-tert-butyl)benzyl malonate, tocopherol, 2,2'-methylenebis(4-methyl-6-tert-butylphenol), 2,2'-methylenebis(4-ethyl-6-tert-butylphenol), 4,4'-methylenebis(2,6-di-tert-butylphenol), 4,4'-butylidenebis(6-tert-butyl-m-cresol), 4,4'-thiobis(6-tert-butyl-m-cresol), styrenated phenol, N,N'-hexamethylenebis(3,5-di-tert-butyl-4-hydroxyhydrocinnamide), bis(3,5-di-tert-butyl-4-hydroxybenzyl ethyl phosphonate)calcium, 1,1,3-tris(2-methyl-4-hydroxy-5-tert-butylphenyl) butane, 1,3,5-trimethyl-2,4,6-tris(3,5-di-tert-butyl-4-hydroxybenzyl)b enzene, tetrakis[3-(3,5-di-tert-butyl-4-hydroxyphenyl)propionyloxymeth yl]methane, 1,6-hexanediol-bis[3-(3,5-di-tert-butyl-4-hydroxyphenyl)propio nate], 2,2'-methylenebis(4-methyl-6-cyclohexylphenol), 2,2'-methylenebis[6-(1-methylcyclohexyl)-p-cresol], 1,3,5-tris(4-tert-butyl-3-hydroxy-2,6-dimethylbenzyl)isocyanur ate, 1,3,5-tris(3,5-di-tert-butyl-4-hydroxybenzyl)isocyanuric acid, triethylene glycol-bis[3-(3-tert-butyl-4-hydroxy-5-methylphenyl)propionate ], 2,2'-oxamidebis[ethyl-3-(3,5-di-tert-butyl-4-hydroxyphenyl) pro pionate], 6-(4-hydroxy-3,5-di-tert-butylanilino)-2,4-dioctylthio-1,3,5-t riazine, bis[2-tert-butyl-4-methyl-6-(2-hydroxy-3-tert-butyl-5-methylbe nzyl)phenyl]terephthalate, 3,9-bis{2-[3-(3-tert-butyl-4-hydroxy-5-methylphenyl)propionylo xy]-1,1-dimethylethyl}-2,4,8,10-tetraoxaspiro[5.5]undecane, and 3,9-bis{2-[3-(3,5-di-tert-butyl-4-hydroxyphenyl)propionyloxy]-1,1-dimethylethyl}-2,4,8,10-tetraoxaspiro[5.5]undecane. Examples of the phosphorus-based stabilizer include trisnonylphenyl phosphite, tris(2,4-di-tert-butylphenyl) phosphite, tris[2 -tert-butyl-4-(3-tert-butyl-4-hydroxy-5-methylphenylthio)-5-me thylphenyl] phosphite, tridecyl phosphite, octyldiphenylphosphite, di(decyl) monophenyl phosphite, di(tridecyl)pentaerythritol diphosphite, distearyl pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, tetra(tridecyl)isopropylidenediphenol diphosphite, tetra(tridecyl)-4,4'-n-butylidenebis(2-tert-butyl-5-methylphen ol) diphosphite, hexa(tridecyl)-1,1,3-tris(2-methyl-4-hydroxy-5-tert-butyl-pheny l)butane triphosphite, tetrakis(2,4-di-tert-butylphenyl)biphenylene diphosphonite, 9,10-dihydro-9-oxa-10-phosphaphenanthrene-10-oxide, and tris(2-[(2,4,8,10-tetrakis-tert-butyldibenzo[d,f][1,3,2]dioxap hosphepin-6-yl)oxy]ethyl) amine. Examples of the thioether-based stabilizer include: a dialkyl thiodipropionate compound such as dilauryl, dimyristyl, or distearyl thiodipropionate; and a β-alkyl mercaptopropionate compound of polyol such as tetrakis[methylene(3-dodecylthio)propionate]methane. Examples of the amine-based stabilizer include bis(2,2,6,6-tetramethyl-4-piperidyl) sebacate, bis(1,2,2,6,6-pentamethyl-4-piperidyl)-2-(3,5-di-tert-butyl-4-hydroxybenzyl)-2-butylmalonate, bis(1-acryloyl-2,2,6,6-tetramethyl-4-piperidyl)-bis(3,5-di-ter t-butyl-4-hydroxybenzyl)malonate, tetrakis(2,2,6,6-tetramethyl-4-piperidyl)-1,2,3,4-butane tetracarboxylate, poly{[6-(1,1,3,3-tetramethylbutyl)imino-s-triazine-2,4-diyl][( 2,2,6,6-tetramethyl-4-piperidyl)imino]hexamethylene[(2,2,6,6-t etramethyl-4-piperidyl)imino]}, poly{(6-morpholino-s-triazine-2,4-diyl)[(2,2,6,6-tetramethyl-4 -piperidyl)imino]hexamethylene[(2,2,6,6-tetramethyl-4-piperidy 1)imino]}, a 1-hydroxyethyl-2,2,6,6-tetramethyl-4-piperidinol/succinic acid condensate, and a cyanuric chloride/tert-octyl amine/1,6-bis(2,2,6,6-tetramethyl-4-piperidylamino)hexane condensate. As the amine-based stabilizer, a hindered amine-based stabilizer is particularly preferably given.

The polymer layer **(B)** can contain a heat-resistant resin. When the heat-resistant resin is incorporated into the polymer layer **(B),** the content of the heat-resistant resin in the polymer layer **(B)** is preferably 10 wt% or more, more preferably 30 wt% or more, still more preferably 50 wt% or more, particularly preferably 70 wt% or more with respect to the weight of the entirety of the polymer layer **(B).** An upper limit for the content of the heat-resistant resin in the polymer layer **(B)** is not particularly limited and is preferably 100 wt% or less with respect to the weight of the entirety of the polymer layer **(B).** When the heat-resistant resin is incorporated into the polymer layer **(B),** the heat-resistant, flame-retardant polymer member of the present invention can express extremely excellent heat resistance as long as the content of the heat-resistant resin in the polymer layer **(B)** falls within the range.

Any appropriate heat-resistant resin can be adopted as the heat-resistant resin that can be incorporated into at least one of the flame-retardant layer **(A)** and the polymer layer **(B).** Such heat-resistant resin is preferably a heat-resistant resin having a glass transition temperature Tg of 120°C or more. The number of kinds of heat-resistant resins may be only one, or maybe two or more.

Examples of the heat-resistant resin include a resin having a glass transition temperature of 120°C or more selected from a fluorine resin, a polyimide, a polyamideimide, a polyether imide, a polyether ketone, a polysulfone, a polyether sulfone, a polybenzimidazole, a polyphenylene sulfide, a polyethylene naphthalate, a polyarylate, an aromatic polyamide, a polycarbonate, a modified polyphenylene ether, a polybutylene terephthalate, a cycloolefin polymer, a polypropylene, an epoxy resin, a phenol resin, an unsaturated ester resin, and a high-Tg acrylic resin. Examples of the high-Tg acrylic resin include a carboxyl group-containing acrylic polymer (such as a polyacrylic polymer), an acrylamide-based polymer (such as an isopropylacrylic polymer), and an alicyclic acrylic polymer (such as isobornyl-based acrylic polymer and dicyclopentadiene-based acrylic polymer).

The polymer layer **(B)** can contain inorganic particles. The content of the inorganic particles in the polymer layer **(B)** is preferably 0.001 to 1,000 wt%, more preferably 0.01 to 800 wt%, still more preferably 0.1 to 500 wt%, particularly preferably 1 to 300 wt%. When the content of the inorganic particles in the polymer layer **(B)** falls within the range, the flame-retardant polymer member of the present invention can express high degrees of low-heat-generating property and low-smoking property.

As the inorganic particles, any appropriate inorganic particles may be adopted as long as the effect of the present invention is not impaired. Examples of such inorganic particles include silica, silicone, calcium carbonate, clay, titanium oxide, tarc, a layered silicate, a clay mineral, metal powder, glass, glass beads, a glass balloon, an alumina balloon, a ceramic balloon, titanium white, and carbon black.

The number of kinds of the inorganic particles in the polymer layer **(B)** may be only one, or may be two or more.

<1-2. Pressure-sensitive adhesive layer **(H)**>

As illustrated in FIG. **2,** the flame-retardant polymer member of the present invention can adopt two forms, i.e., a form (**1**) in which the outermost layer opposite to the flame-retardant layer **(A)** is the polymer layer **(B),** and a form **(2)** in which the outermost layer opposite to the flame-retardant layer **(A)** is the pressure-sensitive adhesive layer **(H)** provided on the polymer layer (**B**).

Any appropriate pressure-sensitive adhesive layer can be adopted as the pressure-sensitive adhesive layer **(H)** as long as the layer is a layer capable of expressing re-peelability or strong pressure-sensitive adhesive property. The pressure-sensitive adhesive layer **(H)** is, for example, a layer formed of an acrylic pressure-sensitive adhesive, a urethane-based pressure-sensitive adhesive, a silicone-based pressure-sensitive adhesive, a natural rubber-based pressure-sensitive adhesive, a synthetic rubber-based pressure-sensitive adhesive, or a vinyl acetate-based pressure-sensitive adhesive.

The pressure-sensitive adhesive layer **(H)** may be an applied layer formed by application, or may be a formed layer formed by injection molding or the like. Any appropriate thickness can be adopted as the thickness of the pressure-sensitive adhesive layer **(H)** depending on the kind of its pressure-sensitive adhesive and its degree of re-peelability. The thickness of the pressure-sensitive adhesive layer **(H)** is preferably 1 to 1, 000 $\mu$m, more preferably 5 to 500 $\mu$m in order that the layer can express excellent re-peelability. The thickness of the pressure-sensitive adhesive layer (H) is preferably 1 to 3,000 $\mu$m, more preferably 5 to 1,000 $\mu$m in order that the layer can express strong pressure-sensitive adhesive property.

<1-3. Flame-retardant layer (**A**)>

In the description, description concerning the flame-retardant layer (**A**) can be cited for the description of the flame-retardant layer (**A1**) and the flame-retardant layer (**A2**). It should be noted that the flame-retardant layer (**A1**) and the flame-retardant layer (**A2**) may be identical to or different from each other in various components to be incorporated into each layer.

The same examples as those of the polymer that can be incorporated into the polymer layer **(B)** can be given as examples of the polymer (**X**) in the flame-retardant layer **(A).**

The polymer (**X**) in the flame-retardant layer **(A)** may contain a cross-linked polymer. The flame-retardant polymer member of the present invention can express excellent cigarette resistance when the polymer (**X**) in the flame-retardant layer **(A)** contains the cross-linked polymer.

When the polymer (**X**) contains the cross-linked polymer, the content of the cross-linked polymer in the polymer (**X**) is preferably 50 to 100 wt%, more preferably 70 to 100 wt%, still more preferably 90 to 100 wt%, particularly preferably 95 to 100 wt%, most preferably substantially 100 wt%. The flame-retardant polymer member of the present invention can express excellent cigarette resistance as long as the content of the cross-linked polymer in the polymer (**X**) falls within the range.

The cross-linkedpolymer in the polymer (**X**) is preferably obtained by polymerizing a polymerizable monomer containing a polyfunctional monomer. The content of the polyfunctional monomer in the polymerizable monomer that can be used for obtaining the cross-linked polymer is preferably 10 to 100 wt%, more preferably 30 to 100 wt%, still more preferably 50 to 100 wt%, particularly preferably 70 to 100 wt%, most preferably 90 to 100 wt%. The flame-retardant polymer member of the present invention can express additionally excellent cigarette resistance as long as the content of the polyfunctional monomer in the polymerizable monomer that can be used for obtaining the cross-linked polymer falls within the range. It should be noted that the number of kinds of the polyfunctional monomers may be only one, or may be two or more. The same examples as those of the polymerizable monomer that can be used for forming the polymer that can be incorporated into the polymer layer (**B**) can be given as examples of the polymerizable monomer that can be used for obtaining the cross-linked polymer.

The use of the polyfunctional monomer enables the flame-retardant polymer member of the present invention to express excellent cigarette resistance. Further, the use can improve its heat resistance and can improve the flaw-preventing property of its surface.

The flame-retardant layer (**A**) can contain a flavoring agent. When the flame-retardant layer (**A**) contains the flavoring agent, its content is preferably $1.0 \times 10^{-5}$ to $1.0 \times 10^{-1}$ wt%, more preferably $1.0 \times 10^{-4}$ to $1.0 \times 10^{-2}$ wt% with respect to the weight of the entirety of the flame-retardant layer (**A**). When the flame-retardant layer (**A**) contains the flavoring agent, the flame-retardant polymer member of the present invention can express extremely excellent odor-alleviating property as long as the content falls within the range. When the content of the flavoring agent in the flame-retardant layer (**A**) is excessively small, it may be unable to sufficiently alleviate the odor of the member. When the content of the flavoring agent in the flame-retardant layer (**A**), is excessively large, the flavor of the flavoring agent may be felt unpleasant. It should be noted that details about the flavoring agent are as described in the foregoing.

The flame-retardant layer (**A**) can contain a weathering agent. When the flame-retardant layer (**A**) contains the weathering agent, its content is preferably 0.001 to 30 wt%, more preferably 0.01 to 20 wt%, still more preferably 0.1 to 10 wt%, particularly preferably 0.3 to 5 wt% with respect to the weight of the entirety of the flame-retardant layer (**A**). When the flame-retardant layer (A) contains the weathering agent, the flame-retardant polymer member of the present invention can express extremely excellent weatherability as long as the content falls within the range. It should be noted that details about the weathering agent are as described in the foregoing.

The flame-retardant layer (**A**) can contain a heat-resistant resin. When the heat-resistant resin is incorporated into the flame-retardant layer (**A**), the content of the heat-resistant resin in the flame-retardant layer (A) is preferably 5 wt% or more, more preferably 10 wt% or more, still more preferably 20 wt% or more, particularly preferably 30 wt% or more with respect to the weight of the entirety of the flame-retardant layer (**A**). An upper limit for the content of the heat-resistant resin in the flame-retardant layer (**A**) is not particularly limited and is preferably 100 wt% or less with respect to the weight of the entirety of the flame-retardant layer (**A**). When the heat-resistant resin is incorporated into the flame-retardant layer (**A**), the heat-resistant, flame-retardant polymer member of the present invention can express extremely excellent heat resistance as long as the content of the heat-resistant resin in the flame-retardant layer (**A**) falls within the range. It should be noted that details about the heat-resistant resin are as described in the foregoing.

<1-4. Layered inorganic compound (**f**)>

In the description, description concerning the layered inorganic compound (**f**) to be incorporated into the flame-retardant layer (**A**) can be cited for the description of the layered inorganic compound (**f**) to be incorporated into the flame-retardant layer (**A1**) and the layered inorganic compound (**f**) to be incorporated into the flame-retardant layer (**A2**). It should be noted that the layered inorganic compound (**f**) to be incorporated into the flame-retardant layer (**A1**) and the layered inorganic compound (**f**) to be incorporated into the flame-retardant layer (**A2**) may be identical to or different from each other.

Examples of the layered inorganic compound (**f**) to be incorporated into the flame-retardant layer (**A**) include a layered inorganic substance and an organically treated product thereof. The layered inorganic compound (**f**) may be a solid, or may have flowability. The number of kinds of the layered inorganic compounds may be only one, or may be two or more.

Examples of inorganics which can form a layered inorganic substance include a silicate and a clay mineral. Of those, a layered clay mineral is preferred as the layered inorganic substance.

Examples of the layered clay mineral include: a smectite such as montmorillonite, beidellite, hectorite, saponite, nontronite, or stevensite; vermiculite; bentonite; and a layered sodium silicate such as kanemite, kenyaite, or makatite. Such layered clay mineral may be yielded as a natural mineral, or may be produced by a chemical synthesis method.

The organically treated product of the layered inorganic substance is a product obtained by treating the layered inorganic substance with an organic compound. An example of the organic compound is an organic cationic compound. Examples of the organic cationic compound include a cationic surfactant having a cation group such as a quarternary ammonium salt and a quarternary phosphonium salt. The cationic surfactant has a cationic group such as a quarternary ammonium salt or a quarternary phosphonium salt on a propylene oxide skeleton, an ethylene oxide skeleton, an alkyl skeleton, or the like. Such cationic group preferably forms a quarternary salt with a halide ion (such as a chloride ion).

Examples of the cationic surfactant which has a quarternary ammonium salt include lauryltrimethylammonium salt, stearyltrimethylammonium salt, trioctylammonium salt, distearyldimethylammonium salt, distearyldibenzylammonium salt, and an ammonium salt having a methyldiethylpropylene oxide skeleton.

Examples of the cationic surfactant which has a quarternary phosphonium salt include dodecyltriphenyl phosphonium salt, methyltriphenylphosphonium salt, lauryltrimethyl phosphonium salt, stearyltrimethyl phosphonium salt, distearyldimethyl phosphonium salt, and distearylbenzyl phosphonium salt.

The layered inorganic substance such as the layered clay mineral is treated with the organic cationic compound. As a result, a cation between layers can undergo ion exchange with a cationic group of a quaternary salt or the like. Examples of the cation of the clay mineral include metal cations such as a sodium ion and a calcium ion. The layered clay mineral treated with the organic cationic compound is easily swollen and dispersed in the polymer or the polymerizable monomer. An example of the layered clay mineral treated with the organic cationic compound is LUCENTITE series (Co-op Chemical Co. , Ltd.). As LUCENTITE series (Co-op Chemical Co., Ltd.), more specifically, LUCENTITE SPN, LUCENTITE SAN, LUCENTITE SEN, and LUCENTITE STN are given.

Examples of the organically treated product of the layered inorganic substance include products obtained by subjecting the surface of the layered inorganic substance to surface treatments with various organic compounds (such as a surface tension-lowering treatment with a silicone-based compound or a fluorine-based compound).

The ratio of the organic compound to the layered inorganic substance in the organically treated product of the layered inorganic substance varies depending on the cation-exchange capacity ("CEC") of the layered inorganic substance. The CEC relates to the ion-exchange capacity of the layered inorganic compound (f) or the total quantity of positive charge that can be caused to adsorb on the surface of the layered inorganic substance, and is represented by positive charge per unit mass of colloid particles, that is, "coulomb (s) per unit mass" in an SI unit. The CEC may be represented by milliequivalent(s) per gram (meq/g) or milliequivalent(s) per 100 grams (meq/100 g). A CEC of 1 meq/g corresponds to 96.5 C/g in the SI unit. Several CEC values concerning representative clay minerals are as described below. The CEC of montmorillonite falls within the range of 70 to 150 meq/100 g, the CEC of halloysite falls within the range of 40 to 50 meq/100 g, and the CEC of kaolin falls within the range of 1 to 10 meq/100 g.

The ratio of the organic compound to the layered inorganic substance in the organically treated product of the layered inorganic substance is such that the amount of the organic compound is preferably 1,000 parts by weight or less, more preferably 3 to 700 parts by weight, more preferably 5 to 500 parts by weight with respect to 100 parts by weight of the layered inorganic substance.

With regard to the particle diameter (average particle diameter) of the layered inorganic compound (f), its particles are preferably packed as densely as possible in a portion in the flame-retardant layer (A) where the layered inorganic compound (f) is distributed from such a viewpoint that good flame retardancy is obtained. For example, the average of primary particle diameters when the layered inorganic compound (f) is dispersed in a dilute solution is preferably 5 nm to 10 $\mu$m, more preferably 6 nm to 5 $\mu$m, still more preferably 7 nm to 1 $\mu$m in terms of a median diameter in a laser scattering method or a dynamic light scattering method. It should be noted that a combination of two or more kinds of particles having different particle diameters may be used as the particles.

The shape of each of the particles may be any shape, e.g., a spherical shape such as a true spherical shape or an ellipsoidal shape, an amorphous shape, a needle-like shape, a rod-like shape, a flat plate-like shape, a flaky shape, or a hollow tubular shape. The shape of each of the particles is preferably a flat plate-like shape or a flaky shape. In addition, the surface of each of the particles may have a pore, a protrusion, or the like.

The average of maximum primary particle diameters is preferably 5 $\mu$m or less, more preferably 5 nm to 5 $\mu$m because the transparency of the flame-retardant polymer member may be problematic as the particle diameter of the layered clay mineral increases.

It should be noted that the Lucentite SPN (manufactured by Co-op Chemical Co., Ltd.) is obtained by subjecting the layered clay mineral to an organizing treatment with an organic compound having a quaternary ammonium salt, and the ratio of the organic compound is 62 wt%. With regard to its particle diameter, the Lucentite SPN has a 25% average primary particle diameter of 19 nm, a 50% average primary particle diameter of 30 nm, and a 99% average primary particle diameter of 100 nm. The Lucentite SPN has a thickness of 1 nm and an aspect ratio of about 30.

Whenparticles are used as the layered inorganic compound (f), the layered inorganic compound (f) can contribute to, for example, the formation of surface unevenness by the particles in the surface of the flame-retardant layer (A) in some cases.

In addition, when the product obtained by treating the layered clay mineral with the organic cationic compound is used as the layered inorganic compound (f), the surface resistance value of the flame-retardant layer (A) can be preferably set to $1 \times 10^{14}$ ($\Omega/\square$) or less, and hence antistatic property can be imparted to the flame-retardant layer (A). The antistatic property can be controlled to desired antistatic property by controlling, for example, the kind, shape, size, and content of the layered inorganic compound (f), and the composition of the polymer component of the flame-retardant layer (A).

As the layered inorganic compound (f) and the polymer are mixed in the flame-retardant layer (A), the layer can exert a characteristic based on the polymer, and at the same time, can exert a characteristic of the layered inorganic compound (f).

The content of ash in the flame-retardant layer (A) (the content of the layered inorganic compound (f) with respect to the total amount of the formation materials for the flame-retardant layer (A), provided that when the layered inorganic compound (f) is an organically treated product of a layered inorganic substance, the content of the layered inorganic substance that has not been subjected to any organic treatment) can be appropriately set depending on the kind of the layered inorganic compound (f) . The content is preferably 3 wt% or more and less than 70 wt%. When the content is 70 wt% or more, the layered inorganic compound (f) may not be favorably dispersed. As a result, a lump is apt to be produced and hence it becomes difficult to produce the flame-retardant layer (A) in which the layered inorganic compound (f) has been uniformly dispersed in some cases. When the content is 70 wt% or more, the transparency and flexibility of the flame-retardant polymer member may reduce. On the other hand, when the content is less than 3 wt%, the flame-retardant layer (A) does not have flame retardancy in some cases. The content of the layered inorganic compound (f) in the flame-retardant layer (A) is preferably 3 to 60 wt%, more preferably 5 to 50 wt%.

<1-5. Additive>

In the description, description concerning an additive that can be incorporated into the flame-retardant layer (**A**) can be cited for the description of an additive that can be incorporated into the flame-retardant layer (**A1**) and an additive that can be incorporated into the flame-retardant layer (**A2**) . It shouldbe noted that the additive that can be incorporated into the flame-retardant layer (**A1**) and the additive that can be incorporated into the flame-retardant layer (**A2**) may be identical to or different from each other.

Any appropriate additive may be incorporated into the flame-retardant layer (**A**). Examples of such additive include a surfactant (such as an ionic surfactant, a silicone-based surfactant, or a fluorine-based surfactant), a cross-linking agent (such as a polyisocyanate-based cross-linking agent, a silicone-based cross-linking agent, an epoxy-based cross-linking agent, or an alkyl-etherified melamine-based cross-linking agent), a plasticizer, a filler, an age resister, an antioxidant, a colorant (such as a pigment or a dye), and a solvent (such as an organic solvent).

Any appropriate pigment (coloring pigment) may be incorporated into the flame-retardant layer (**A**) from the viewpoints of, for example, design and optical characteristics. When a black color is desired, carbon black is preferably used as the coloring pigment. The usage of the pigment (coloring pigment) is, for example, preferably 0.15 part by weight or less, more preferably 0.001 to 0.15 part by weight, still more preferably 0.02 to 0.1 part by weight with respect to 100 parts by weight of the polymer in the flame-retardant layer (**A**) from such a viewpoint that the degree of coloring and the like are not inhibited.

The flame-retardant layer (**A**) has a thickness of preferably 3 to 1,000 $\mu$m, more preferably 4 to 500 $\mu$m, still more preferably 5 to 200 $\mu$m. When the thickness of the flame-retardant layer (**A**) deviates from the range, its flame retardancy may be problematic.

<1-6. Flame-retardant polymer member>

The thickness of the entirety of the flame-retardant polymer member is preferably 10 to 5,000 $\mu$m, more preferably 20 to 4,000 $\mu$m, still more preferably 30 to 3,000 $\mu$m because of the following reasons. When the thickness is excessively small, the member may not show sufficient flame retardancy. When the thickness is excessively large, the member is hard to wind in a sheet shape and is hence poor in handleability in some cases. It should be noted that the thickness of the entirety of the flame-retardant polymer member means the total of the thickness of the flame-retardant layer (**A**) and the thickness of the polymer layer (**B**) when the member does not have the pressure-sensitive adhesive layer (H), or means the total of the thickness of the flame-retardant layer (**A**) , the thickness of the polymer layer (**B**) , and the thickness of the pressure-sensitive adhesive layer (**H**) when the member has the pressure-sensitive adhesive layer (**H**). It should be noted that when the member has the flame-retardant layer (**A1**) and the flame-retardant layer (**A2**) as flame-retardant layers, the total of the thicknesses of the flame-retardant layer (**A1**) and the flame-retardant layer (**A2**) corresponds to the thickness of the flame-retardant layer (**A**).

In addition, the ratio of the thickness of the flame-retardant layer (**A**) to the thickness of the entirety of the flame-retardant polymer member (the total of the thickness of the flame-retardant layer (**A**) and the thickness of the polymer layer (**B**) when the member does not have the pressure-sensitive adhesive layer (H), or the total of the thickness of the flame-retardant layer (**A**) , the thickness of the polymer layer (**B**) , and the thickness of the pressure-sensitive adhesive layer (H) when the member has the pressure-sensitive adhesive layer (**H**)) is preferably 50% or less, more preferably 50 to 0.1%, still more preferably 40 to 1%. When the ratio of the thickness of the flame-retardant layer (**A**) deviates from the range, its flame retardancy may be problematic or the strength of the flame-retardant layer (**A**) may be problematic.

<1-7. Flame retardancy>

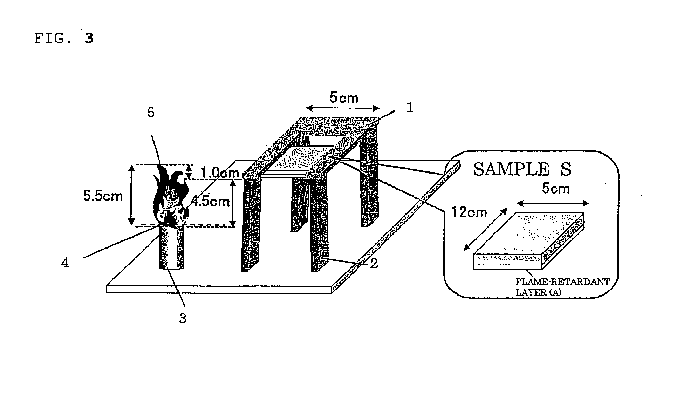

The flame-retardant polymer member of the present invention preferably satisfies the following flame retardancy. That is, in a horizontal firing test involving horizontally placing the flame-retardant polymer member of the present invention with its side of the flame-retardant layer (**A**) (its side of the flame-retardant layer (**A1**) or its side of the flame-retardant layer (**A2**) in the case of an embodiment in which the member has the flame-retardant layer (**A1**) and the flame-retardant layer (**A2**), the same holds true for the following) as a lower surface so that the lower surface is in contact with air, placing a Bunsen burner so that the flame port of the Bunsen burner is positioned at a lower portion distant from the lower surface on the side of the flame-retardant layer (A) by 45 mm, and bringing the flame of the Bunsen burner having a height of 55 mm from the flame port into contact with the lower surface of the flame-retardant layer (**A**) for 30 seconds (provided that the flame is prevented from being in contact with an end portion of the flame-retardant polymer member), the member has flame retardancy capable of blocking the flame. The horizontal firing test is a test for blocking property against a flame from the side of the flame-retardant layer (**A**) of the flame-retardant polymer member. Therefore, in the horizontal firing test, the flame of the Bunsen burner is brought into contact from the side of the flame-retardant layer (**A**) while being prevented frombeing in contact with the end portion of the flame-retardant polymer member. In ordinary cases, the test is performed by placing the Bunsen burner so that the flame of the Bunsen burner is in contact with a site distant from each of all end portions of the flame-retardant polymer member by at least 50 mm or more. Any appropriate size can be adopted as the size of the flame-retardant polymer member to be subjected to the horizontal firing test. For example, a rectangle measuring 5 to 20 cm wide by 10 to 20 cm long can be used as the size of the flame-retardant polymer member. In FIG. 3 and Examples, a member of a rectangular shape measuring 5 cm by 12 cm is used.

The horizontal firing test is specifically performed as described below. As illustrated in FIG. **3**, both sides of a rectangular, flame-retardant polymer member **S** are each horizontally fixed by two upper and lower supporting plates 1 with the side of the flame-retardant layer (**A**) of the rectangle as a lower surface. With regard to the supporting plates **1**, both sides in the lengthwise direction of the lower supporting plate **1** are provided with columns **2** so that the lower surface of the flame-retardant polymer member **S** is contact with air and a Bunsen burner **3** can be placed. In FIG. **3**, the rectangular, flame-retardant polymer member **S** measuring 5 cm by 12 cm is used, and each side of the member having a length of 12 cm is fixed by the supporting plates **1** (each having a width of 10 cm) . The Bunsen burner **3** is placed so that a distance between its flame port **4** and the lower surface of the flame-retardant polymer member **S** is 45 mm. In addition, the flame port **4** of the Bunsen burner **3** is positioned below the center of the flame-retardant polymer member **S.** The height of the flame of the Bunsen burner **3** from the flame port is adjusted to 55 mm. Although the Bunsen burner **3** is positioned below the flame-retardant polymer member **S,** the Bunsen burner **3** is illustrated outside the supporting plates **1** in FIG. **3** for convenience.

The test for flame retardancy can evaluate the flame-blocking property of the flame-retardant polymer member and the shape-maintaining property of the flame-retardant polymer member when the flame of the Bunsen burner having a size of 1 cm (a difference between the height of the flame from the flame port **4** of the Bunsen burner **3**, i.e., 55 mm, and a distance between the lower surface on the side of the flame-retardant layer (**A**) and the flame port **4** of the Bunsen burner 3, i.e., 45 mm) is brought into contact for 30 seconds. A propane gas is used as the gas of the Bunsen burner and the test is performed in the air.

As described in Examples, the flame-retardant polymer member can be evaluated for its flame-blocking property by: placing a White Economy 314-048 (manufactured by Biznet) as copy paper at a position 3 mm above the flame-retardant polymer member **S** (above the upper supporting plate **1** on both sides) ; and observing the presence or absence of the combustion of the copy paper in the horizontal firing test.

<1-8. Re-peelability>

When the flame-retardant polymer member of the present invention has the flame-retardant layer (**A**) on one surface of the polymer layer (**B**), the member preferably has excellent re-peelability, and the surface opposite to the flame-retardant layer (**A**) has an adhesion for a stainless plate at a peel rate of 50 mm/min, a peel angle of 180°, and 23°C of less than 10 N/20 mm, preferably 0.0001 N/20 mm or more and less than 10 N/20 mm, more preferably 0.001 to 8 N/20 mm, still more preferably 0.001 to 6 N/20 mm, particularly preferably 0.001 to 5 N/20 mm. When the adhesion falls within the range, the member can express a weak adhesion for an adherend and can express excellent re-peelability. A specific method of measuring the adhesion is described later.

<1-9. Strong pressure-sensitive adhesive property>

When the flame-retardant polymer member of the present invention has the flame-retardant layer (**A**) on one surface of the polymer layer (**B**), the member preferably has strong pressure-sensitive adhesive property, and the surface opposite to the flame-retardant layer (**A**) has an adhesion for a stainless plate at a peel rate of 50 mm/min, a peel angle of 180°, and 23°C of 10 N/20 mm or more, preferably 10 to 1,000 N/20 mm, more preferably 10 to 800 N/20 mm, still more preferably 10 to 600 N/20 mm, particularly preferably 10 to 400 N/20 mm. When the adhesion falls within the range, the member can express a strong adhesion for an adherend and can express excellent strong pressure-sensitive adhesive property. A specific method of measuring the adhesion is described later.

<1-10. Low-outgas property>

It is preferred that the flame-retardant polymer member of the present invention have excellent low-outgas property and hence the amount of an outgas from the flame-retardant polymer member can be reduced. Therefore, the flame-retardant polymer member of the present invention can alleviate an odor due to the outgas.

The amount of a volatile component when the flame-retardant polymer member of the present invention is heated at 150°C is preferably 5,000 ppm or less, more preferably 3,000 ppm or less, still more preferably 1,000 ppm or less, particularly preferably 500 ppm or less. In the case where the amount of the volatile component when the flame-retardant polymer member of the present invention is heated at 150°C is 5,000 ppm or less, the flame-retardant polymer member has excellent low-outgas property and hence the amount of an outgas from the flame-retardant polymer member can be reduced.

An evaluation for the low-outgas property can be performed by, for example, examining an odor for its degree of odorlessness by a sensory test as described in Examples.

<1-11. Cigarette resistance>

The flame-retardant polymer member of the present invention preferably satisfies the following cigarette resistance. That is, the flame-retardant polymer member of the present invention has cigarette resistance in a cigarette resistance test involving: horizontally placing the member with its side of the flame-retardant layer (**A**) as an upper surface; laying a live cigarette on the upper surface for 30 seconds; removing the cigarette after the laying; and examining the upper surface for the presence or absence of a singe and a hole when the upper surface is wiped. The member is more excellent in cigarette resistance as the degree of singe in the cigarette resistance test reduces. The member is more excellent in cigarette resistance as the degree of perforation in the test reduces.

<1-12. Curl resistance>

The flame-retardant polymer member of the present invention can preferably express excellent curl resistance. Therefore, an end portion of the member hardly floats upon its attachment to any one of the various adherends. The member can be evaluated for its curl resistance by, for example, leaving the member at rest on a horizontal laboratory table and measuring a height from the laboratory table to an end portion of the member after a predetermined time period. That is, the member is more excellent in curl resistance as the height lowers. A specific method of measuring the curl resistance is described later.

<1-13. Transparency>

The flame-retardant polymer member of the present invention is preferably substantially transparent, and has a total light transmittance of preferably 60% or more, more preferably 70% or more, still more preferably 80% or more, particularly preferably 90% or more. In addition, the member has a haze of preferably 20% or less, more preferably 10% or less, still more preferably 5% or less.

<1-14. Flexibility>

The flame-retardant polymer member of the present invention has flexibility peculiar to plastic. For example, in the case where no flaw or crack occurs even when both ends of a side having a length of 5 cm of the flame-retardant polymer member measuring 5 cm by 10 cm are repeatedly brought into contact with each other 50 times by bending the side in a mountain fold manner and in a valley fold manner, the member can be judged to have good flexibility. In addition, in the case where no flaw or crack occurs in the flame-retardant polymer member measuring 5 cm by 10 cm when the flame-retardant polymer member measuring 5 cm by 10 cm is wound around a rod having a diameter of 1 cm and then the flame-retardant polymer member is peeled, the member can be judged to have good flexibility.

<1-15. Odor-alleviating property>

It is preferred that the flame-retardant polymer member of the present invention can express extremely excellent odor-alleviating property, and hence can provide a good working environment when used (for example, applied) in a closed space, e.g., in a room. The member can be evaluated for its odor-alleviating property by, for example, such a sensory evaluation as described later.

<1-16. Weatherability>

It is preferred that the flame-retardant polymer member of the present invention can express extremely excellent weatherability, and hence do not yellow even when exposed to UV light for a long time period and can maintain its transparency. The member can be evaluated for its weatherability on the basis of, for example, a difference between values measured with a color-difference meter before and after such a light exposure test as described later.

<1-17. Heat resistance>

It is preferred that the heat-resistant, flame-retardant polymer member of the present invention can express extremely excellent heat resistance and be hence excellent in dimensional stability under high-temperature storage. An evaluation for the heat resistance can be performed by, for example, loading the member to be evaluated into an oven at a high temperature for a predetermined time period, measuring changes in its dimensions after the loading as compared with its dimensions before the loading, and calculating its dimensional change ratio as described in Examples.

<1-18. Low-heat-generating property>

The flame-retardant polymer member of the present invention can preferably express low-heat-generating property. That is, the flame-retardant polymer member of the present invention generates a small quantity of heat upon its combustion. An evaluation for the quantity of heat to be generated can be performed by, for example, subjecting the member to be evaluated to a combustion test with a cone calorimeter at a predetermined temperature and for a predetermined time period, and measuring the total quantity of heat to be generated at the time of the combustion. Details about the evaluation for the quantity of heat to be generated are described later.

<1-19. Low-smoking property>

The flame-retardant polymer member of the present invention can preferably express low-smoking property. That is, the flame-retardant polymer member of the present invention generates a small quantity of smoke upon its combustion. An evaluation for the quantity of smoke to be generated can be performed by, for example, subjecting the member to be evaluated to a combustion test with a cone calorimeter at a predetermined temperature and for a predetermined time period, and measuring the total quantity of smoke to be generated at the time of the combustion. Details about the evaluation for the quantity of smoke to be generated are described later.

<<2. Production of flame-retardant polymer member>>

Any appropriate production method can be adopted as a method of producing the flame-retardant polymer member of the present invention as long as, for example, such a construction that the member has the polymer layer (**B**) and the flame-retardant layer (**A**) on at least one surface of the polymer layer (**B**) is obtained.

In order that the flame-retardant polymer member of the present invention may express re-peelability or strong pressure-sensitive adhesive property, the member can adopt each of the form (**1**) in which the outermost layer opposite to the flame-retardant layer (**A**) is the polymer layer (**B**) and the form (**2**) in which the outermost layer opposite to the flame-retardant layer (**A**) is the pressure-sensitive adhesive layer (**H**) provided on the polymer layer (**B**) . When the flame-retardant polymer member of the present invention adopts the form (**1**) , any one of the following production methods (1) to (3) is applicable as the method of producing the flame-retardant polymer member of the present invention. When the flame-retardant polymer member of the present invention adopts the form (**2**), a method involving forming, after the production of a laminate of the flame-retardant layer (**A**) and the polymer layer (**B**) by any one of the following production methods (1) to (3), the pressure-sensitive adhesive layer (**H**) on the surface of the polymer layer (**B**) opposite to the flame-retardant layer (**A**) is applicable as the method of producing the flame-retardant polymer member of the present invention.

Any appropriate forming method can be adopted as a method of forming the pressure-sensitive adhesive layer (**H**). Examples of the method of forming the pressure-sensitive adhesive layer (**H**) include: a method involving applying any appropriate pressure-sensitive adhesive (or a mixture of the pressure-sensitive adhesive and any appropriate other component) onto the surface of the polymer layer (**B**) opposite to the flame-retardant layer (**A**) and drying the applied pressure-sensitive adhesive as required; and a method involving supplying any appropriate pressure-sensitive adhesive (or a mixture of the pressure-sensitive adhesive and any appropriate other component) to a forming machine for extrusion molding or the like to form a layered pressure-sensitive adhesive layer and attaching the layer onto the surface of the polymer layer (**B**) opposite to the flame-retardant layer (**A**).

Examples of the pressure-sensitive adhesive which may be used in the pressure-sensitive adhesive layer (**H**) include an acrylic pressure-sensitive adhesive, an urethane-based pressure-sensitive adhesive, a silicone-based pressure-sensitive adhesive, a natural rubber-based pressure-sensitive adhesive, a synthetic rubber-based pressure-sensitive adhesive, and a vinyl acetate-based pressure-sensitive adhesive.

When such an embodiment that the flame-retardant polymer member of the present invention has the polymer layer (B), a flame-retardant layer (**A1**) provided on one surface of the polymer layer (**B**), and a flame-retardant layer (**A2**) provided on the other surface of the polymer layer (**B**) is adopted, any appropriate production method can be adopted as the method of producing the flame-retardant polymer member of the present invention as long as, for example, such a construction that the member has the polymer layer (**B**), the flame-retardant layer (**A1**) provided on one surface of the polymer layer (**B**) , and the flame-retardant layer (**A2**) provided on the other surface of the polymer layer (**B**) is obtained. Such production method is preferably as described below. The member is obtained by attaching a flame-retardant polymer member (**M1**) obtained by providing the flame-retardant layer (**A1**) on one surface of a polymer layer (**B1**), and a flame-retardant polymer member (**M2**) obtained by providing the flame-retardant layer (**A2**) on one surface of a polymer layer (**B2**) to each other so that the polymer layer (**B1**) and the polymer layer (**B2**) are in contact with each other. The flame-retardant polymer member (**M1**) and the flame-retardant polymer member (**M2**) may be the same flame-retardant polymer member, or may be different flame-retardant polymer members. In addition, the flame-retardant polymer member (**M1**) and the flame-retardant polymer member (**M2**) may be flame-retardant polymer members obtained by the same production method, or may be flame-retardant polymer members obtained by different production methods.

The flame-retardant polymer member (**M1**) obtained by providing the flame-retardant layer (**A1**) on one surface of the polymer layer (**B1**), or the flame-retardant polymer member (**M2**) obtained by providing the flame-retardant layer (**A2**) on one surface of the polymer layer (**B2**) , that is, a flame-retardant polymer member (**M**) obtained by providing a flame-retardant layer on one surface of a polymer layer can be produced by any appropriate method. Such flame-retardant polymer member (**M**) can be produced by the same method as that of a flame-retardant polymer member in such a production method as described below.

<2-1. Flame-retardant polymer member production method (1)>

The production method (1) is preferably adopted as the method of producing the flame-retardant polymer member of the present invention because good flame retardancy is obtained. In the production method (1), the flame-retardant polymer member of the present invention is produced by: laminating a syrupy polymerizable composition layer (**a**) formed of a polymerizable composition ($\alpha$) containing a polymerizable monomer (**m**) and the layered inorganic compound (**f**), and a solid monomer-absorbing layer (**b**) containing a polymer (**p**) and capable of absorbing the polymerizable monomer (**m**) ; and performing polymerization. At this time, a flavoring agent may be incorporated into at least one of the polymerizable composition layer (**a**) and the monomer-absorbing layer (**b**) . When the flavoring agent is incorporated into at least one of the polymerizable composition layer (**a**) and the monomer-absorbing layer (**b**), the flavoring agent is finally incorporated into at least one of the flame-retardant layer (**A**) and the polymer layer (**B**). In addition, a weathering agent may be incorporated into at least one of the polymerizable composition layer (**a**) and the monomer-absorbing layer (**b**). When the weathering agent is incorporated into at least one of the polymerizable composition layer (**a**) and the monomer-absorbing layer (**b**), the weathering agent is finally incorporated into at least one of the flame-retardant layer (**A**) and the polymer layer (**B**) . In addition, a heat-resistant resin may be incorporated into at least one of the polymerizable composition layer (**a**) and the monomer-absorbing layer (**b**). When the heat-resistant resin is incorporated into at least one of the polymerizable composition layer (**a**) and the monomer-absorbing layer (**b**), the heat-resistant resin is finally incorporated into at least one of the flame-retardant layer (**A**) and the polymer layer (**B**). Inaddition, inorganic particles may be incorporated into the monomer-absorbing layer (**b**) . When the inorganic particles are incorporated into the monomer-absorbing layer (**b**), the inorganic particles are finally incorporated into the polymer layer (**B**).

According to the production method (1), the flame-retardant layer (**A**) and the polymer layer (**B**) can be obtained by: laminating the polymerizable composition layer (**a**) formed of the polymerizable composition ($\alpha$) containing the polymerizable monomer (**m**) and the layered inorganic compound (**f**) incompatible with a polymer obtained by polymerizing the polymerizable monomer on at least one surface of the solid monomer-absorbing layer (**b**) containing the polymer (**p**) and capable of absorbing the polymerizable monomer (**m**); and then polymerizing the polymerizable monomer.

In the production method (1), as a result of the lamination, part of the polymerizable monomer (**m**) in the polymerizable composition layer (**a**) is absorbed by the monomer-absorbing layer (**b**) . At the same time, the layered inorganic compound (**f**) moves in the polymerizable composition layer (**a**), and hence such an unevenly distributed polymerizable composition layer (**a1**) that the layered inorganic compound (**f**) is unevenly distributed toward the side opposite to the monomer-absorbing layer (**b**) is obtained. In addition, the flame-retardant layer (**A**) and the polymer layer (**B**) are obtained by polymerizing the polymerizable monomer (**m**) in the unevenly distributed polymerizable composition layer (**a1**) and the polymerizable monomer (**m**) in the monomer-absorbing layer (**b**) to cure the layers. An unevenly distributed portion (**a21**) of the layered inorganic compound (**f**) in an unevenly distributed polymer layer (**a2**) obtained by curing the unevenly distributed polymerizable composition layer (**a1**) corresponds to the flame-retardant layer (**A**). A non-unevenly distributed portion (**a22**) of the layered inorganic compound (**f**) in the unevenly distributed polymer layer (**a2**) and a cured monomer-absorbing layer (**b2**) formed by polymerizing a monomer-absorbing layer (**b1**) obtained by the absorption of the polymerizable monomer (**m**) by the monomer-absorbing layer (**b**) correspond to the polymer layer (**B**). In other words, a portion obtained by combining the non-unevenly distributed portion (**a22**) and the cured monomer-absorbing layer (**b2**) corresponds to the polymer layer (**B**).

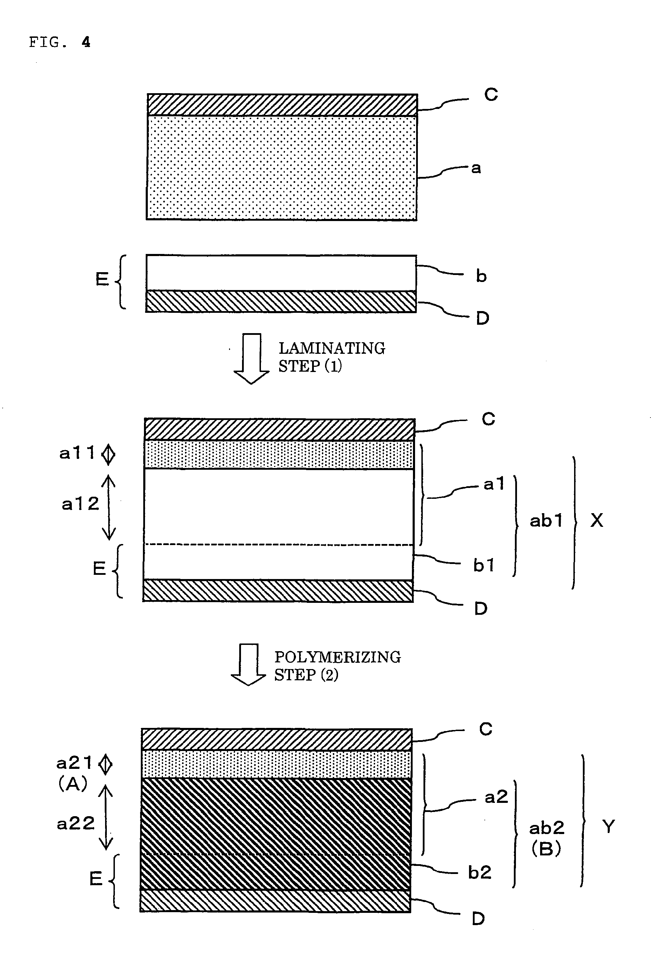

Hereinafter, "steps of laminating the syrupy polymerizable composition layer (**a**) formed of the polymerizable composition ($\alpha$) containing the polymerizable monomer (**m**) and the layered inorganic compound (f), and the solid monomer-absorbing layer (**b**) containing the polymer (**p**) and capable of absorbing the polymerizable monomer (**m**), and performing polymerization" in the flame-retardant polymer member production method (1) are described with reference to FIGS. **4**.

First, in a laminating step (**1**), a laminate (**X**) is obtained by laminating the polymerizable composition layer (**a**) and the monomer-absorbing layer (**b**). The polymerizable composition layer (**a**) contains the layered inorganic compound (**f**) and the polymerizable monomer (**m**) (not shown). Although the polymerizable composition layer (**a**) can be laminated on at least one surface of the monomer-absorbing layer (**b**), FIGS. **4** illustrate the case where the layer is laminated only on one surface of the monomer-absorbing layer (**b**). In FIGS. **4**, a cover film (**C**) is provided on the side of the polymerizable composition layer (**a**) not laminated on the monomer-absorbing layer (**b**). In addition, in FIGS. **4**, the monomer-absorbing layer (**b**) is provided on a base material film (**D**) and then the entirety is used as a monomer-absorbable sheet (**E**) with a base material.

In the laminate (**X**) obtained by the laminating step (**1**), part of the polymerizable monomer (**m**) in the polymerizable composition layer (**a**) is absorbed by the monomer-absorbing layer (**b**) (not shown). Meanwhile, the layered inorganic compound (**f**) moves in the polymerizable composition layer (**a**) and the layered inorganic compound (**f**) is unevenly distributed toward the side opposite to the monomer-absorbing layer (**b**). Thus, the unevenly distributed polymerizable composition layer (**a1**) having an unevenly distributed portion (**a11**) and non-unevenly distributed portion (**a12**) of the layered inorganic compound (**f**) is obtained. That is, the polymerizable monomer (**m**) in the polymerizable composition layer (**a**) is absorbed by the monomer-absorbing layer (**b**) as a result of the lamination of the polymerizable composition layer (**a**) and the monomer-absorbing layer (**b**), and the unevenly distributed polymerizable composition layer (**a1**) is obtained by the uneven distribution of the layered inorganic compound (**f**) toward the side opposite to the monomer-absorbing layer (**b**).

The phenomenon of the uneven distribution of the layered inorganic compound (**f**) in the unevenly distributed polymerizable composition layer (**a1**) is assumed to be caused by the swelling of the monomer-absorbing layer (**b**). That is, the monomer-absorbing layer (**b**) absorbs the polymerizable monomer (**m**) to swell. Meanwhile, the layered inorganic compound (**f**) is not absorbed by the monomer-absorbing layer (**b**). Accordingly, the layered inorganic compound (**f**) may be unevenly distributed in such a manner as to remain in the polymerizable composition layer (**a**). Therefore, when a base material that does not absorb the polymerizable monomer (**m**) is used as the monomer-absorbing layer (**b**), the base material does not swell with respect to the polymerizable monomer (**m**). Accordingly, even when the polymerizable composition layer (**a**) is laminated on the base material, the layered inorganic compound (**f**) is not unevenly distributed and hence the unevenly distributed polymerizable composition layer (**a1**) is not obtained.

In the flame-retardant polymer member production method (**1**), the laminate (**X**) can be subjected to a heating step. The unevenly distributed polymerizable composition layer (**a1**) including the unevenly distributed portion (**a11**) in which the layered inorganic compound (**f**) is unevenly distributed at a high density is obtained by the heating step. In the heating step, a heating temperature and a heating time for the laminate (**X**) are controlled. When such heating step is performed, the monomer-absorbing layer (**b**) of the laminate (**X**) can absorb a larger amount of the polymerizable monomer (**m**) in the polymerizable composition layer (**a**) than that in the case where the laminating step (**1**) is merely performed, and hence high-density uneven distribution of the layered inorganic compound (**f**) becomes significant. As described above, the unevenly distributed portion (**a11**) in which the layered inorganic compound (**f**) is unevenly distributed at a high density is obtained by the heating step. Accordingly, even when the unevenly distributed polymerizable composition layer (**a1**) and the unevenly distributed polymer layer (**a2**) are thin layers, the layered inorganic compound (**f**) can be unevenly distributed with efficiency and hence a laminate (Y) having the thin-layered unevenly distributed polymer layer (**a2**) can be obtained.

The polymerizable monomer (**m**) in the polymerizable composition layer (**a**) is subjected to a polymerizing step (**2**) after part thereof has been absorbed by the monomer-absorbing layer (**b**). Accordingly, adhesiveness between the unevenly distributed polymer layer (**a2**) and the cured monomer-absorbing layer (**b2**) is excellent in the laminated structure of the unevenly distributed polymer layer (**a2**) and the cured monomer-absorbing layer (**b2**).

The monomer-absorbing layer (**b1**) in the laminate (**X**) is in a swollen state as a result of the absorption of the polymerizable monomer (**m**) by the monomer-absorbing layer (**b**). Accordingly, an interface between the non-unevenly distributed portion (**a1**2) of the layered inorganic compound (**f**) in the unevenly distributed polymerizable composition layer (**a1**) and the monomer-absorbing layer (**b1**) cannot be observed (a composite site of these layers is represented as **ab1** in FIGS. **4**). In FIGS. **4**, the interface is indicated by a broken line for convenience.

Next, the polymerizable monomer (m) in the unevenly distributed polymerizable composition layer (**a1**) is polymerized by subjecting the laminate (**X**) to the polymerizing step (2). Thus, the laminate (**Y**) including the unevenly distributed polymer layer (**a2**) is obtained. The unevenly distributed polymer layer (**a2**) is obtained by curing the unevenly distributed polymerizable composition layer (**a1**) while maintaining the unevenly distributed structure in the layer. The unevenly distributed polymer layer (**a2**) has the unevenly distributed portion (**a21**) of the layered inorganic compound (**f**) and the non-unevenly distributed portion (**a22**) of the layered inorganic compound (**f**).

The monomer-absorbing layer (**b1**) is turned into the cured monomer-absorbing layer (**b2**) by the polymerizing step (**2**). Although an interface between the non-unevenly distributed portion (**a22**) of the layered inorganic compound (**f**) in the unevenly distributed polymer layer (**a2**) and the cured monomer-absorbing layer (**b2**) cannot be observed in the laminate (**Y**) (a composite site of these layers is represented as **ab2** in FIGS. *4*), the interface is indicated by a broken line in FIGS. **4** for convenience.

The production method (1) preferably includes a drying step (**3**) . The drying step (**3**) can be performed after the polymerizing step (**2**). An odor component remaining in the laminate (**Y**) can be removed by providing the drying step (**3**) after the polymerizing step (**2**). Accordingly, the amount of the outgas from the flame-retardant polymer member can be reduced.

In the production method (1), the polymerizable monomer (**m**) may contain a polyfunctional monomer.

In the production method (1), the structure of the polymer (**p**) may be an uncross-linked structure. In this case, the flame-retardant polymer member of the present invention can express excellent curl resistance. In the production method (1), the structure of the polymer in the polymer layer (**B**) can be an uncross-linked structure or a semi-interpenetrating polymer network structure resulting from the structure (uncross-linked structure) of the polymer (**p**) and the kind of monomer to be absorbed (a monofunctional monomer or a polyfunctional monomer).

(2-1-1. Laminating step (**1**))

In the laminating step (**1**), a laminate having a structure "polymerizable composition layer (**a**) /monomer-absorbing layer (**b**)" is produced by laminating the polymerizable composition layer (**a**) on at least one surface of the monomer-absorbing layer (**b**). The polymerizable composition layer (**a**) is a layer formed of the polymerizable composition ($\alpha$).

(2-1-1-1. Polymerizable composition ($\alpha$))

The polymerizable composition ($\alpha$) contains at least the polymerizable monomer (**m**) and the layered inorganic compound (**f**).

The polymerizable composition ($\alpha$) may be a partially polymerized composition obtained by polymerizing part of the polymerizable monomer (**m**) in terms of, for example, handleability and application property.

The description of the polymerizable monomer in the section <1-1. polymer layer (**B**) > can be cited as specific description of the polymerizable monomer (**m**).

The polymerizable monomer (**m**) may contain a polyfunctional monomer. When the polymerizable monomer (**m**) contains the polyfunctional monomer, the flame-retardant polymer member of the present invention can express excellent cigarette resistance.

When the polymerizable monomer (**m**) contains the polyfunctional monomer, the content of the polyfunctional monomer in the polymerizable monomer (**m**) is preferably 10 to 100 wt%, more preferably 30 to 100 wt%, still more preferably 50 to 100 wt%, particularly preferably 70 to 100 wt%, most preferably 90 to 100 wt%. As long as the content of the polyfunctional monomer in the polymerizable monomer (**m**) falls within the range, the flame-retardant polymer member of the present invention can express additionally excellent cigarette resistance.

When the flame-retardant polymer member is used in an application where pressure-sensitive adhesive property is demanded of the unevenly distributed polymer layer (**a2**), the content of an alkyl (meth) acrylate is preferably 70 wt% or more, more preferably 80 wt% or more with respect to the total amount of the polymerizable monomer (**m**).

When the low-outgas property, flame-retardant polymer member is used in an application where hardness physical property is demanded of the unevenly distributed polymer layer (**a2**) (e.g., a film application), the content of an alkyl (meth)acrylate is preferably 95 wt% or less, more preferably 0.01 to 95 wt%, still more preferably 1 to 70 wt% with respect to the total amount of the polymerizable monomer (**m**).

When the flame-retardant polymer member is used in an application where pressure-sensitive adhesive property is demanded of the unevenly distributed polymer layer (**a2**), the content of the polyfunctional monomer is preferably 2 wt% or less, more preferably 0.01 to 2 wt%, still more preferably 0.02 to 1 wt% with respect to the total amount of the polymerizable monomer (**m**). When the content of the polyfunctional monomer exceeds 2 wt% with respect to the total amount of the polymerizable monomer (**m**) , the following inconvenience may occur. The cohesive strength of the flame-retardant polymer member to be obtained becomes so high that the member becomes excessively brittle. In addition, when the content of the polyfunctional monomer is less than 0.01 wt% with respect to the total amount of the polymerizable monomer (**m**), it may be unable to achieve an object of the use of the polyfunctional monomer.

When the flame-retardant polymer member is used in an application where hardness physical property is demanded of the unevenly distributed polymer layer (**a2**), the content of the polyfunctional monomer is preferably 95 wt% or less, more preferably 0.01 to 95 wt%, still more preferably 1 to 70 wt% with respect to the total amount of the polymerizable monomer (**m**) . When the content of the polyfunctional monomer exceeds 95 wt% with respect to the total amount of the polymerizable monomer (**m**), curing shrinkage at the time of polymerization enlarges, and hence a uniform film- or sheet-shaped flame-retardant polymer member may not be obtained, or the flame-retardant polymer member to be obtained may become excessively brittle. In addition, when the content of the polyfunctional monomer is less than 0.01 wt% with respect to the total amount of the polymerizable monomer (**m**), a flame-retardant polymer member having sufficient solvent resistance or heat resistance may not be obtained.

When the flame-retardant polymer member is used in an application where pressure-sensitive adhesive property is demanded of the unevenly distributed polymer layer (**a2**), the content of a polar group-containing monomer is preferably 30 wt% or less, more preferably 1 to 30 wt%, still more preferably 2 to 20 wt% with respect to the total amount of the polymerizable monomer (**m**). When the content of the polar group-containing monomer exceeds 30 wt% with respect to the total amount of the polymerizable monomer (**m**), the following inconvenience may occur. The cohesive strength of the polymer to be obtained becomes so high, for example, the unevenly distributed polymer layer (**a2**) becomes so hard, that the adhesiveness may reduce. In addition, when the content of the polar group-containing monomer is less than 1 wt% with respect to the total amount of the polymerizable monomer **(m)** , there is a possibility that the cohesive strength of the polymer to be obtained reduces and hence a high shearing force is not obtained.

When the flame-retardant polymer member is used in an application where hardness physical property is demanded of the unevenly distributed polymer layer (**a2**), the content of the polar group-containing monomer is preferably 95 wt% or less, more preferably 0.01 to 95 wt%, still more preferably 1 to 70 wt% with respect to the total amount of the polymerizable monomer **(m)** . When the content of the polar group-containing monomer exceeds 95 wt% with respect to the total amount of the polymerizable monomer **(m)** , there is a possibility that, for example, low-outgas property is insufficient and hence a change in quality of the flame-retardant polymer member with a usage environment (e. g. , humidity or moisture) enlarges. In addition, when the usage of the polar group-containing monomer is 0.01 wt% or less with respect to the total amount of the polymerizable monomer (**m**), the following problem may arise. In the case where hardness physical property is to be obtained, the addition amount of a (meth) acrylate having a high glass transition temperature (Tg) (such as isobornyl acrylate), the polyfunctional monomer, or the like increases, and hence the flame-retardant polymer member to be obtained becomes excessively brittle.

The description in the section <1-4. layered inorganic compound (**f**) > can be cited as specific description of the layered inorganic compound (**f**).

A flavoring agent may be incorporated into the polymerizable composition ($\alpha$). When the flavoring agent is incorporated into the polymerizable composition ($\alpha$), its content is preferably $1.0 \times 10^{-5}$ to $1.0 \times 10^{-1}$ wt%, more preferably $1.0 \times 10^{-4}$ to $1.0 \times 10^{-2}$ wt% with respect to the entirety of the polymerizable monomer **(m)** . When the polymerizable composition ($\alpha$) contains the flavoring agent, the flame-retardant polymer member of the present invention can express extremely excellent odor-alleviating property as long as the content falls within the range. When the content of the flavoring agent in the polymerizable composition ($\alpha$) is excessively small, it may be unable to sufficiently alleviate the odor of the member. When the content of the flavoring agent in the polymerizable composition ($\alpha$) is excessively large, the flavor of the flavoring agent may be felt unpleasant.

A weathering agent may be incorporated into the polymerizable composition ($\alpha$). When the weathering agent is incorporated into the polymerizable composition ($\alpha$), its content is preferably 0.001 to 30 parts by weight, more preferably 0.01 to 20 parts by weight, still more preferably 0.1 to 10 parts by weight, particularly preferably 0.3 to 5 parts by weight with respect to the 100 parts by weight of the polymerizable monomer (**m**) . When the polymerizable composition ($\alpha$) contains the weathering agent, the flame-retardant polymer member of the present invention can express extremely excellent weatherability as long as the content falls within the range.

A heat-resistant resin may be incorporated into the polymerizable composition ($\alpha$). When the heat-resistant resin is incorporated into the polymerizable composition ($\alpha$), its content is preferably 5 wt% or more, more preferably 10 wt% or more, still more preferably 20 wt% or more, particularly preferably 30 wt% or more with respect to the weight of the entirety of the polymerizable monomer (**m**) . An upper limit for the content of the heat-resistant resin in the polymerizable composition ($\alpha$) is not particularly limited and is preferably 100 wt% or less with respect to the weight of the entirety of the polymerizable monomer **(m).** When the polymerizable composition **($\alpha$)** contains the heat-resistant resin, the heat-resistant, flame-retardant polymer member of the present invention can express extremely excellent heat resistance as long as the content falls within the range.

The polymerizable composition **($\alpha$)** may contain any appropriate additive. The description in the section <1-5. additive> can be cited as specific description of such additive.

The polymerizable composition ($\alpha$) can contain any appropriate polymerization initiator. Examples of the polymerization initiator include a photopolymerization initiator and a thermal polymerization initiator. The number of kinds of the polymerization initiators may be only one, or may be two or more.

As the photopolymerization initiator, any appropriate photopolymerization initiator may be adopted. Examples of the photopolymerization initiator include a benzoin ether-based photopolymerization initiator, an acetophenone-based photopolymerization initiator, an $\alpha$-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator. The number of kinds of the photopolymerization initiators may be only one, or may be two or more.

An example of the ketal-based photopolymerization initiator is 2,2-dimethoxy-1,2-diphenylethan-1-one (such as "Irgacure 651" (trade name; manufactured by Ciba Speciality Chemicals Inc.)). Examples of the acetophenone-based photopolymerization initiator include 1-hydroxycyclohexyl phenyl ketone (such as "Irgacure 184" (trade name; manufactured by Ciba Speciality Chemicals Inc.)), 2,2-diethoxyacetophenone, 2,2-dimethoxy-2-phenylacetophenone, 4-phenoxydichloroacetophenone, and 4-(t-butyl)dichloroacetophenone. Examples of the benzoin ether-based photopolymerization initiator include benzoin methyl ether, benzoin ethyl ether, benzoin propyl ether, benzoin isopropyl ether, and benzoin isobutyl ether. An example of the acylphosphine oxide-based photopolymerization initiator is "Lucirin TPO" (trade name; manufactured by BASF Japan Ltd.). Examples of the $\alpha$-ketol-based photopolymerization initiator include 2-methyl-2-hydroxy propiophenone and 1-[4-(2-hydroxyethyl)phenyl]-2-methylpropan-1-one. An example of the aromatic sulfonyl chloride-based photopolymerization initiator is 2-naphthalenesulfonyl chloride. An example of the photoactive oxime-based photopolymerization initiator is 1-phenyl-1,1-propanedione-2-(o-ethoxycarbonyl)-oxime. An example of the benzoin-based photopolymerization initiator is benzoin. An example of the benzyl-based photopolymerization initiator is benzyl. Examples of the benzophenone-based photopolymerization initiator include benzophenone, benzoylbenzoic acid, 3,3'-dimethyl-4-methoxybenzophenone, polyvinyl benzophenone, and $\alpha$-hydroxycyclohexyl phenyl ketone. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The usage of the photopolymerization initiator is, for example, preferably 5 parts by weight or less, more preferably 0.01 to 5 parts by weight, still more preferably 0.05 to 3 parts by weight with respect to 100 parts by weight of the polymerizable monomer (**m**) in the polymerizable composition ($\alpha$).

Examples of the thermal polymerization initiator include an azo-based polymerization initiator (such as 2,2'-azobisisobutyronitrile, 2,2'-azobis-2-methylbutyronitrile, 2,2'-azobis(2-methylpropionate)dimethyl, 4,4'-azobis-4-cyanovaleric acid, azobisisovaleronitrile, 2,2'-azobis(2-amidinopropane)dihydrochloride, 2,2'-azobis[2-(5-methyl-2-imidazolin-2-yl)propane]dihydrochlor ide, 2,2'-azobis(2-methylpropionamidine) disulfate, or 2,2'-azobis(N,N'-dimethyleneisobutylamidine)dihydrochloride), a peroxide-based polymerization initiator (such as dibenzoyl peroxide or tert-butyl permaleate), and a redox-based polymerization initiator (such as a combination of : an organic peroxide and a vanadium compound; an organic peroxide and dimethylaniline; a metal naphthenate and butylaldehyde, aniline, or acetylbutyrolactone).

The usage of the thermal polymerization initiator is, for example, preferably 5 parts by weight or less, more preferably 0.01 to 5 parts by weight, still more preferably 0.05 to 3 parts by weight with respect to 100 parts by weight of the polymerizable monomer (**m**) in the polymerizable composition ($\alpha$).

The use of a redox-based polymerization initiator as the thermal polymerization initiator enables the polymerization of the composition at normal temperature.

Whether or not a substance is a substance incompatible with a polymer can be judged by means of visual observation, an optical microscope, a scanning electron microscope (SEM), a transmission electron microscope (TEM), X-ray diffraction, or the like on the basis of the size of the substance or an aggregate thereof dispersed in the polymer in a general method (such as: a method involving dissolving the substance in a polymerizable monomer, polymerizing the polymerizable monomer to provide a polymer, and performing the judgment; a method involving dissolving the polymer in a solvent that dissolves the polymer, adding the substance to the solution, stirring the mixture, removing the solvent after the stirring, and performing the judgment; or a method involving heating the polymer, when the polymer is a thermoplastic polymer, to dissolve the polymer, compounding the substance into the dissolved polymer, cooling the mixture, and performing the judgment after the cooling) . Criteria for the judgment are as described below. When the substance or the aggregate thereof can be approximated as a spherical shape such as a sphere, a cube, or an amorphous shape, the substance or the aggregate thereof should have a diameter of 5 nm or more. In addition, when the substance or the aggregate thereof can be approximated as a cylindrical shape such as a rod-like shape, a thin-layer shape, or a rectangular parallelopiped shape, the length of its longest side should be 10 nm or more.

Upon dispersion of the substance in the polymer, when the substance or the aggregate thereof in the polymer can be approximated as a spherical shape such as a sphere, a cube, or an amorphous shape, and the substance or the aggregate thereof which is of a spherical shape has a diameter of 5 nm or more, the substance can be regarded as being incompatible with the polymer. In addition, when the substance or the aggregate thereof in the polymer can be approximated as a cylindrical shape such as a rod-like shape, a thin-layer shape, or a rectangular parallelopiped shape, and the length of the longest side of the substance or the aggregate thereof which is of a cylindrical shape is 10 nm or more, the substance can be regarded as being incompatible with the polymer.

A method of dispersing the layered inorganic compound (f) in the polymerizable composition ($\alpha$) is, for example, a method involving mixing the polymerizable monomer (**m**), the layered inorganic compound **(f)** , and as required, any other component (such as a polymerization initiator), and uniformly dispersing the contents by means of ultrasonic dispersion or the like.

The content of the layered inorganic compound (**f**) in the polymerizable composition ($\alpha$) is preferably 1 to 300 parts by weight, more preferably 3 to 200 parts by weight, still more preferably 5 to 100 parts by weight with respect to 100 parts by weight of the polymerizable monomer (**m**). When the content of the layered inorganic compound (**f**) exceeds 300 parts by weight with respect to 100 parts by weight of the polymerizable monomer (**m**), it may become difficult to produce the flame-retardant polymer member or a problem in that the strength of the flame-retardant polymer member after the production reduces may arise. When the content of the layered inorganic compound (**f**) is less than 1 part by weight with respect to 100 parts by weight of the polymerizable monomer (**m**), it may become hard to obtain the unevenly distributed polymerizable composition layer (**a1**) or the unevenly distributed polymer layer (**a2**) after the laminate has been obtained in the laminating step (**1**), or the unevenly distributed polymer layer (**a2**) may not have any flame retardancy.

Any appropriate content can be adopted as the content of the layered inorganic compound (**f**) in the polymerizable composition (α) depending on, for example, the kind of the layered inorganic compound (**f**). For example, when particles are used as the layered inorganic compound (**f**), the content of the layered inorganic compound (**f**) is preferably 0.001 to 70 parts by weight, more preferably 0.01 to 60 parts by weight, still more preferably 0.1 to 50 parts by weight with respect to 100 parts by weight of the polymerizable monomer (**m**). When the content of the layered inorganic compound (**f**) as particles is less than 0.001 part by weight with respect to the polymerizable monomer (**m**), it may become difficult to provide the entirety of the surface to be utilized of a surface uneven sheet with an uneven structure in an average manner. When the content of the layered inorganic compound (**f**) as particles exceeds 70 parts by weight with respect to the polymerizable monomer (**m**), the particles may drop during the production of the surface uneven sheet or a problem in that the strength of the surface uneven sheet reduces may arise.

The polymerizable composition (α) is preferably provided with a moderate viscosity suitable for an application operation because the composition is typically formed into a sheet shape by, for example, being applied onto a base material. The viscosity of the polymerizable composition (α) can be adjusted by, for example, compounding any one of the various polymers such as an acrylic rubber and a thickening additive, or polymerizing part of the polymerizable monomer (**m**) in the polymerizable composition (α) through photoirradiation, heating, or the like. It should be noted that a desired viscosity is as described below. A viscosity set with a BH viscometer under the conditions of a rotor of a No. 5 rotor, a rotational frequency of 10 rpm, and a measurement temperature of 30°C is preferably 5 to 50 Pa·s, more preferably 10 to 40 Pa·s. When the viscosity is less than 5 Pa·s, the liquid may flow when applied onto the base material. When the viscosity exceeds 50 Pa·s, the viscosity is so high that it may become difficult to apply the liquid.

(2-1-1-2. Polymerizable composition layer (**a**))

The polymerizable composition layer (**a**) is a layer formed of the polymerizable composition (α).

The polymerizable composition layer (**a**) is obtained by, for example, applying the polymerizable composition (α) onto a base material such as a PET film to form the composition into a sheet shape.

For the application of the polymerizable composition (α), any appropriate coater may be used, for example. Examples of such coater include a comma roll coater, a die roll coater, a gravure roll coater, a reverse roll coater, a kiss roll coater, a dip roll coater, a bar coater, a knife coater, and a spray coater.

The thickness of the polymerizable composition layer (**a**) is, for example, preferably 3 to 3,000 μm, more preferably 10 to 1, 000 μm, still more preferably 20 to 500 μm. When the thickness of the polymerizable composition layer (**a**) is less than 3 μm, it may be unable to perform uniform application or the unevenly distributed polymer layer (**a2**) may not have any flame retardancy. On the other hand, when the thickness of the polymerizable composition layer (**a**) exceeds 3,000 μm, there is a possibility that waviness occurs in the flame-retardant polymer member and hence a smooth flame-retardant polymer member is not obtained.

(2-1-1-3. Monomer-absorbing layer (**b**))

The monomer-absorbing layer (**b**) is a layer capable of absorbing part of the polymerizable monomer (**m**) from the polymerizable composition layer (**a**). It is preferred that the monomer-absorbing layer (**b**) have a high affinity for the polymerizable monomer (**m**) and be capable of absorbing the polymerizable monomer (**m**) at a high rate. It should be noted that a surface provided by the monomer-absorbing layer (**b**) is referred to as "monomer-absorbing surface."

The absorption of the polymerizable monomer (**m**) in the monomer-absorbing layer (**b**) occurs at the time point when a laminate having a structure "polymerizable composition layer (**a**) /monomer-absorbing layer (**b**) " is formed by the laminating step (**1**). The absorption of the polymerizable monomer (**m**) in the monomer-absorbing layer (**b**) occurs more effectively when the heating step is performed. It should be noted that the time point when the absorption of the polymerizable monomer (**m**) in the monomer-absorbing layer (**b**) occurs is not limited to any stage prior to the polymerizing step (**2**) and the absorption may occur at the stage of the polymerizing step (**2**).

The monomer-absorbing layer (**b**) can be such a sheet-shaped structure that the monomer-absorbing surface of the monomer-absorbing layer (**b**) can be in contact with the polymerizable composition layer (**a**) (hereinafter, referred to as "monomer-absorbable sheet").

Examples of the monomer-absorbable sheet include a monomer-absorbable sheet constituted only of the monomer-absorbing layer (**b**) (hereinafter, referred to as "base material-less monomer-absorbable sheet") and a monomer-absorbable sheet obtained by providing the monomer-absorbing layer (**b**) on a base material (hereinafter, referred to as "monomer-absorbable sheet with a base material"). It should be noted that when the monomer-absorbable sheet is a base material-less monomer-absorbable sheet, each surface of the sheet may be used as a monomer-absorbing surface. In addition, when the monomer-absorbable sheet is a monomer-absorbable sheet with a base material, the surface on the side of the monomer-absorbing layer (**b**) serves as a monomer-absorbing surface.

The monomer-absorbing layer (**b**) contains the polymer (**p**) . The content of the polymer (**p**) in the monomer-absorbing layer (**b**) is preferably 80 wt% or more, more preferably 90 wt% or more, still more preferably 95 wt% or more, particularly preferably 98 wt% or more, most preferably substantially 100 wt%. The number of kinds of the polymers (**p**) in the monomer-absorbing layer (b) may be only one, or may be two or more.

The description of the polymerizable monomer in the section <1-1. polymer layer (**B**) > can be cited as specific description of a monomer component to be used for obtaining the polymer (**p**).

At least one of the monomer components to be used for obtaining the polymer (**p**) is preferably common to at least one of the polymerizable monomers (**m**) in the polymerizable composition ($\alpha$).

The polymer (**p**) is preferably an acrylic resin obtained by polymerizing a monomer component containing an acrylic monomer.

The structure of the polymer (**p**) maybe an uncross-linked structure. With such structure, the flame-retardant polymer member of the present invention can express excellent curl resistance.

The polymer (**p**) can be obtained by any appropriate polymerization method as long as the monomer component to be used for obtaining the polymer (**p**) can be polymerized by the method. The description of a polymerization method in a section (2-1-3. polymerizing step (**2**)) to be described later can be cited as specific description of a preferred polymerization method.

The polymer (**p**) may be a polymer obtained by polymerizing a polymerizable composition having the same composition as that of the polymerizable composition ($\alpha$) except that the layered inorganic compound (**f**) is removed from the polymerizable composition ($\alpha$).

The monomer-absorbing layer (**b**) may contain any appropriate additive. The description in the section <1-5. additive> can be cited as specific description of such additive.

The monomer-absorbing layer (**b**) may contain a flame retardant as in the polymer layer (**B**).

The monomer-absorbing layer (**b**) can contain inorganic particles. Any appropriate inorganic particle can be adopted as the inorganic particles as long as an effect of the present invention is not impaired. Examples of such inorganic particles include silica, silicone, calcium carbonate, clay, titanium oxide, talc, a layered silicate, a clay mineral, metal powder, glass, glass beads, a glass balloon, an alumina balloon, a ceramic balloon, titanium white, and carbon black.

The number of kinds of the inorganic particles in the monomer-absorbing layer (**b**) may be only one, or may be two or more.

The content of the inorganic particles in the monomer-absorbing layer (**b**) is preferably 0.001 to 1, 000 wt%, more preferably 0.01 to 800 wt%, still more preferably 0.1 to 500 wt%, particularly preferably 1 to 300 wt%. When the content of the inorganic particles in the monomer-absorbing layer (**b**) falls within the range, the flame-retardant polymer member of the present invention can express high degrees of low-heat-generating property and low-smoking property.

The monomer-absorbing layer (**b1**) in the laminate (**X**) preferably shows a weight 1.1 or more times as large as the weight of the monomer-absorbing layer (**b**) to be used in the laminating step (**1**) as a result of the absorption of the polymerizable monomer (**m**) in the polymerizable composition layer (**a**) by the monomer-absorbing layer (**b**). When the weight increase ratio as a result of the absorption of the polymerizable monomer (**m**) by the monomer-absorbing layer (**b**) becomes 1.1 or more, the layered inorganic compound (**f**) can be unevenly distributed in an effective manner. The weight increase ratio is more preferably 2 or more, still more preferably 3 or more, particularly preferably 4 or more. The weight increase ratio is preferably 50 or less in terms of the maintenance of the smoothness of the monomer-absorbing layer (**b**).

The weight increase ratio can be calculated as described below. After a lapse of the same time period as the time period from the immersion of the monomer-absorbing layer (b) in the polymerizable monomer (m) through the lamination of the polymerizable composition layer (a) on the monomer-absorbing layer (b) to the performance of the polymerizing step (2), and at the same temperature as the temperature at which the foregoing process is performed, the weight of the monomer-absorbing layer (b) is measured and then the ratio is calculated as a ratio of the weight after the absorption of the polymerizable monomer (m) to the weight before the absorption of the polymerizable monomer (m).

The volume of the monomer-absorbing layer (**b**) after the absorption of the polymerizable monomer (**m**) may be constant as compared with that before the absorption, or may change as compared with that before the absorption.

Any appropriate value can be adopted as the gel fraction of the monomer-absorbing layer (**b**). The flame-retardant polymer member of the present invention can be obtained irrespective of whether cross-linking has progressed to attain a gel fraction of about 98 wt% in the monomer-absorbing layer (*b*) or nearly no cross-linking has occurred in the layer (e.g., the gel fraction is 10 wt% or less).

Sufficient heat resistance and sufficient solvent resistance can be imparted to the polymer layer (**B**) in the low-outgas property, flame-retardant polymer member to be obtained by providing the monomer-absorbing layer (**b**) with a high degree of cross-linking (such as a gel fraction of 90 wt% or more). Sufficient flexibility and sufficient stress-relaxing property can be imparted to the polymer layer (**B**) in the flame-retardant polymer member to be obtained by providing the monomer-absorbing layer (**b**) with a low degree of cross-linking (such as a gel fraction of 10 wt% or less).

The gel fraction can be calculated from, for example, a weight change amount when a measuring object is wrapped with a TEMISH (manufactured by, for example, Nitto Denko Corporation) as a mesh made of tetrafluoroethylene, the wrapped product is immersed in ethyl acetate for 1 week, and then the measuring object is dried.

In order that the flame-retardant polymer member of the present invention may express excellent curl resistance, the gel fraction of the polymer (**p**) is preferably 10 wt% or less, more preferably 8 wt% or less, still more preferably 5 wt% or less, particularly preferably 3 wt% or less. A lower limit for the gel fraction of the polymer (**p**) is preferably 0 wt%.

Sufficient flexibility and sufficient stress-relaxing property can be imparted to the polymer layer (**B**) in the flame-retardant polymer member to be obtained by providing the polymer (**p**) with a low degree of cross-linking (such as a gel fraction of 10 wt% or less). Thus, the member can express excellent curl resistance.

The flame-retardant polymer member of the present invention can be obtained irrespective of whether the monomer-absorbing layer (**b**) is a hard layer or a soft layer. When a hard layer (such as a layer having a 100% modulus of 100 N/cm$^2$ or more) is used as the monomer-absorbing layer (**b**), the monomer-absorbing layer (**b**) can be used as a support (base material). When a soft layer (such as a layer having a 100% modulus of 30 N/cm$^2$ or less) is used as the monomer-absorbing layer (**b**), the monomer-absorbing layer (**b**) can be used as a pressure-sensitive adhesive layer.

Any appropriate thickness canbe adopted as the thickness of the monomer-absorbing layer (**b**) before the absorption of the polymerizable monomer (**m**). The thickness of the monomer-absorbing layer (b) before the absorption of the polymerizable monomer (**m**) is, for example, preferably 1 to 3,000 $\mu$m, more preferably 2 to 2,000 $\mu$m, still more preferably 5 to 1,000 $\mu$m. When the thickness of the monomer-absorbing layer (**b**) before the absorption of the polymerizable monomer (**m**) is less than 1 $\mu$m, the monomer-absorbing layer (**b**) may deform in the case where the layer has absorbed a large amount of the polymerizable monomer (**m**), or the absorption of the polymerizable monomer (**m**) may not be sufficiently performed. When the thickness of the monomer-absorbing layer (**b**) before the absorption of the polymerizable monomer (**m**) exceeds 3,000 $\mu$m, there is a possibility that the flame-retardant polymermember to be finally obtained is hard to wind in a sheet shape and is hence poor in handleability.

The monomer-absorbing layer (**b**) may be a single layer, or may be a laminate of two or more layers.

The monomer-absorbing layer (**b**) can be produced by applying a composition as a material for forming the monomer-absorbing layer (**b**) (hereinafter, referred to as "monomer-absorbing layer (**b**)-forming composition") onto a predetermined surface of any appropriate support such as a release-treated surface of a base material or cover film to be described later with any appropriate coater or the like. The monomer-absorbing layer (**b**)-forming composition applied onto the support is subjected to drying and/or curing (such as curing with light) as required.

The viscosity of the monomer-absorbing layer (**b**)-forming composition may be adjusted so as to be suitable for the application by any appropriate method.

Examples of the base material used when the monomer-absorbing layer (**b**) is a monomer-absorbable sheet with a base material (base material for a monomer-absorbable sheet) include: a paper-based base material such as paper; a fiber-based base material such as cloth, non-woven fabric, or net; a metal-based base material such as a metal foil or a metal plate; a plastic-based base material such as a plastic film or sheet; a rubber-based base material such as a rubber sheet; a foam body such as a foamed sheet; and a laminate thereof (such as a laminate of a plastic-based base material and other base material or a laminate of plastic films (or sheets)). Such base material is preferably a plastic-based material such as a plastic film or sheet. Examples of such plastic include: an olefin-based resin containing $\alpha$-olefin as a monomer component such as a polyethylene (PE), a polypropylene (PP), an ethylene-propylene copolymer, or an ethylene-vinyl acetate copolymer (EVA); a polyester-based resin such as a polyethylene terephthalate (PET), a polyethylene naphthalate (PEN), or a polybutylene terephthalate (PBT); a polyvinyl chloride (PVC); a vinyl acetate-based resin; a polyphenylene sulfide (PPS); an amide-based resin such as a polyamide (nylon) or an all-aromatic polyamide (aramid); a polyimide-based resin; and a polyether ether ketone (PEEK). The number of kinds of plastics may be only one, or may be two or more.

When the monomer-absorbing layer (b) is curable with an active energy ray, the base material for a monomer-absorbable sheet is preferably a sheet that does not inhibit the transmission of the active energy ray.

The surface of the base material for a monomer-absorbable sheet is preferably subjected to any appropriate surface treatment for improving its adhesiveness with the monomer-absorbing layer (**b**). Examples of such surface treatment include: an oxidation treatment by a chemical or physical method such as a corona treatment, a chromic acid treatment, ozone exposure, flame exposure, high-voltage electric shock exposure, or an ionizing radiation treatment; and a coating treatment with an undercoating agent, a releasing agent, or the like.

Any appropriate thickness can be adopted as the thickness of the base material for a monomer-absorbable sheet depending on, for example, its strength, flexibility, and intended use. The thickness of the base material for a monomer-absorbable sheet is, for example, preferably 400 $\mu$m or less, more preferably 1 to 350 $\mu$m, still more preferably

10 to 300 $\mu$m.

The base material for a monomer-absorbable sheet may be a single layer, or may be a laminate of two or more layers.

(2-1-1-4. Laminate (**X**))

The laminate (**X**) is obtained by laminating the polymerizable composition layer (**a**) and the monomer-absorbing layer (**b**). Amethod of obtaining the laminate (**X**) is, for example, a method involving applying the polymerizable composition ($\alpha$) to the monomer-absorbing surface of the monomer-absorbing layer (**b**) to form the polymerizable composition layer (**a**), or a method involving applying the polymerizable composition ($\alpha$) onto any appropriate support to form the syrupy polymerizable composition layer (**a**) and then transferring the polymerizable composition layer (**a**) onto the monomer-absorbing layer (**b**).

The ratio of the thickness of the polymerizable composition layer (**a**) to the thickness of the monomer-absorbing layer (**b**) is preferably 300% or less, more preferably 200% or less, still more preferably 100% or less. When the ratio of the thickness of the polymerizable composition layer (**a**) to the thickness of the monomer-absorbing layer (**b**) exceeds 300%, it may become difficult to produce the flame-retardant polymer member or a problem in that the strength of the flame-retardant polymer member after the production reduces may arise. As the ratio of the thickness of the polymerizable composition layer (**a**) to the thickness of the monomer-absorbing layer (**b**) reduces, the ease with which the layered inorganic compound (**f**) is unevenly distributed is improved, and hence the layered inorganic compound (**f**) can be unevenly distributed in the unevenly distributed polymerizable composition layer (**a1**) at a higher density. It should be noted that the ratio of the thickness of the polymerizable composition layer (**a**) to the thickness of the monomer-absorbing layer (**b**) is preferably set to 1% or more because the layer can be uniformly produced.

(2-1-1-5. Cover film)

Upon production of the laminate (**X**), a cover film can be used as the support of the polymerizable composition layer (**a**). The cover film may have peelability. It should be noted that when a photopolymerization reaction is used in the polymerizing step (**2**), oxygen in the air is preferably blocked with the cover film in the polymerizing step (2) because the reaction is inhibited by oxygen in the air.

As the cover film, any appropriate cover film may be adopted as long as the cover film is a thin sheet which has low oxygen permeation. When a photopolymerization reaction is used, a preferred cover film is a transparent film such as any appropriate release paper. Specific examples of the cover film include a base material having a layer release-treated (peel-treated) with a release treatment agent (a peel treatment agent) on at least one of its surfaces, a low adhesive base material formed of a fluorine-based polymer (such as a polytetrafluoroethylene, a polychlorotrifluoroethylene, a polyvinyl fluoride, a polyvinylidene fluoride, a copolymer of tetrafluoroethylene and hexafluoropropylene, or a copolymer of chlorofuluoroethylene and vinylidene fluoride), and a low adhesive base material formed of a non-polar polymer (e. g. an olefin-based resin such as a polyethylene or a polypropylene). The release-treated surface of the base material having a release-treated layer on at least one of its surfaces may be used as a release surface. Each of both surfaces of the low adhesive base material may be used as a release surface.

Examples of the base material that can be used in the base material having a release-treated layer on at least one of its surfaces include: a plastic-based base material film such as a polyester film (such as a polyethylene terephthalate film), an olefin-based resin film (such as a polyethylene film or a polypropylene film), a polyvinyl chloride film, a polyimide film, a polyamide film (nylon film), and a rayon film; papers (such as woodfree paper, Japanese paper, kraft paper, glassine paper, synthetic paper, and top coated paper) ; and a multi-layered laminate obtained by lamination or co-extrusion thereof (laminate of 2 to 3 layers). As such base material, a plastic-based base material film having high transparency is preferred, and a polyethylene terephthalate film is particularly preferred.

A release treatment agent that can be used in the base material having a release-treated layer on at least one of its surfaces is, for example, a silicone-based release treatment agent, a fluorine-based release treatment agent, or a long-chain alkyl-based release treatment agent. Only one kind of the release treatment agents may be used, or two or more kinds thereof may be used.

Any appropriate thickness can be adopted as the thickness of the cover film. The thickness of the cover film is, for example, preferably 12 to 250 $\mu$m, more preferably 20 to 200 $\mu$m in terms of handleability and economical efficiency.

The cover film may be a single layer, or may be a laminate of two or more layers.

(2-1-2. Heating step)

In the production method (1), the laminate (**X**) obtained by laminating the polymerizable composition layer (**a**) and the monomer-absorbing layer (**b**) can be subjected to a heating step before being subjected to the polymerizing step (**2**). As a result of the heating step, the layered inorganic compound (**f**) can be unevenly distributed in the unevenly distributed polymerizable composition layer (**a1**) at an additionally high density, and hence such a flame-retardant polymer member that the distribution of the layered inorganic compound (**f**) in the unevenly distributed polymer layer (**a2**) is made additionally dense can be obtained.

The heating temperature is preferably 25°C or more and 100°C or less, more preferably 30°C or more and 90°C or less, still more preferably 40°C or more and 80°C or less, particularlypreferably 50°C or more and 80°C or less. The time for the heating step is preferably 1 second or more and 120 minutes or less, more preferably 10 seconds or more and 60 minutes or less, still more preferably 1 minute or more and 30 minutes or less. In particular, a flame-retardant polymer member having a higher density can be obtained as the temperature increases in the heating temperature range or as the time for the heating step lengthens in the range of the time for the heating step. When the heating temperature is less than 25°C, the polymerizable monomer (**m**) may not be sufficiently absorbed by the monomer-absorbing layer (**b**). When the heating temperature exceeds 100°C, the polymerizable monomer (**m**) may volatilize or the cover filmmay deform. When the time for the heating step is less than 1 second, it may become difficult to perform the step. When the time for the heating step exceeds 120 minutes, there is a possibility that waviness occurs in the flame-retardant polymer member and hence a smooth flame-retardant polymer member is not obtained.

The polymerizable composition layer (**a**) and the monomer-absorbing layer (**b**) may be exposed to the temperature condition before the laminating step (**1**). The polymerizable composition (α) may also be exposed to the temperature condition.

Any appropriate heating method can be adopted as a method of heating the laminate (**X**) in the heating step. Examples of the method of heating the laminate (**X**) in the heating step include a heating method involving using an oven, a heating method involving using an electrothermal heater, and a heating method involving using an electromagnetic wave such as an infrared ray.

When the laminating step (**1**), and as required, the heating step are performed, in the laminate (**X**), the layered inorganic compound (**f**) moves in the polymerizable composition layer (**a**), and hence the unevenly distributed polymerizable composition layer (**a1**) is obtained, in which the amount of the layered inorganic compound (**f**) present at an interface between the polymerizable composition layer (**a**) and the monomer-absorbing layer (**b**) immediately after the lamination is substantially zero, and the layered inorganic compound (**f**) is unevenly distributed toward the side opposite to the monomer-absorbing layer (**b**). Meanwhile, the monomer-absorbing layer (**b**) absorbs the polymerizable monomer (**m**) and hence the monomer-absorbing layer (**b1**) is obtained.

(2-1-3. Polymerizing step (**2**))

The laminate (**Y**) of the unevenly distributed polymer layer (**a2**) and the cured monomer-absorbing layer (**b2**) is obtained by performing the polymerizing step (**2**) of polymerizing the polymerizable monomer (**m**) in the unevenly distributed polymerizable composition layer (**a1**) and the polymerizable monomer (**m**) in the monomer-absorbing layer (**b1**).

The polymerizing step (**2**) can be performed by, for example, photoirradiation. Any appropriate condition can be adopted as a condition such as a light source, irradiation energy, an irradiation method, or an irradiation time.

An active energy ray to be used in the photoirradiation is, for example, an ionizing radiation such as an α-ray, a β-ray, a γ-ray, a neutron beam, or an electron beam, or UV light. Of those, UV light is preferred.

Irradiation with the active energy ray is performed by using, for example, a black-light lamp, a chemical lamp, a high-pressure mercury lamp, or a metal halide lamp.

Heating may be performed in the polymerizing step (**2**). Any appropriate heating method can be adopted as a heating method. Examples of the heating method include a heating method involving using an electrothermal heater and a heating method involving using an electromagnetic wave such as an infrared ray.

The thickness of the unevenly distributed portion (**a21**) of the layered inorganic compound (f) in the unevenly distributed polymer layer (**a2**) in the laminate (**Y**) is preferably 80% or less, more preferably 60% or less, still more preferably 50% or less with respect to the thickness of the polymerizable composition layer (**a**) (before the lamination). When the ratio of the thickness of the unevenly distributed portion (**a21**) of the layered inorganic compound (**f**) to the thickness of the polymerizable composition layer (**a**) (before the lamination) exceeds 80%, adhesiveness between the unevenly distributed polymer layer (**a2**) and the cured monomer-absorbing layer (**b2**) may be problematic, or the strength of the unevenly distributed polymer layer (**a2**) may be problematic.

The thickness of the unevenly distributed portion (**a21**) of the layered inorganic compound (**f**) can be controlled by adjusting the amount of the layered inorganic compound (**f**).

The unevenly distributed portion (**a21**) of the layered inorganic compound (**f**) and the non-unevenly distributed portion (**a22**) of the layered inorganic compound (**f**) can be clearly distinguished from each other because the unevenly distributed portion (**a21**) of the layered inorganic compound (**f**) has a layer shape.

A trace amount of the layered inorganic compound (**f**) may be dispersed in the non-unevenly distributed portion (**a22**) depending on a combination of the monomer-absorbing layer (**b**) and the polymerizable monomer (**m**). However, the layered inorganic compound (**f**) dispersed in a trace amount in the non-unevenly distributed portion (**a22**) does not affect any characteristic of the low-outgas property, flame-retardant polymer member.

The unevenly distributed portion (**a21**) of the layered inorganic compound (**f**) corresponds to the flame-retardant layer (**A**).

In the unevenly distributed portion (**a21**) of the layered inorganic compound (**f**), the layered inorganic compound (**f**) and a polymer component of the unevenly distributed polymer layer (**a2**) are mixed. Accordingly, the unevenly distributed portion (**a21**) of the layered inorganic compound (**f**) can exert a characteristic based on the polymer component of the unevenly distributed polymer layer (**a2**), a characteristic of the layered inorganic compound (**f**), and a characteristic based on the uneven distribution of the layered inorganic compound (**f**) in the unevenly distributed polymer layer (**a2**).

Examples of the characteristic based on the polymer component of the unevenly distributed polymer layer (**a2**) include flexibility, hard-coat property, pressure-sensitive adhesive property, stress-relaxing property, and impact resistance. The pressure-sensitive adhesive property is, for example, pressure-sensitive adhesive property upon use of a pressure-sensitive adhesive component as the polymer component.

The characteristic of the layered inorganic compound (f) is, for example, a specific function (such as expansivity, shrink property, absorbability, divergence, or electrical conductivity) upon use of the layered inorganic compound (**f**) having the specific function.

Examples of the characteristic based on the uneven distribution of the layered inorganic compound (**f**) in the unevenly distributed polymer layer (**a2**) include: the control of pressure-sensitive adhesive property by the adjustment of the content of the layered inorganic compound upon use of a pressure-sensitive adhesive component as the polymer component; design such as coloring; and the provision of surface unevenness upon use of particles as the layered inorganic compound (**f**) and a characteristic based on the surface unevenness (such as re-peelability, anti-blocking property, an antiglare characteristic, design, and light-scattering property).

When the polymer component of the unevenly distributed polymer layer (**a2**) is a pressure-sensitive adhesive component and the layered inorganic compound (**f**) is particulate, unevenness is formed on the surface of the unevenly distributed polymer layer (**a2**) by the particulate, layered inorganic compound (**f**), and hence a flame-retardant polymer member capable of exerting pressure-sensitive adhesive property (tackiness) and releasability (anti-blocking property) on the surface of the unevenly distributed polymer layer (**a2**) can be obtained. In such flame-retardant polymer member, the pressure-sensitive adhesive property (tackiness) and releasability (anti-blocking property) of the surface of the unevenly distributed polymer layer (**a2**) can be controlled by adjusting the amount of the particulate, layered inorganic compound (**f**) to be incorporated.

The particulate, layered inorganic compound (f) in the unevenly distributed portion (**a21**) may exist in such a manner that the entirety of the particulate, layered inorganic compound (**f**) is included in the unevenly distributed portion (**a21**), or may exist in such a manner that part of the particulate, layered inorganic compound (**f**) is exposed to the outside of the unevenly distributed polymer layer (**a2**).

(2-1-4. Drying step (**3**))

The production method (1) preferably includes the drying step (**3**). The drying step (**3**) can be performed after the polymerizing step (**2**). Any appropriate drying method can be adopted as a drying method in the drying step (**3**).

A drying temperature in the drying step (**3**) is preferably 50 to 200°C, more preferably 70 to 180°C, still more preferably 80 to 160°C, particularly preferably 90 to 140°C. An outgas-reducing effect can be additionally expressed by setting the drying temperature in the drying step (**3**) in the range. A drying time in the drying step (**3**) is preferably 1 minute to 3 hours, more preferably 1.5 minutes to 2 hours, still more preferably 2 minutes to 1 hour, particularly preferably 3 minutes to 30 minutes. The outgas-reducing effect can be additionally expressed by setting the drying time in the drying step (**3**) in the range.

<2-2. Flame-retardant polymer member production method (2)>

In addition to the production method (1), the production method (2) is preferably adopted as the method of producing the flame-retardant polymer member of the present invention. In the production method (2), the flame-retardant polymer member of the present invention is produced by laminating a solid layered inorganic compound-containing polymer layer (**a**$_p$), which is obtained by polymerizing a polymerizable composition layer (**a**) formed of a polymerizable composition ($\alpha$) containing a polymerizable monomer (**m**) and the layered inorganic compound (**f**), and a solid monomer-absorbing layer (**b**) containing a polymer (**p**) and capable of absorbing the polymerizable monomer (**m**). At this time, a flavoring agent may be incorporated into at least one of the layered inorganic compound-containing polymer layer (**a**$_p$) and the monomer-absorbing layer (**b**). When the flavoring agent is incorporated into at least one of the layered inorganic compound-containing polymer layer (**a**$_p$) and the monomer-absorbing layer (**b**), the flavoring agent is finally incorporated into at least one of the flame-retardant layer (**A**) and the polymer layer (**B**). In addition, a weathering agent may be incorporated into at least one of the layered inorganic compound-containing polymer layer (**a$_p$**) and the monomer-absorbing layer (**b**). When the weathering agent is incorporated into at least one of the layered inorganic compound-containing polymer layer (**a$_p$**) and the monomer-absorbing layer (**b**), the weathering agent is finally incorporated into at least one of the flame-retardant layer (**A**) and the polymer layer (**B**). In addition, a heat-resistant resin may be incorporated into at least one of the layered inorganic compound-containing polymer layer (**a$_p$**) and the monomer-absorbing layer (**b**). When the heat-resistant resin is incorporated into at least one of the layered inorganic compound-containing polymer layer (**a$_p$**) and the monomer-absorbing layer (**b**), the heat-resistant resin is finally incorporated into at least one of the flame-retardant layer (A) and the polymer layer (**B**). In addition, inorganic particles may be incorporated into the monomer-absorbing layer (**b**). When the inorganic particles are incorporated into the monomer-absorbing layer (**b**), the inorganic particles are finally incorporated into the polymer layer (**B**).

In the production method (2), the structure of the polymer (p) may be an uncross-linked structure. In this case, the flame-retardant polymer member of the present invention can express excellent curl resistance. In the production method (2), the structure of the polymer in the polymer layer (**B**) can be an uncross-linked structure or a semi-interpenetrating polymer network structure resulting from the structure (uncross-linked structure) of the polymer (**p**) and the kind of monomer to be absorbed (a monofunctional monomer or a polyfunctional monomer).

The solid layered inorganic compound-containing polymer layer (**a$_p$**) can be obtained by: producing the polymerizable composition layer (**a**) by the same method as the method described in the production method (1) ; and then performing the polymerization of the polymerizable composition layer (**a**) by the same method as that in the polymerizing step (**2**) described in the production method (1). Although the solid layered inorganic compound-containing polymer layer (**a$_p$**) contains a polymer component formed by the polymerization of the polymerizable monomer (**m**), the polymerizable monomer (**m**) that has not been polymerized may remain in the layer.

The solid monomer-absorbing layer (**b**) can be obtained by the same method as the method described in the production method (1).

In order that the flame-retardant polymer member of the present invention may express excellent curl resistance, the gel fraction of the polymer (**p**) is preferably 10 wt% or less, more preferably 8 wt% or less, still more preferably 5 wt% or less, particularly preferably 3 wt% or less. A lower limit for the gel fraction of the polymer (**p**) is preferably 0 wt%.

Sufficient flexibility and sufficient stress-relaxing property can be imparted to the polymer layer (**B**) in the flame-retardant polymer member to be obtained by providing the polymer (**p**) with a low degree of cross-linking (such as a gel fraction of 10 wt% or less). Thus, the member can express excellent curl resistance.

The lamination of the solid layered inorganic compound-containing polymer layer (**a$_p$**) and the solid monomer-absorbing layer (**b**) can be performed by any appropriate lamination method. A method for the lamination of the solid layered inorganic compound-containing polymer layer (**a$_p$**) and the solid monomer-absorbing layer (**b**) is, for example, a method involving producing the solid layered inorganic compound-containing polymer layer (**a$_p$**) on any appropriate base material, separately preparing the monomer-absorbing layer (**b**) to be provided as a monomer-absorbable sheet, and laminating the layers.

A drying step is, for example, the same step as the step described in the section (2-1-4. drying step (**3**)).

In the production method (2), the polymerizable monomer (**m**) may contain a polyfunctional monomer. When the polymerizable monomer (**m**) contains the polyfunctional monomer, the flame-retardant polymer member of the present invention can express excellent cigarette resistance.

When the polymerizable monomer (**m**) contains the polyfunctional monomer, the content of the polyfunctional monomer in the polymerizable monomer (**m**) is preferably 10 to 100 wt%, more preferably 30 to 100 wt%, still more preferably 50 to 100 wt%, particularly preferably 70 to 100 wt%, most preferably 90 to 100 wt%. As long as the content of the polyfunctional monomer in the polymerizable monomer (**m**) falls within the range, the flame-retardant polymer member of the present invention can express additionally excellent cigarette resistance.

A flavoring agent may be incorporated into the polymerizable composition ($\alpha$). When the flavoring agent is incorporated into the polymerizable composition ($\alpha$), its content is preferably $1.0\times10^{-5}$ to $1.0\times10^{-1}$ wt%, more preferably $1.0\times10^{-4}$ to $1.0\times10^{-2}$ wt% with respect to the entirety of the polymerizable monomer (**m**). When the polymerizable composition ($\alpha$) contains the flavoring agent, the flame-retardant polymer member of the present invention can express extremely excellent odor-alleviating property as long as the content falls within the range. When the content of the flavoring agent in the polymerizable composition ($\alpha$) is excessively small, it may be unable to sufficiently alleviate the odor of the member. When the content of the flavoring agent in the polymerizable composition ($\alpha$) is excessively large, the flavor of the flavoring agent may be felt unpleasant.

A weathering agent may be incorporated into the polymerizable composition ($\alpha$). When the weathering agent is incorporated into the polymerizable composition ($\alpha$), its content is preferably 0.001 to 30 parts by weight, more preferably 0.01 to 20 parts by weight, still more preferably 0.1 to 10 parts by weight, particularly preferably 0. 3 to 5 parts by weight with respect to 100 parts by weight of the polymerizable monomer (**m**). When the polymerizable composition ($\alpha$) contains the weathering agent, the flame-retardant polymer member of the present invention can express extremely excellent weatherability as long as the content falls within the range.

A heat-resistant resin may be incorporated into the polymerizable composition ($\alpha$). When the heat-resistant resin is incorporated into the polymerizable composition ($\alpha$), its content is preferably 5 wt% or more, more preferably 10 wt% or more, still more preferably 20 wt% or more, particularly preferably 30 wt% or more with respect to the weight of the entirety of the polymerizable monomer (m). An upper limit for the content of the heat-resistant resin in the polymerizable composition ($\alpha$) is not particularly limited and is preferably 100 wt% or less with respect to the weight of the entirety of the polymerizable monomer (m). When the polymerizable composition ($\alpha$) contains the heat-resistant resin, the heat-resistant, flame-retardant polymer member of the present invention can express extremely excellent heat resistance as long as the content falls within the range.

The monomer-absorbing layer (b) can contain inorganic particles. Any appropriate inorganic particle can be adopted as the inorganic particles as long as an effect of the present invention is not impaired. Examples of such inorganic particles include silica, silicone, calcium carbonate, clay, titanium oxide, talc, a layered silicate, a clay mineral, metal powder, glass, glass beads, a glass balloon, an alumina balloon, a ceramic balloon, titanium white, and carbon black.

The number of kinds of the inorganic particles in the monomer-absorbing layer (b) may be only one, or may be two or more.

The content of the inorganic particles in the monomer-absorbing layer (b) is preferably 0.001 to 1,000 wt%, more preferably 0.01 to 800 wt%, still more preferably 0.1 to 500 wt%, particularly preferably 1 to 300 wt%. When the content of the inorganic particles in the monomer-absorbing layer (b) falls within the range, the flame-retardant polymer member of the present invention can express high degrees of low-heat-generating property and low-smoking property.

<2-3. Flame-retardant polymer member production method (3)>

In addition to the production methods (1) and (2), the production method (3) is preferably adopted as the method of producing the flame-retardant polymer member of the present invention. In the production method (3), the flame-retardant polymer member of the present invention is produced by: laminating a syrupy polymerizable composition layer (a') formed of a polymerizable composition ($\alpha$) containing a polymerizable monomer (m1) and the layered inorganic compound (f), and a syrupy polymerizable composition layer (b') containing a polymerizable monomer (m2) and a polymer (p2); and performing polymerization. At this time, a flavoring agent may be incorporated into at least one of the polymerizable composition layer (a') and the polymerizable composition layer (b'). When the flavoring agent is incorporated into at least one of the polymerizable composition layer (a') and the polymerizable composition layer (b'), the flavoring agent is finally incorporated into at least one of the flame-retardant layer (A) and the polymer layer (B). In addition, a weathering agent may be incorporated into at least one of the polymerizable composition layer (a') and the polymerizable composition layer (b'). When the weathering agent is incorporated into at least one of the polymerizable composition layer (a') and the polymerizable composition layer (b'), the weathering agent is finally incorporated into at least one of the flame-retardant layer (A) and the polymer layer (B). In addition, a heat-resistant resin may be incorporated into at least one of the polymerizable composition layer (a') and the polymerizable composition layer (b'). When the heat-resistant resin is incorporated into at least one of the polymerizable composition layer (a') and the polymerizable composition layer (b'), the heat-resistant resin is finally incorporated into at least one of the flame-retardant layer (A) and the polymer layer (B). In addition, inorganic particles may be incorporated into the polymerizable composition layer (b'). When the inorganic particles are incorporated into the polymerizable composition layer (b'), the inorganic particles are finally incorporated into the polymer layer (B).

In the production method (3), the structure of the polymer (p2) may be an uncross-linked structure. In this case, the flame-retardant polymer member of the present invention can express excellent curl resistance. In the production method (3), the structure of the polymer in the polymer layer (B) can be an uncross-linked structure or a semi-interpenetrating polymer network structure resulting from the structure (uncross-linked structure) of the polymer (p2) and the kind of monomer to be absorbed (a monofunctional monomer or a polyfunctional monomer).

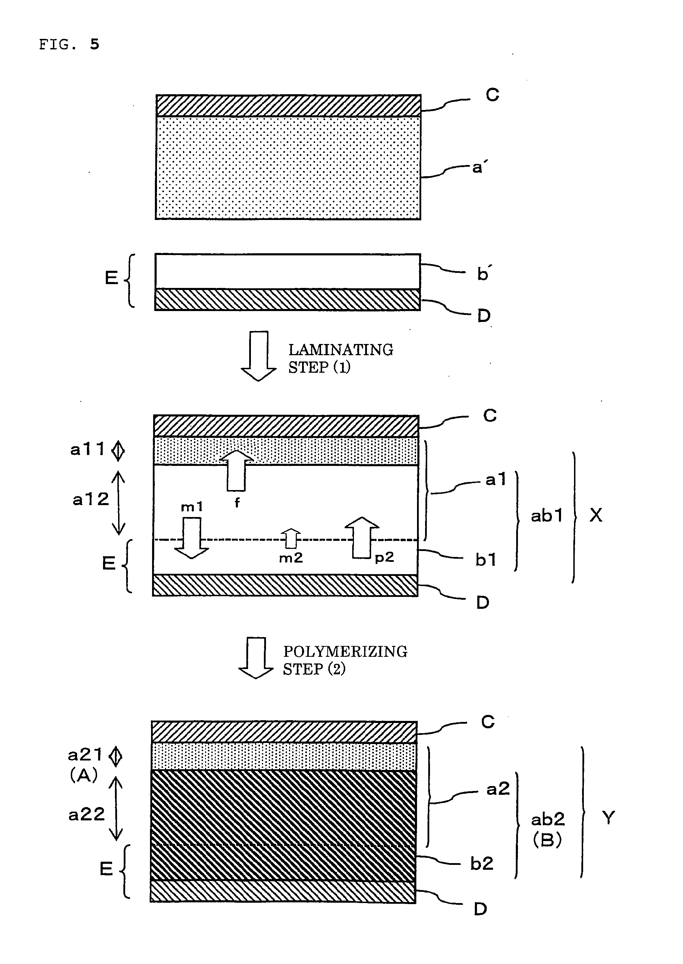

Hereinafter, "steps of laminating the syrupy polymerizable composition layer (a') formed of the polymerizable composition ($\alpha$) containing the polymerizable monomer (m1) and the layered inorganic compound (f), and the syrupy polymerizable composition layer (b') containing the polymerizable monomer (m2) and the polymer (p2), and performing polymerization" in the flame-retardant polymer member production method (3) are described with reference to FIGS. 5.

First, in a laminating step (1), a laminate (X) is obtained by laminating the polymerizable composition layer (a') and the polymerizable composition layer (b'). The polymerizable composition layer (a') contains the polymerizable monomer (m1) and the layered inorganic compound (f). The polymerizable composition layer (b') contains the polymerizable monomer (m2) and the polymer (p2). Although the polymerizable composition layer (a') can be laminated on at least one surface of the polymerizable composition layer (b'), FIGS. 5 illustrate the case where the layer is laminated only on one surface of the polymerizable composition layer (b'). In FIGS. 5, a cover film (C) is provided on the side of the polymerizable composition layer (a') not laminated on the polymerizable composition layer (b'). In addition, in FIGS. 5, the polymerizable composition layer (b') is provided on a base material film (D).

In order that the flame-retardant polymer member of the present invention may express excellent curl resistance, the gel fraction of the polymer (**p2**) is preferably 10 wt% or less, more preferably 8 wt% or less, still more preferably 5 wt% or less, particularly preferably 3 wt% or less. A lower limit for the gel fraction of the polymer (**p**) is preferably 0 wt%.

Sufficient flexibility and sufficient stress-relaxing property can be imparted to the polymer layer (**B**) in the flame-retardant polymer member to be obtained by providing the polymer (**p**) with a low degree of cross-linking (such as a gel fraction of 10 wt% or less). Thus, the member can express excellent curl resistance.

It is preferred that the polymerizable monomer (**m1**) in the polymerizable composition layer (**a'**), and the polymerizable monomer (**m2**) and the polymer (**p2**) in the polymerizable composition layer (**b'**) substantially show compatibility. In this case, in the laminate (**X**), part of the polymerizable monomer (**m1**) and part of the polymerizable monomer (**m2**) can each diffuse in the other layer interactively on the lamination surface of the polymerizable composition layer (**a'**) and the polymerizable composition layer (**b'**). Here, when a concentration (c1) of the polymerizable monomer (**m1**) in the polymerizable composition layer (**a'**) is higher than a concentration (c2) of the polymerizable monomer (**m2**) in the polymerizable composition layer (**b'**), the extent to which the polymerizable monomer (**m1**) diffuses in the polymerizable composition layer (**b'**) enlarges, and in accordance therewith, the extent to which the polymer (**p2**) in the polymerizable composition layer (**b'**) diffuses in the polymerizable composition layer (**a'**) enlarges. Meanwhile, in the polymerizable composition layer (**a'**), the layered inorganic compound (**f**) is unevenly distributed toward the side opposite to the polymerizable composition layer (**b'**). Thus, the unevenly distributed polymerizable composition layer (**a1**) having the unevenly distributed portion (**a11**) and non-unevenly distributed portion (**a12**) of the layered inorganic compound (**f**) is obtained.

The concentration (c1) of the polymerizable monomer (**m1**) in the polymerizable composition layer (**a'**) is preferably higher than the concentration (c2) of the polymerizable monomer (**m2**) in the polymerizable composition layer (**b'**). A concentration difference between the concentration (c1) and the concentration (c2) is preferably 15 wt% or more, more preferably 20 wt% or more, still more preferably 30 wt% or more. When the concentration difference between the concentration (c1) and the concentration (c2) is set to 15 wt% or more, the layered inorganic compound (f) in the polymerizable composition layer (**a'**) can be unevenly distributed in an effective manner. It should be noted that when the concentration (c2) is higher than the concentration (c1), there is a possibility that the layered inorganic compound (**f**) in the polymerizable composition layer (**a'**) cannot be unevenly distributed in a sufficient manner.

The phenomenon of the uneven distribution of the layered inorganic compound (**f**) in the unevenly distributed polymerizable composition layer (**a1**) is assumed to be caused by the diffusion of the polymer (**p2**) from the polymerizable composition layer (**b'**). The polymerizable monomer (**m1**) diffuses in the polymerizable composition layer (**b'**), and in the meantime, the polymer (**p2**) diffuses in the polymerizable composition layer (**a'**). Thus, the layered inorganic compound (**f**) that cannot diffuse toward the polymerizable composition layer (**b'**) may be unevenly distributed in such a manner as to remain in the polymerizable composition layer (**a'**). The polymerizable composition layer (**b'**) absorbs the polymerizable monomer (**m1**) to turn into the monomer-absorbing layer (**b1**).

Each component of the polymerizable composition layer (**a'**) and each component of the polymerizable composition layer (**b'**) diffuse interactively in the laminate (**X**). Accordingly, an interface between the non-unevenly distributed portion (**a12**) of the layered inorganic compound (**f**) in the unevenly distributed polymerizable composition layer (**a1**) and the monomer-absorbing layer (**b1**) cannot be observed (a composite site of these layers is represented as **ab1** in FIGS. **5**). In FIGS. **5**, the interface is indicated by a broken line for convenience.

Next, the polymerizable monomer (**m1**) and the polymerizable monomer (**m2**) in the unevenly distributed polymerizable composition layer (**a1**) and the monomer-absorbing layer (**b1**) are polymerized by subjecting the laminate (**X**) to the polymerizing step (**2**). Thus, the laminate (**Y**) in which the unevenly distributed polymer layer (**a2**), which has been cured while the unevenly distributed structure has been maintained, and the cured monomer-absorbing layer (**b2**) are laminated is obtained. The unevenly distributed polymer layer (**a2**) has the unevenly distributed portion (**a21**) of the layered inorganic compound (**f**) and the non-unevenly distributed portion (**a22**) of the layered inorganic compound (**f**). It should be noted that the monomer-absorbing layer (**b1**) is turned into the monomer-absorbing layer (**b2**), in which the polymerizable monomer (**m1**) and the polymerizable monomer (**m2**) have been cured, by the polymerizing step (**2**) because the polymerizable monomer (**m1**) and the polymerizable monomer (**m2**) are absorbed by the monomer-absorbing layer (**b1**). Although an interface between the non-unevenly distributed portion (**a22**) of the layered inorganic compound (f) in the unevenly distributed polymer layer (**a2**) and the cured monomer-absorbing layer (**b2**) cannot be observed in the laminate (**Y**) (a composite site of these layers is represented as **ab2** in FIGS. **5**), the interface is indicated by a broken line in FIGS. **5** for convenience.

Details about the laminating step (1) and details about the polymerizing step (**2**) are identical to those described in the production method (1). In addition, the heating step described in the production method (1) may be included.

A drying step is, for example, the same step as the step described in the section (2-1-4. drying step (**3**)).

In the production method (3), the polymerizable monomer (**m1**) may contain a polyfunctional monomer. When the polymerizable monomer (**m1**) contains the polyfunctional monomer, the flame-retardant polymer member of the present invention can express excellent cigarette resistance.

When the polymerizable monomer (**m1**) contains the polyfunctional monomer, the content of the polyfunctional monomer in the polymerizable monomer (**m1**) is preferably 10 to 100 wt%, more preferably 30 to 100 wt%, still more preferably 50 to 100 wt%, particularly preferably 70 to 100 wt%, most preferably 90 to 100 wt%. As long as the content of the polyfunctional monomer in the polymerizable monomer (**m1**) falls within the range, the flame-retardant polymer member of the present invention can express additionally excellent cigarette resistance.

When the flavoring agent is incorporated into the polymerizable composition layer (**a'**), its content is preferably $1.0 \times 10^{-5}$ to $1.0 \times 10^{-1}$ wt%, more preferably $1.0 \times 10^{-4}$ to $1.0 \times 10^{-2}$ wt% with respect to the entirety of the polymerizable monomer (**m1**). When the polymerizable composition layer (**a'**) contains the flavoring agent, the flame-retardant polymer member of the present invention can express extremely excellent odor-alleviating property as long as the content falls within the range. When the content of the flavoring agent in the polymerizable composition layer (**a**) is excessively small, it may be unable to sufficiently alleviate the odor of the member. When the content of the flavoring agent in the polymerizable composition layer (**a'**) is excessively large, the flavor of the flavoring agent may be felt unpleasant.

When the flavoring agent is incorporated into the polymerizable composition layer (**b'**), its content is preferably $1.0 \times 10^{-5}$ to $1.0 \times 10^{-1}$ wt%, more preferably $1.0 \times 10^{-4}$ to $1.0 \times 10^{-2}$ wt% with respect to the entirety of the polymerizable composition layer (**b'**). When the polymerizable composition layer (**b'**) contains the flavoring agent, the flame-retardant polymer member of the present invention can express extremely excellent odor-alleviating property as long as the content falls within the range. When the content of the flavoring agent in the polymerizable composition layer (**b'**) is excessively small, it may be unable to sufficiently alleviate the odor of the member. When the content of the flavoring agent in the polymerizable composition layer (**b'**) is excessively large, the flavor of the flavoring agent may be felt unpleasant.

When the weathering agent is incorporated into the polymerizable composition layer (**a'**), its content is preferably 0.001 to 30 parts by weight, more preferably 0.01 to 20 parts by weight, still more preferably 0.1 to 10 parts by weight, particularly preferably 0.3 to 5 parts by weight with respect to 100 parts by weight of the polymerizable monomer (**m1**). When the polymerizable composition layer (**a'**) contains the weathering agent, the flame-retardant polymer member of the present invention can express extremely excellent weatherability as long as the content falls within the range.

When the weathering agent is incorporated into the polymerizable composition layer (**b'**), its content is preferably 0.001 to 30 parts by weight, more preferably 0.01 to 20 parts by weight, still more preferably 0.1 to 10 parts by weight, particularly preferably 0.3 to 5 parts by weight with respect to 100 parts by weight of the entirety of the polymerizable composition layer (**b'**). When the polymerizable composition layer (**b'**) contains the weathering agent, the flame-retardant polymer member of the present invention can express extremely excellent weatherability as long as the content falls within the range.

When the heat-resistant resin is incorporated into the polymerizable composition layer (**a'**), its content is preferably 5 wt% or more, more preferably 10 wt% or more, still more preferably 20 wt% or more, particularly preferably 30 wt% or more with respect to the weight of the entirety of the polymerizable monomer (**m1**). An upper limit for the content of the heat-resistant resin in the polymerizable composition layer (**a'**) is not particularly limited and is preferably 100 wt% or less with respect to the weight of the entirety of the polymerizable monomer (**m1**). When the polymerizable composition layer (**a'**) contains the heat-resistant resin, the heat-resistant, flame-retardant polymer member of the present invention can express extremely excellent heat resistance as long as the content falls within the range.

When the heat-resistant resin is incorporated into the polymerizable composition layer (**b'**), its content is preferably 10 wt% or more, more preferably 30 wt% or more, still more preferably 50 wt% or more, particularly preferably 70 wt% or more with respect to the weight of the entirety of the polymerizable composition layer (**b'**). An upper limit for the content of the heat-resistant resin in the polymerizable composition layer (**b'**) is not particularly limited and is preferably 100 wt% or less with respect to the weight of the entirety of the polymerizable composition layer (**b'**). When the heat-resistant resin is incorporated into the polymerizable composition layer (**b'**), the heat-resistant, flame-retardant polymer member of the present invention can express extremely excellent heat resistance as long as the content falls within the range.

The polymerizable composition layer (**b'**) can contain inorganic particles. Any appropriate inorganic particle can be adopted as the inorganic particles as long as an effect of the present invention is not impaired. Examples of such inorganic particles include silica, silicone, calcium carbonate, clay, titanium oxide, talc, a layered silicate, a clay mineral, metal powder, glass, glass beads, a glass balloon, an alumina balloon, a ceramic balloon, titanium white, and carbon black.

The number of kinds of the inorganic particles in the polymerizable composition layer (**b'**) may be only one, or may be two or more.

The content of the inorganic particles in the polymerizable composition layer (**b'**) is preferably 0.001 to 1,000 wt%, more preferably 0.01 to 800 wt%, still more preferably 0.1 to 500 wt%, particularly preferably 1 to 300 wt%. When the content of the inorganic particles in the polymerizable composition layer (**b'**) falls within the range, the flame-retardant polymer member of the present invention can express high degrees of low-heat-generating property and low-smoking property.

<<3. Shape of flame-retardant polymer member>>

Any appropriate shape can be adopted as the shape of the flame-retardant polymer member of the present invention. Examples of the shape of the flame-retardant polymer member of the present invention include a sheet shape and a tape shape. When the shape of the flame-retardant polymer member of the present invention is a sheet shape, the member can be used as a flame-retardant sheet. The flame-retardant polymer member of the present invention may have such a shape that the member of a sheet shape or a tape shape is wound in a roll shape. Alternatively, the flame-retardant polymer member of the present invention may have such a shape that members of sheet shapes or tape shapes are laminated.

When the outermost layer of the flame-retardant polymer member of the present invention is a pressure-sensitive adhesive layer, the flame-retardant polymer member of the present invention can be used as a pressure-sensitive adhesive tape or a pressure-sensitive adhesive sheet. It should be noted that the "tape" and the "sheet" may be collectively referred to as "tape" or "sheet" in a simple manner.

The flame-retardant polymer member of the present invention can also be used as a pressure-sensitive adhesive tape or a pressure-sensitive adhesive sheet by further providing the flame-retardant polymer member of the present invention with a pressure-sensitive adhesive layer formed of any appropriate pressure-sensitive adhesive (such as an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, a fluorine-based pressure-sensitive adhesive, or an epoxy-based pressure-sensitive adhesive).

The flame-retardant polymer member of the present invention may have any other layer (such as an intermediate layer or an undercoat layer) to such an extent that the effect of the present invention is not impaired.

The surface of the flame-retardant layer (**A**) in the flame-retardant polymer member of the present invention may be protected with a cover film. The cover film can be peeled upon use of the flame-retardant polymer member of the present invention.

<<4. Flame-retardant article>>

A flame-retardant article is obtained by attaching the flame-retardant polymer member of the present invention to an adherend. For example, paper, lumber, a plastic material, a metal, a plaster board, glass, or a composite containing two or more thereof can be used as the adherend. The flame-retardant polymer member of the present invention is attached to at least part of the adherend. It should be noted that the adherend may be a printed matter provided with a pattern layer or the like, or may be an adherend having design.

Examples of the paper as the adherend include woodfree paper, Japanese paper, kraft paper, glassine paper, synthetic paper, and top-coated paper.

Examples of the lumber as the adherend include: broadleaf trees such as oak, paulownia wood, keyaki, teak, and rosewood; coniferous trees such as Japanese cedar, Japanese cypress, pine, and hiba false arborvitae; assembles; and plywood.

Examples of the plastic material as the adherend include an acrylic resin, a polyester (such as a polyethylene terephthalate), an olefin-based resin (such as a polyethylene, a polypropylene, or a polystyrene), a vinyl chloride resin, an epoxy resin, a vinyl ether-based resin, and a urethane-based resin.

Upon lamination of the flame-retardant polymer member of the present invention and the adherend, the member and the adherend may be attached to each other by applying any appropriate pressure-sensitive adhesive by any appropriate application method. When the outermost layer of the flame-retardant polymer member is a pressure-sensitive adhesive layer, the member may be attached to the adherend without being treated. A method of attaching the flame-retardant polymer member and the adherend is, for example, a method involving attaching the member and the adherend with a laminator. The flame-retardant-treated adherend thus obtained can be attached to a wall surface or glass surface of a railway vehicle or the like, or to a wall surface, decorative laminate, glass surface, or the like of a housing or the like through an attachment layer, the attachment layer being provided on the surface opposite to the surface on which the flame-retardant polymer member of the present invention is laminated.

The flame-retardant polymer member of the present invention can be suitably used as a building material in, for example, a wall material, ceiling material, roofing material, flooring material, partitioning material, or curtain of a housing, edifice, or public facility, in particular, a wall material or ceiling material of a kitchen, or a partition of a clean room. In addition, the member can be used in, for example, a surface trim material for fire preventive equipment such as an exhaust duct, a fire door, or a fire shutter, a surface trim material for furniture such as a table, a surface trim material for a door, a surface trim material for window glass, a surface trim material for a signboard or digital signage, or a roll screen. In addition, the member can be used in a wall material, ceiling material, roofing material, or flooring material inside or outside a ship, aircraft, automobile, or railway vehicle, a surface protective material or inkjet media material for a printed matter to be attached to a glass portion inside or outside a railway vehicle, a solar cell member, a cell protective material, or an electrical and electric equipment member such as a partition inside an electrical apparatus. Further, the member can be used as a peripheral tool for an ash tray, a surface trim material for a garbage box, or a protective material for the front panel of a pachinko machine.

Examples

Hereinafter, the present invention is described in more detail by way of examples, but the present invention is not limited to these examples.

It should be noted that a biaxially stretched polyethylene terephthalate film having a thickness of 38 $\mu$m (trade name: "MRN38," manufactured by Mitsubishi Chemical Polyester Film) one surface of which had been subjected to a silicone-based release treatment was used as each of cover films and base material films used in the following respective examples.

(Synthesis Example 1) (Preparation of syrup (b-1))

100 Parts by weight of cyclohexyl acrylate, 0.1 part by weight of a photopolymerization initiator (trade name: "IRGACURE 651," manufactured by Ciba Specialty Chemicals Inc.), and 0.1 part by weight of a photopolymerization initiator (trade name: "IRGACURE 184," manufactured by Ciba Specialty Chemicals Inc.) were stirred in a four-necked separable flask provided with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a syrupy composition having a rate of polymerization of 7% part of which had been polymerized was prepared (hereinafter, the composition is referred to as "syrup (b-1)").

(Synthesis Example 2) (Preparation of syrup (b-2))

100 Parts by weight of isobornyl acrylate, 0.1 part by weight of a photopolymerization initiator (trade name: "IRGACURE 651," manufactured by Ciba Specialty Chemicals Inc.), and 0.1 part by weight of a photopolymerization initiator (trade name: "IRGACURE 184, " manufactured by Ciba Specialty Chemicals Inc.) were stirred in a four-necked separable flask provided with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a syrupy composition having a rate of polymerization of 7% part of which had been polymerized was prepared (hereinafter, the composition is referred to as "syrup (b-2)").

(Synthesis Example 3) (Preparation of syrup (a-1) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of cyclohexyl acrylate, 0.2 part by weight of 1,6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-1) containing a layered inorganic compound was prepared. It should be noted that the monomer mixture to which the layered clay mineral had been added became transparent as a result of the ultrasonic treatment.

(Synthesis Example 4) (Preparation of syrup (a-2) containing layered inorganic compound)

40 Parts by weight of a layered clay mineral (trade name: "SOMASIF MPE," manufactured by Co-op Chemical Co., Ltd., shape: flat plate-like shape) were added to a monomer mixture formed of 100 parts by weight of cyclohexyl acrylate, 0.2 part by weight of 1,6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184, " manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-2) containing a layered inorganic compound was prepared. It should be noted that the monomer mixture to which the layered clay mineral had been added became transparent as a result of the ultrasonic treatment.

(Synthesis Example 5) (Preparation of syrup (a-3) containing layered inorganic compound)

11 Parts by weight of a layered clay mineral (trade name: "Lucentite SPN," manufactured by Co-op Chemical Co., Ltd., shape: flat plate-like shape) were added to a monomer mixture formed of 100 parts by weight of cyclohexyl acrylate, 0.2 part by weight of 1,6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184, " manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-3) containing a layered inorganic compound was prepared. It should be noted that the monomer mixture to which the layered clay mineral had been added became semi-transparent as a result of the ultrasonic treatment.

(Synthesis Example 6) (Preparation of syrup (a-4) containing layered inorganic compound)

40 Parts by weight of a layered clay mineral (trade name: "Lucentite SPN," manufactured by Co-op Chemical Co., Ltd., shape: flat plate-like shape) were added to a monomer mixture formed of 90 parts by weight of cyclohexyl acrylate, 10 parts by weight of acrylic acid, 0.2 part by weight of 1, 6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184, "(manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-4) containing a layered inorganic compound was prepared. It should be noted that the monomer mixture to which the layered clay mineral had been added became semi-transparent as a result of the ultrasonic treatment.

(Synthesis Example 7) (Preparation of syrup (a-5) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of butyl acrylate, 0.2 part by weight of 1,6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184, " manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-5) containing a layered inorganic compound was prepared. It should be noted that the monomer mixture to which the layered clay mineral had been added became transparent as a result of the ultrasonic treatment.

(Synthesis Example 8) (Preparation of syrup (a-6) containing layered inorganic compound)

50 Parts by weight of a layered clay mineral (trade name: "Lucentite SPN," manufactured by Co-op Chemical Co., Ltd., shape: flat plate-like shape) were added to a monomer mixture formed of 100 parts by weight of cyclohexyl acrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184, " manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-6) containing a layered inorganic compound was prepared. It should be noted that the monomer mixture to which the layered clay mineral had been added became semi-transparent as a result of the ultrasonic treatment.

(Synthesis Example 9) (Preparation of syrup (a-7))

0.5 Part by weight of a photopolymerization initiator (trade name: "IRGACURE 819, " manufactured by Ciba Specialty Chemicals Inc.) and 50 parts by weight of magnesium hydroxide (trade name: "KISMA 5A, " manufactured by KYOWA CHEMICAL Corporation) were added to 100 parts by weight of a photopolymerizable syrup (A), and then the mixture was stirred with a Disper (manufactured by PRIMIX Corporation) at 2,000 rpm for 4 minutes. Thus, a syrup (a-7) was obtained.

(Synthesis Example 10) (Preparation of syrup (a-8))

0.5 Part by weight of a photopolymerization initiator (trade name: "IRGACURE 819," manufactured by Ciba Specialty Chemicals Inc.) and 50 parts by weight of aluminum hydroxide (trade name: "HIGILITE H32," manufactured by Showa Denko K.K.) were added to 100 parts by weight of a photopolymerizable syrup (A), and then the mixture was stirred with a Disper (manufactured by PRIMIX Corporation) at 2,000 rpm for 4 minutes. Thus, a syrup (a-8) was obtained.

(Synthesis Example 11) (Production of monomer-absorbable sheet (B-1) with base material)

A syrup composition prepared by uniformly mixing 100 parts by weight of the syrup (b-1) prepared in Synthesis Example 1 with 0.1 part by weight of 1, 6-hexanediol diacrylate was applied to the release-treated surface of the base material film so as to have a thickness of 100 $\mu$m after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-1) with a base material in which the surface of the monomer-absorbing layer was protected with the cover film was produced.

(Synthesis Example 12) (Production of monomer-absorbable sheet (B-2) with base material)

A syrup composition prepared by uniformly mixing 70 parts by weight of the syrup (b-2) prepared in Synthesis Example 2 with 30 parts by weight of lauryl acrylate and 0.1 part by weight of 1,6-hexanediol diacrylate was applied to the release-treated surface of the base material film so as to have a thickness of 100 $\mu$m after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-2) with a base material in which the surface of the monomer-absorbing layer was protected with the cover film was produced.

(Synthesis Example 13) (Preparation of syrup (a-9) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of cyclohexyl acrylate and 0.5 part by weight of a photopolymerization initiator (trade name: "IRGACURE 819," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO. , LTD.) at an irradiation intensity of 500 mW for 3 minutes. Thus, a syrup (a-9) containing a layered inorganic compound was prepared. It should be noted that the monomer mixture to which the layered clay mineral had been added became transparent as a result of the ultrasonic treatment.

(Synthesis Example 14) (Preparation of syrup (a-10) containing layered inorganic compound)

20 Parts by weight of a layered clay mineral (trade name: "Lucentite SPN," manufactured by Co-op Chemical Co., Ltd., shape: flat plate-like shape) were added to a monomer mixture formed of 100 parts by weight of butyl acrylate and 0.5 part by weight of a photopolymerization initiator (trade name: "IRGACURE 819," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-10) containing a layered inorganic compound was prepared.

(Synthesis Example 15) (Preparation of syrup (a-11) containing layered inorganic compound)

20 Parts by weight of a layered clay mineral (trade name: "Lucentite SPN," manufactured by Co-op Chemical Co., Ltd., shape: flat plate-like shape) were added to a monomer mixture formed of 50 parts by weight of butyl acrylate, 50 parts by weight of isobornyl acrylate, and 0. 5 part by weight of a photopolymerization initiator (trade name: "IRGACURE 819," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-11) containing a layered inorganic compound was prepared.

(Synthesis Example 16) (Preparation of syrup (a-12) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of 1,6-hexanediol diacrylate and 0.5 part by weight of a photopolymerization initiator (trade name: "IRGACURE 819, " manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-12) containing a layered inorganic compound was prepared. It should be noted that the monomer mixture to which the layered clay mineral had been added became transparent as a result of the ultrasonic treatment.

(Synthesis Example 17) (Preparation of acrylic oligomer (A))

70 Parts by weight of isobornyl acrylate, 30 parts by weight of lauryl acrylate, and 3.8 parts by weight of thioglycolic acid were stirred in a four-necked separable flaskprovidedwith a stirring machine, a temperature gauge, a nitrogen gas-introducing tube, and a cooling tube until the mixture became uniform. After that, bubbling was performed with a nitrogen gas for 1 hour to remove dissolved oxygen. After that, the temperature of the remainder was increased to 70°C and then the remainder was stirred at 70°C for 30 minutes. After that, 0.05 part by weight of a thermal polymerization initiator (trade name: "PERHEXYL O," manufactured by Nippon Oil & Fat Co., Ltd.) and 0.02 part by weight of a thermal polymerization initiator (trade name: "PERHEXYL D," manufactured by Nippon Oil & Fat Co., Ltd.) were added to the remainder. Further, the temperature of the mixture was increased to 100°C, the mixture was stirred at 100°C for 60 minutes, and then the temperature was increased to 140°C. After that, the mixture was stirred at 140°C for 60 minutes. After that, the temperature was increased to 180°C and then the mixture was stirred at 180°C for 60 minutes. Thus, an acrylic oligomer (A) was prepared. It should be noted that the resultant acrylic oligomer (A) had a weight-average molecular weight of 5,000.

(Synthesis Example 18) (Preparation of syrup (b-3))

20 Parts by weight of cyclohexyl acrylate, 80 parts by weight of the acrylic oligomer (A) prepared in Synthesis Example 17, and 0.5 part by weight of a photopolymerization initiator (trade name: "IRGACURE 819," manufactured by Ciba Specialty Chemicals Inc.) were stirred in a flask provided with a stirring machine until the mixture became uniform. Thus, a syrupy composition was prepared (hereinafter, the composition is referred to as "syrup (b-3)").

(Synthesis Example 19) (Preparation of syrup (b-4))

20 Parts by weight of 1, 6-hexanediol diacrylate, 80 parts by weight of the acrylic oligomer (A) prepared in Synthesis Example 17, and 0.5 part by weight of a photopolymerization initiator (trade name: "IRGACURE 819," manufactured by Ciba Specialty Chemicals Inc.) were stirred in a flask provided with a stirring machine until the mixture became uniform. Thus, a syrupy composition was prepared (hereinafter, the composition is referred to as "syrup (b-4)").

(Synthesis Example 20) (Preparation of urethane polymer-acrylic mixture (A))

100 Parts by weight of 1,6-hexanediol diacrylate as a (meth)acrylic monomer, 68.4 parts by weight of a poly(oxytetramethylene)glycol having a number-average molecular weight of 650 (PTMG650 manufactured by Mitsubishi Chemical Corporation) as a polyol, and 0.01 part by weight of dibutyltin dilaurate as a catalyst were loaded into a reaction vessel provided with a cooling tube, a temperature gauge, and a stirring apparatus. While the mixture was stirred, 25. 5 parts by weight of hydrogenated xylylene diisocyanate (manufactured by Mitsui Chemicals Polyurethane) were dropped to the mixture. The resultant mixture was subjected to a reaction at 65°C for 5 hours. Thus, a urethane polymer-acrylic monomer mixture (referred to as "urethane polymer-acrylic mixture (A) ") was prepared. It should be noted that a usage ratio "NCO/OH (equivalent ratio) "between the polyisocyanate component and the polyol component was 1.25, the concentration of the urethane polymer with respect to the urethane polymer-acrylic mixture (A) was 50 wt%, and the concentration of the (meth) acrylic monomer with respect thereto was 50 wt%.

(Synthesis Example 21) (Preparation of syrup (b-5))

10 Parts by weight of 1,6-hexanediol diacrylate, 20 parts by weight of the urethane polymer-acrylic mixture (A) prepared in Synthesis Example 20, 70 parts by weight of the acrylic oligomer (A) prepared in Synthesis Example 17, and 0.5 part by weight of a photopolymerization initiator (trade name: "IRGACURE 819," manufactured by Ciba Specialty Chemicals Inc.) were stirred in a flask provided with a stirring machine until the mixture became uniform. Thus, a syrupy composition was prepared (hereinafter, the composition is referred to as "syrup (b-5)").

(Synthesis Example 22) (Preparation of syrup (b-6))

50 Parts by weight of 1, 6-hexanediol diacrylate, 50 parts by weight of a fluorine-based resin (trade name: "LF710F," manufactured by ASAHI GLASS CO., LTD.), and 0.5 part by weight of a photopolymerization initiator (trade name: "IRGACURE 819," manufactured by Ciba Specialty Chemicals Inc.) were stirred in a flask provided with a stirring machine until the mixture became uniform. Thus, a syrupy composition was prepared (hereinafter, the composition is referred to as "syrup (b-6)").

(Synthesis Example 23) (Preparation of acrylic oligomer (B))

50 Parts by weight of isobornyl acrylate, 50 parts by weight of lauryl acrylate, and 3.8 parts by weight of thioglycolic acid were stirred in a four-necked separable flaskprovidedwith a stirring machine, a temperature gauge, a nitrogen gas-introducing tube, and a cooling tube until the mixture became uniform. After that, bubbling was performed with a nitrogen gas for 1 hour to remove dissolved oxygen. After that, the temperature of the remainder was increased to 70°C and then the remainder was stirred at 70°C for 30 minutes. After that, 0.05 part by weight of a thermal polymerization initiator (trade name: "PERHEXYL O," manufactured by Nippon Oil & Fat Co., Ltd.) and 0. 02 part by weight of a thermal polymerization initiator (trade name: "PERHEXYL D," manufactured by Nippon Oil & Fat Co., Ltd.) were added to the remainder. Further, the temperature of the mixture was increased to 100°C, the mixture was stirred at 100°C for 60 minutes, and then the temperature was increased to 140°C. After that, the mixture was stirred at 140°C for 60 minutes. After that, the temperature was increased to 180°C and then the mixture was stirred at 180°C for 60 minutes. Thus, an acrylic oligomer (B) was prepared. It should be noted that the resultant acrylic oligomer (B) had a weight-average molecular weight of 5,000.

(Synthesis Example 24) (Preparation of syrup (b-7))

10 Parts by weight of isobornyl acrylate, 10 parts by weight of lauryl acrylate, 80 parts by weight of the acrylic oligomer (B) prepared in Synthesis Example 23, and 0.5 part by weight of a photopolymerization initiator (trade name: "IRGACURE 819," manufactured by Ciba Specialty Chemicals Inc.) were stirred in a flask provided with a stirring machine until the mixture became uniform. Thus, a syrupy composition was prepared (hereinafter, the composition is referred to as "syrup (b-7)").

(Synthesis Example 25) (Preparation of syrup (b-8))

50 Parts by weight of isobornyl acrylate, 50 parts by weight of lauryl acrylate, 0.1 part by weight of a photopolymerization initiator (trade name: "IRGACURE 651," manufactured by Ciba Specialty Chemicals Inc.), and 0.1 part by weight of a photopolymerization initiator (trade name: "IRGACURE 184," manufactured by Ciba Specialty Chemicals Inc.) were stirred in a four-necked separable flask provided with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a syrupy composition having a rate of polymerization of 7% part of which had been polymerized was prepared (hereinafter, the composition is referred to as "syrup (b-8)").

(Synthesis Example 26) (Production of monomer-absorbable sheet (B-3) with base material)

A syrup composition prepared by uniformly mixing 100 parts by weight of the syrup (b-8) prepared in Synthesis Example 25 with 0.1 part by weight of 1, 6-hexanediol diacrylate was applied to the release-treated surface of the base material film so as to have a thickness of 100 $\mu$m after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-3) with a base material in which the surface of the monomer-absorbing layer was protected with the cover film was produced.

(Synthesis Example 27) (Preparation of syrup (b-9))

70 Parts by weight of isobornyl acrylate, 30 parts by weight of lauryl acrylate, 0.1 part by weight of a photopolymerization initiator (trade name: "IRGACURE 651," manufactured by Ciba Specialty Chemicals Inc.), and 0.1 part by weight of a photopolymerization initiator (trade name: "IRGACURE 184," manufactured by Ciba Specialty Chemicals Inc.) were stirred in a four-necked separable flask provided with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a syrupy composition having a rate of polymerization of 7% part of which had been polymerized was prepared (hereinafter, the composition is referred to as "syrup (b-9)").

(Synthesis Example 28) (Preparation of syrup (a-13) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 80 parts by weight of 1, 6-hexanediol diacrylate, 20 parts by weight of cyclohexyl acrylate, and 0.5 part by weight of a photopolymerization initiator (trade name: "IRGACURE 819," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO. , LTD.) at an irradiation intensity of 500 mW for 3 minutes. Thus, a syrup (a-13) containing a layered inorganic compound was prepared. It should be noted that the monomer mixture to which the layered clay mineral had been added became transparent as a result of the ultrasonic treatment.

(Synthesis Example 29) (Preparation of syrup (a-14) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 50 parts by weight of 1, 6-hexanediol diacrylate, 50 parts by weight of cyclohexyl acrylate, and 0.5 part by weight of a photopolymerization initiator (trade name: "IRGACURE 819," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-14) containing a layered inorganic compound was prepared. It should be noted that the monomer mixture to which the layered clay mineral had been added became transparent as a result of the ultrasonic treatment.

(Synthesis Example 30) (Preparation of syrup (a-15) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 10 parts by weight of 1, 6-hexanediol diacrylate, 90 parts by weight of cyclohexyl acrylate, and 0.5 part by weight of a photopolymerization initiator (trade name: "IRGACURE 819," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-15) containing a layered inorganic compound was prepared. It should be noted that the monomer mixture to which the layered clay mineral had been added became transparent as a result of the ultrasonic treatment.

(Synthesis Example 31) (Preparation of syrup (a-16) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 5 parts by weight of 1, 6-hexanediol diacrylate, 95 parts by weight of cyclohexyl acrylate, and 0.5 part by weight of a photopolymerization initiator (trade name: "IRGACURE 819," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO. , LTD.) at an irradiation intensity of 500 mW for 3 minutes. Thus, a syrup (a-16) containing a layered inorganic compound was prepared. It should be noted that the monomer mixture to which the layered clay mineral had been added became transparent as a result of the ultrasonic treatment.

(Synthesis Example 32) (Preparation of syrup (a-17) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 1 part by weight of 1, 6-hexanediol diacrylate, 99 parts by weight of cyclohexyl acrylate, and 0.5 part by weight of a photopolymerization initiator (trade name: "IRGACURE 819," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-17) containing a layered inorganic compound was prepared. It should be noted that the monomer mixture to which the layered clay mineral had been added became transparent as a result of the ultrasonic treatment.

(Synthesis Example 33) (Production of monomer-absorbable sheet (B-4) with base material)

100 Parts by weight of the syrup (b-9) prepared in Synthesis Example 27 were applied to the release-treated surface of the base material film so as to have a thickness of 100 $\mu$m after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-4) with a base material in which the surface of the monomer-absorbing layer was protected with the cover film was produced.

(Synthesis Example 34) (Production of monomer-absorbable sheet (B-5) with base material)

A syrup composition prepared by uniformly mixing 100 parts by weight of the syrup (b-8) prepared in Synthesis Example 25 with 0.5 part by weight of a photopolymerization initiator (trade name: "IRGACURE 651," manufactured by Ciba Specialty Chemicals Inc.) was applied to the release-treated surface of the base material film so as to have a thickness of 100 $\mu$m after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-5) with a base material in which the surface of the monomer-absorbing layer was protected with the cover film was produced.

A polymer structure in the monomer-absorbing layer was an uncross-linked structure and the gel fraction of the polymer was 3 wt%.

(Synthesis Example 35) (Production of flame-retardant polymer sheet (P-1))

A polymerizable composition layer (thickness: 100 μm) was formed by applying the syrup (a-1) to the release-treated surface of the cover film. The resultant was attached to the monomer-absorbable sheet (B-5) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (P-1) was produced.

(Synthesis Example 36) (Preparation of syrup (a-18) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of cyclohexyl acrylate, 0.2 part by weight of 1,6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184, " manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. 5.0x10-4 Part by weight of cis-3-hexenol was added to the mixture as a flavoring agent, and the contents were uniformly mixed. Thus, a syrup (a-18) containing a layered inorganic compound was prepared. It should be noted that the monomer mixture to which the layered clay mineral had been added became transparent as a result of the ultrasonic treatment.

(Synthesis Example 37) (Production of monomer-absorbable sheet (B-6) with base material)

A syrup composition obtained by adding 0.1 part by weight of 1,6-hexanediol diacrylate and 5.0x10$^{-4}$ part by weight of cis-3-hexenol as a flavoring agent to 100 parts by weight of the syrup (b-1) prepared in Synthesis Example 1, and uniformly mixing the contents was applied to the release-treated surface of the base material film so as to have a thickness of 100 μm after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-6) with a base material in which the surface of the monomer-absorbing layer was protected with the cover film was produced.

(Synthesis Example 38) (Preparation of syrup (a-19) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of cyclohexyl acrylate, 0.2 part by weight of 1,6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184, " manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. 1.25 Parts by weight of a UV absorbing agent (trade name: "TINUVIN123," manufactured by Ciba Specialty Chemicals Inc.) and 1.25 parts by weight of an antioxidant (trade name: "TINUVIN400," manufactured by Ciba Specialty Chemicals Inc.) were added to the mixture, and the contents were uniformly mixed. Thus, a syrup (a-19) containing a layered inorganic compound was prepared. It should be noted that the monomer mixture to which the layered clay mineral had been added became transparent as a result of the ultrasonic treatment.

(Synthesis Example 39) (Production of monomer-absorbable sheet (B-7) with base material)

A syrup composition prepared by adding 0.1 part by weight of 1, 6-hexanediol diacrylate and 1.25 parts by weight of an antioxidant (trade name:"TINUVIN400,"manufactured by Ciba Specialty Chemicals Inc.) to 100 parts by weight of the syrup (b-1) prepared in Synthesis Example 1, and uniformly mixing the contents was applied to the release-treated surface of the base material film so as to have a thickness of 100 $\mu$m after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-7) with a base material in which the surface of the monomer-absorbing layer was protected with the cover film was produced.

(Synthesis Example 40) (Production of monomer-absorbable sheet (B-8) with base material)

A syrup composition prepared by adding 0.1 part by weight of 1, 6-hexanediol diacrylate and 200 parts by weight of silica particles (trade name: "SC-1000TT," manufactured by ADMATECHS CO., LTD.) as inorganic particles to 100 parts by weight of cyclohexyl acrylate, and uniformly mixing the contents was applied to the release-treated surface of the base material film so as to have a thickness of 100 $\mu$m after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-8) with a base material in which the surface of the monomer-absorbing layer was protected with the cover film was produced.

(Synthesis Example 41) (Production of monomer-absorbable sheet (B-9) with base material)

A syrup composition prepared by uniformly mixing 100 parts by weight of the syrup (b-8) prepared in Synthesis Example 25 with 0.1 part by weight of 1,6-hexanediol diacrylate and 0.5 part by weight of a photopolymerization initiator (trade name: "IRGACURE 651," manufactured by Ciba Specialty Chemicals Inc.) was applied to the release-treated surface of the base material film so as to have a thickness of 100 $\mu$m after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp for 5 minutes. As a result, the layer was cured to form a monomer-absorbing layer. Thus, a monomer-absorbable sheet (B-9) with a base material in which the surface of the monomer-absorbing layer was protected with the cover film was produced.
A polymer structure in the monomer-absorbing layer was a cross-linked structure and the gel fraction of the polymer was 67 wt%.

(Synthesis Example 42) (Preparation of syrup (a-20) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of a dicyclopentadiene-based acrylate (trade name: "FA-511AS," manufactured by Hitachi Chemical Co., Ltd., Tg=120°C), 0.2 part by weight of 1,6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184, " manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered claymineral hadbeen added was irradiated with an ultrasonic wave from an ultrasonic disperser (manufactured by NIPPON SEIKI CO., LTD.) at an irradiation intensity of 500 mW for 3 minutes and then the whole was uniformly mixed. Thus, a syrup (a-20) containing a layered inorganic compound was prepared. It should be noted that the monomer mixture to which the layered clay mineral hadbeen added became transparent as a result of the ultrasonic treatment.

<Examples and comparative examples of flame-retardant polymer member>

(Example 1)

A polymerizable composition layer (thickness: 100 $\mu$m) was formed by applying the syrup (a-1) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (1) was produced.

(Example 2)

A polymerizable composition layer (thickness: 100 $\mu$m) was formed by applying the syrup (a-2) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated under the condition of 70°C for 10 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (2) was produced.

(Example 3)

A polymerizable composition layer (thickness: 100 $\mu$m) was formed by applying the syrup (a-3) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated under the condition of 70°C for 10 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (3) was produced.

(Example 4)

A polymerizable composition layer (thickness: 100 $\mu$m) was formed by applying the syrup (a-4) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated under the condition of 70°C for 10 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (4) was produced.

(Example 5)

A polymerizable composition layer (thickness: 100 $\mu$m) was formed by applying the syrup (a-5) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated under the condition of 70 °C for 10 minutes. Thus, an unevenly distributed polymerizable composition layer was obtained. After that, both of its surfaces were irradiated with UV light (illuminance: 5 mW/cm$^2$)

by using a black-light lamp as a light source for 5 minutes. As a result, the unevenly distributed polymerizable composition layer was photo-cured to form an unevenly distributed polymer layer. Thus, a flame-retardant polymer sheet (5) was produced.

(Example 6)

A polymerizable composition layer (thickness: 100 $\mu$m) was formed by applying the syrup (a-1) to the release-treated surface of the cover film. The resultant was attached to the monomer-absorbable sheet (B-2) with a base material, the monomer-absorbing layer of which had been exposed by peeling the cover film, in such a manner that the monomer-absorbing layer and the polymerizable composition layer were in contact with each other. Thus, a laminate was formed.
Next, the laminate was heated under the condition of 70°C for 10 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (6) was produced.

(Example 7)

A polymerizable composition layer (thickness: 100 $\mu$m) was formed by applying the syrup (a-1) to the release-treated surface of the cover film. A cover film was attached to the resultant, followed by photo-curing through 5 minutes of irradiation of both surfaces with UV light (illuminance: 5 mW/cm$^2$) from a black-light lamp used as a light source. Thus, a layered inorganic compound-containing polymer layer was produced.
After that, the layered inorganic compound-containing polymer layer whose cover film had been peeled was attached to the monomer-absorbable sheet (B-2) with a base material, the monomer-absorbing layer of which had been exposed by peeling the cover film, in such a manner that the monomer-absorbing layer and the layered inorganic compound-containing polymer layer were in contact with each other. Thus, a flame-retardant polymer sheet (7) was produced.

(Example 8)

A polymerizable composition layer (thickness: 100 $\mu$m) was formed by applying the syrup (a-6) to the release-treated surface of the cover film. A cover film was attached to the resultant, followed by photo-curing through 5 minutes of irradiation of both surfaces with UV light (illuminance: 5 mW/cm$^2$) from a black-light lamp used as a light source. Thus, a layered inorganic compound-containing polymer layer was formed.
After that, the layered inorganic compound-containing polymer layer whose cover film had been peeled was attached to the monomer-absorbable sheet (B-2) with a base material, the monomer-absorbing layer of which had been exposed by peeling the cover film, in such a manner that the monomer-absorbing layer and the layered inorganic compound-containing polymer layer were in contact with each other. Thus, a flame-retardant polymer sheet (8) was produced.

(Example 9)

A polymerizable composition layer (thickness: 100 $\mu$m) was formed by applying the syrup (a-2) to the release-treated surface of the cover film. A cover film was attached to the resultant, followed by photo-curing through 5 minutes of irradiation of both surfaces with UV light (illuminance: 5 mW/cm$^2$) from a black-light lamp used as a light source. Thus, a layered inorganic compound-containing polymer layer was formed.
After that, the layered inorganic compound-containing polymer layer whose cover film had been peeled was attached to the monomer-absorbable sheet (B-2) with a base material, the monomer-absorbing layer of which had been exposed by peeling the cover film, in such a manner that the monomer-absorbing layer and the layered inorganic compound-containing polymer layer were in contact with each other. Thus, a flame-retardant polymer sheet (9) was produced.

(Example 10)

A polymerizable composition layer (thickness: 100 $\mu$m) was formed by applying the syrup (a-3) to the release-treated surface of the cover film. A cover film was attached to the resultant, followed by photo-curing through 5 minutes of irradiation of both surfaces with UV light (illuminance: 5 mW/cm$^2$) from a black-light lamp used as a light source. Thus, a layered inorganic compound-containing polymer layer was formed.
After that, the layered inorganic compound-containing polymer layer whose cover film had been peeled was attached to the monomer-absorbable sheet (B-2) with a base material, the monomer-absorbing layer of which had been exposed by peeling the cover film, in such a manner that the monomer-absorbing layer and the layered inorganic compound-containing polymer layer were in contact with each other. Thus, a flame-retardant polymer sheet (10) was produced.

(Example 11)

A polymerizable composition layer (thickness: 100 $\mu$m) was formed by applying the syrup (a-4) to the release-treated surface of the cover film. A cover film was attached to the resultant, followed by photo-curing through 5 minutes of irradiation of both surfaces with UV light (illuminance: 5 mW/cm$^2$) from a black-light lamp used as a light source. Thus, a layered inorganic compound-containing polymer layer was formed.
After that, the layered inorganic compound-containing polymer layer whose cover film had been peeled was attached to the monomer-absorbable sheet (B-2) with a base material, the monomer-absorbing layer of which had been exposed by peeling the cover film, in such a manner that the monomer-absorbing layer and the layered inorganic compound-containing polymer layer were in contact with each other. Thus, a flame-retardant polymer sheet (11) was produced.

(Comparative Example 1)

A polymerizable composition layer (thickness: 100 $\mu$m) was formed by applying the syrup (a-7) to the release-treated surface of the cover film. The resultant was attached to the monomer-absorbable sheet (B-2) with a base material, the monomer-absorbing layer of which had been exposed by peeling the cover film, in such a manner that the monomer-absorbing layer and the polymerizable composition layer were in contact with each other. Thus, a laminate was formed.
Next, the laminate was heated under the condition of 70°C for 10 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, an inorganic substance-containing polymer sheet (C1) was produced.

(Comparative Example 2)

A polymerizable composition layer (thickness: 100 $\mu$m) was formed by applying the syrup (a-8) to the release-treated surface of the cover film. The resultant was attached to the monomer-absorbable sheet (B-2) with a base material, the monomer-absorbing layer of which had been exposed by peeling the cover film, in such a manner that the monomer-absorbing layer and the polymerizable composition layer were in contact with each other. Thus, a laminate was formed.
Next, the laminate was heated under the condition of 70°C for 10 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, an inorganic substance-containing sheet (C2) was produced.

(Comparative Example 3)

A polymerizable syrup composition prepared by uniformly mixing 100 parts by weight of the syrup (b-1) prepared in Synthesis Example 1 with 0.1 part by weight of 1, 6-hexanediol diacrylate was applied to the release-treated surface of the base material film so as to have a thickness of 200 $\mu$m after its curing. Thus, a polymerizable syrup composition layer was formed. Then, the cover film was attached onto the layer in such a manner that its release-treated surface was in contact with the layer, and then both surfaces of the resultant were simultaneously irradiated with UV light (illuminance: 5 mW/cm$^2$) by using a black-light lamp as a light source for 5 minutes. As a result, the polymerizable syrup composition layer was photo-cured to form a polymer layer. Thus, a polymer sheet (C3) was produced.

(Comparative Example 4)

A vinyl chloride sheet (trade name: "N-35C," manufactured by Nitto Denko Corporation) was used as a polymer sheet (C4) without being treated.

(Comparative Example 5)

A polyethylene terephthalate sheet having a thickness of 188 $\mu$m (trade name: "Lumirror S10," manufactured by Toray Industries, Inc.) was used as a polymer sheet (C5) without being treated.

(Example 12)

The syrup (a-9) was applied onto a supporting base material so as to have a thickness of 50 $\mu$m after its curing. Thus, a polymerizable composition layer (**a'**) was formed. The syrup (b-3) was applied onto another supporting base material so as to have a thickness of 50 $\mu$m after its curing. Thus, a polymerizable composition layer (**b'**) was formed. The resultant products were attached to each other in such a manner that the polymerizable composition layer (**a'**) and the polymerizable composition layer (**b'**) were in contact with each other, and so that no air bubbles entered. After that, the polymerizable composition layer (**a'**) and the polymerizable composition layer (**b'**) were cured by being irradiated with UV light (illuminance: 9 mW/cm$^2$, light quantity: 1, 200 mJ/cm$^2$) by using a black-light lamp and a metal halide lamp for 5 minutes. Thus, a flame-retardant polymer sheet (12) having supporting base materials on both sides was produced.

(Example 13)

The syrup (a-10) was applied onto a supporting base material so as to have a thickness of 50 $\mu$m after its curing. Thus, a polymerizable composition layer (**a'**) was formed. The syrup (b-4) was applied onto another supporting base material so as to have a thickness of 50 $\mu$m after its curing. Thus, a polymerizable composition layer (**b'**) was formed. The resultant products were attached to each other in such a manner that the polymerizable composition layer (**a'**) and the polymerizable composition layer (**b'**) were in contact with each other, and so that no air bubbles entered. After that, the polymerizable composition layer (**a'**) and the polymerizable composition layer (**b'**) were cured by being irradiated with UV light (illuminance: 9 mW/cm$^2$, light quantity: 1,200 mJ/cm$^2$) by using a black-light lamp and a metal halide lamp for 1 minute. Thus, a flame-retardant polymer sheet (13) having supporting base materials on both sides was produced.

(Example 14)

The syrup (a-10) was applied onto a supporting base material so as to have a thickness of 50 $\mu$m after its curing. Thus, a polymerizable composition layer (**a'**) was formed. The syrup (b-6) was applied onto another supporting base material so as to have a thickness of 50 $\mu$m after its curing. Thus, a polymerizable composition layer (**b'**) was formed. The resultant products were attached to each other in such a manner that the polymerizable composition layer (**a'**) and the polymerizable composition layer (**b'**) were in contact with each other, and so that no air bubbles entered. After that, the polymerizable composition layer (**a'**) and the polymerizable composition layer (**b'**) were cured by being irradiated with UV light (illuminance: 9 mW/cm$^2$, light quantity: 1, 200 mJ/cm$^2$) by using a black-light lamp and a metal halide lamp for 1 minute. Thus, a flame-retardant polymer sheet (14) having supporting base materials on both sides was produced.

(Example 15)

The syrup (a-11) was applied onto a supporting base material so as to have a thickness of 50 $\mu$m after its curing. Thus, a polymerizable composition layer (**a'**) was formed. The syrup (b-4) was applied onto another supporting base material so as to have a thickness of 50 $\mu$m after its curing. Thus, a polymerizable composition layer (**b'**) was formed. The resultant products were attached to each other in such a manner that the polymerizable composition layer (**a'**) and the polymerizable composition layer (**b'**) were in contact with each other, and so that no air bubbles entered. After that, the polymerizable composition layer (**a'**) and the polymerizable composition layer (**b'**) were cured by being irradiated with UV light (illuminance: 9 mW/cm$^2$, light quantity: 1,200 mJ/cm$^2$) by using a black-light lamp and a metal halide lamp for 1 minute. Thus, a flame-retardant polymer sheet (15) having supporting base materials on both sides was produced.

(Example 16)

The syrup (a-12) was applied onto a supporting base material so as to have a thickness of 50 $\mu$m after its curing. Thus, a polymerizable composition layer (**a'**) was formed. The syrup (b-4) was applied onto another supporting base material so as to have a thickness of 50 $\mu$m after its curing. Thus, a polymerizable composition layer (**b'**) was formed. The resultant products were attached to each other in such a manner that the polymerizable composition layer (**a'**) and the polymerizable composition layer (**b'**) were in contact with each other, and so that no air bubbles entered. After that, the polymerizable composition layer (**a'**) and the polymerizable composition layer (**b'**) were cured by being irradiated with UV light (illuminance: 9 mW/cm$^2$, light quantity: 1,200 mJ/cm$^2$) by using a black-light lamp and a metal halide lamp for 1 minute. Thus, a flame-retardant polymer sheet (16) having supporting base materials on both sides was produced.

(Example 17)

The syrup (a-12) was applied onto a supporting base material so as to have a thickness of 50 $\mu$m after its curing. Thus, a polymerizable composition layer (**a'**) was formed. The syrup (b-5) was applied onto another supporting base material so as to have a thickness of 50 $\mu$m after its curing. Thus, a polymerizable composition layer (**b'**) was formed. The resultant products were attached to each other in such a manner that the polymerizable composition layer (**a'**) and the polymerizable composition layer (**b'**) were in contact with each other, and so that no air bubbles entered. After that, the polymerizable composition layer (**a'**) and the polymerizable composition layer (**b'**) were cured by being irradiated with UV light (illuminance: 9 mW/cm$^2$, light quantity: 1,200 mJ/cm$^2$) by using a black-light lamp and a metal halide lamp for 1 minute. Thus, a flame-retardant polymer sheet (17) having supporting base materials on both sides was produced.

(Example 18)

A polymerizable composition layer (thickness: 100 $\mu$m) was formed by applying the syrup (a-9) to the release-treated surface of the cover film. The resultant was attached to the monomer-absorbable sheet (B-3) with a base material, the monomer-absorbing layer of which had been exposed by peeling the cover film, in such a manner that the monomer-absorbing layer and the polymerizable composition layer were in contact with each other. Thus, a laminate was formed.
Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (18) was produced.
In the resultant flame-retardant polymer sheet (18), the polymer layer (B) had a thickness of 175 $\mu$m and the flame-retardant layer (A) had a thickness of 25 $\mu$m.

(Example 19)

The syrup (a-9) was applied onto a supporting base material so as to have a thickness of 50 $\mu$m after its curing. Thus, a polymerizable composition layer (**a'**) was formed. The syrup (b-7) was applied onto another supporting base material so as to have a thickness of 50 $\mu$m after its curing. Thus, a polymerizable composition layer (**b'**) was formed. The resultant products were attached to each other in such a manner that the polymerizable composition layer (**a'**) and the polymerizable composition layer (**b'**) were in contact with each other, and so that no air bubbles entered. After that, the polymerizable composition layer (**a'**) and the polymerizable composition layer (**b'**) were cured by being irradiated with UV light (illuminance: 9 mW/cm$^2$, light quantity: 1,200 mJ/cm$^2$) by using a black-light lamp and a metal halide lamp for 5 minutes. Thus, a flame-retardant polymer sheet (19) having supporting base materials on both sides was produced.
In the resultant flame-retardant polymer sheet (19), the polymer layer (**B**) had a thickness of 85 $\mu$m and the flame-retardant layer (**A**) had a thickness of 15 $\mu$m.

(Example 20)

The monomer-absorbing layer was exposed by peeling the base material of the flame-retardant polymer sheet (18) obtained in Example 18, and then a silicone-based pressure-sensitive adhesive ("X-40-3229" manufactured by Shin-Etsu Silicone) diluted with a toluene solvent was applied onto the exposed monomer-absorbing layer. After that, the pressure-sensitive adhesive was dried at 100°C for 2 minutes. Thus, a flame-retardant polymer sheet (20) was produced.
In the resultant flame-retardant polymer sheet (20), the polymer layer (**B**) had a thickness of 175 $\mu$m, the flame-retardant layer (**A**) had a thickness of 25 $\mu$m, and the pressure-sensitive adhesive layer (**H**) had a thickness of 25 $\mu$m.

(Example 21)

The monomer-absorbing layer was exposed by peeling the base material of the flame-retardant polymer sheet (18) obtained in Example 18, and then an acrylic pressure-sensitive adhesive ("BPS6163" manufactured by TOYO INK CO., LTD.) was applied onto the exposed monomer-absorbing layer. After that, the pressure-sensitive adhesive was dried at 100°C for 2 minutes. Thus, a flame-retardant polymer sheet (21) was produced.

In the resultant flame-retardant polymer sheet (21), the polymer layer (**B**) had a thickness of 175 $\mu$m, the flame-retardant layer (**A**) had a thickness of 25 $\mu$m, and the pressure-sensitive adhesive layer (**H**) had a thickness of 30 $\mu$m.

(Example 22)

A polymerizable composition layer (thickness: 100 $\mu$m) was formed by applying the syrup (a-12) to the release-treated surface of the cover film. The resultant was attached to the monomer-absorbable sheet (B-4) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated at 70 °C for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (22) was produced.

(Example 23)

A polymerizable composition layer (thickness: 100 $\mu$m) was formed by applying the syrup (a-13) to the release-treated surface of the cover film. The resultant was attached to the monomer-absorbable sheet (B-4) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated at 70°C for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (23) was produced.

(Example 24)

A polymerizable composition layer (thickness: 100 $\mu$m) was formed by applying the syrup (a-14) to the release-treated surface of the cover film. The resultant was attached to the monomer-absorbable sheet (B-4) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated at 70°C for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (24) was produced.

(Example 25)

A polymerizable composition layer (thickness: 100 $\mu$m) was formed by applying the syrup (a-15) to the release-treated surface of the cover film. The resultant was attached to the monomer-absorbable sheet (B-4) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated at 70°C for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (25) was produced.

(Example 26)

A polymerizable composition layer (thickness: 100 $\mu$m) was formed by applying the syrup (a-16) to the release-treated surface of the cover film. The resultant was attached to the monomer-absorbable sheet (B-4) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated at 70°C for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (26) was produced.

(Example 27)

A polymerizable composition layer (thickness: 100 μm) was formed by applying the syrup (a-17) to the release-treated surface of the cover film. The resultant was attached to the monomer-absorbable sheet (B-4) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated at 70°C for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (27) was produced.

(Example 28)

A polymerizable composition layer (thickness: 100 μm) was formed by applying the syrup (a-9) to the release-treated surface of the cover film. The resultant was attached to the monomer-absorbable sheet (B-4) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated under the condition of 70°C for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, an inorganic substance-containing polymer sheet (28) was produced.

(Comparative Example 6)

A polyethylene terephthalate sheet having a thickness of 188 μm (trade name: "Lumirror S10," manufactured by Toray Industries, Inc.) was used as a polymer sheet (C6) without being treated.

(Example 29)

The syrup (a-12) was applied onto a supporting base material so as to have a thickness of 50 μm after its curing. Thus, a polymerizable composition layer (a') was formed. The syrup (b-3) was applied onto another supporting base material so as to have a thickness of 50 μm after its curing. Thus, a polymerizable composition layer (b') was formed. The resultant products were attached to each other in such a manner that the polymerizable composition layer (a') and the polymerizable composition layer (b') were in contact with each other, and so that no air bubbles entered. After that, the polymerizable composition layer (a') and the polymerizable composition layer (b') were cured by being irradiated with UV light (illuminance: 9 mW/cm$^2$, light quantity: 1,200 mJ/cm$^2$) by using a black-light lamp and a metal halide lamp for 5 minutes. Thus, a flame-retardant polymer sheet (29) having supporting base materials on both sides was produced.

(Example 30)

The syrup (a-12) was applied onto a supporting base material so as to have a thickness of 50 μm after its curing. Thus, a polymerizable composition layer (a') was formed. The syrup (b-6) was applied onto another supporting base material so as to have a thickness of 50 μm after its curing. Thus, a polymerizable composition layer (b') was formed. The resultant products were attached to each other in such a manner that the polymerizable composition layer (a') and the polymerizable composition layer (b') were in contact with each other, and so that no air bubbles entered. After that, the polymerizable composition layer (a') and the polymerizable composition layer (b') were cured by being irradiated with UV light (illuminance: 9 mW/cm$^2$, light quantity: 1,200 mJ/cm$^2$) by using a black-light lamp and a metal halide lamp for 1 minute. Thus, a flame-retardant polymer sheet (30) having supporting base materials on both sides was produced.

(Example 31)

A flame-retardant polymer sheet (31) having a layer construction "flame-retardant layer (**A1**)/polymer layer (**B**) /flame-retardant layer (**A2**)" was produced by attaching the polymer layers of the two flame-retardant polymer sheets (P-1) to each other.

In the resultant flame-retardant polymer sheet (31), the flame-retardant layer (**A1**) had a thickness of 25 $\mu$m, the polymer layer (**B**) had a thickness of 350 $\mu$m, and the flame-retardant layer (**A2**) had a thickness of 25 $\mu$m.

The surface on the side of the flame-retardant layer (**A1**) was defined as a surface a, and the surface on the side of the flame-retardant layer (**A2**) was defined as a surface b.

(Example 32)

The flame-retardant layer was exposed by peeling the cover film on the flame-retardant layer side of the flame-retardant polymer sheet (P-1). Thus, a flame-retardant polymer sheet (32) having a layer construction "flame-retardant layer (**A**)/polymer layer (**B**)" was obtained.

In the resultant flame-retardant polymer sheet (32), the polymer layer (**B**) had a thickness of 175 $\mu$m, and the flame-retardant layer (**A**) had a thickness of 25 $\mu$m.

The surface on the side of the flame-retardant layer (**A**) was defined as a surface a, and the surface on the side of the polymer layer (**B**) was defined as a surface b.

(Example 33)

A polymerizable composition layer (thickness: 100 $\mu$m) was formed by applying the syrup (a-18) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (33) was produced.

(Example 34)

A polymerizable composition layer (thickness: 100 $\mu$m) was formed by applying the syrup (a-1) to the release-treated surface of the cover film. The resultant was attached to the monomer-absorbable sheet (B-6) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (34) was produced.

(Example 35)

A polymerizable composition layer (thickness: 100 $\mu$m) was formed by applying the syrup (a-19) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (35) was produced.

(Example 36)

A polymerizable composition layer (thickness: 100 $\mu$m) was formed by applying the syrup (a-1) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was heated under the condition of 70 °C for 10 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (36) was produced.

(Example 37)

A polymerizable composition layer (thickness: 100 $\mu$m) was formed by applying the syrup (a-1) to the release-treated surface of the cover film. The resultant was attached to the monomer-absorbable sheet (B-8) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (37) was produced.

In the resultant flame-retardant polymer sheet (37), the flame-retardant layer had a thickness of 26 $\mu$m and the polymer layer (B) had a thickness of 174 $\mu$m.

(Example 38)

The monomer-absorbing layer was exposed by peeling the base material of the flame-retardant polymer sheet (P-1) obtained in Synthesis Example 35, and then a double-coated adhesive tape (trade name: "HJ-3160W," manufactured by Nitto Denko Corporation) was laminated on the exposed monomer-absorbing layer. Thus, a flame-retardant polymer sheet (38) was produced.

In the resultant flame-retardant polymer sheet (38), the polymer layer (B) had a thickness of 175 $\mu$m, the flame-retardant layer (A) had a thickness of 25$\mu$m, and the pressure-sensitive adhesive layer (H) had a thickness of 100 $\mu$m.

(Example 39)

The monomer-absorbing layer was exposed by peeling the base material of the flame-retardant polymer sheet (29) obtained in Example 29, and then a double-coated adhesive tape (trade name: "HJ-3160W," manufactured by Nitto Denko Corporation) was laminated on the exposed monomer-absorbing layer. Thus, a flame-retardant polymer sheet (39) was produced.

In the resultant flame-retardant polymer sheet (39), the polymer layer (B) had a thickness of 85 $\mu$m, the flame-retardant layer (A) had a thickness of 15 $\mu$m, and the pressure-sensitive adhesive layer (H) had a thickness of 100 $\mu$m.

(Example 40)

The flame-retardant polymer sheet (P-1) obtained in Synthesis Example 35 was used as a flame-retardant polymer sheet (40).

(Example 41)

A polymerizable composition layer (thickness: 100 $\mu$m) was formed by applying the syrup (a-1) to the release-treated surface of the cover film. The resultant was attached to the monomer-absorbable sheet (B-9) with a base

EP 2 570 259 A1

material, the monomer-absorbing layer of which had been exposed by peeling the cover film, in such a manner that the monomer-absorbing layer and the polymerizable composition layer were in contact with each other. Thus, a laminate was formed.

Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (41) was produced.

(Example 42)

A polymerizable composition layer (thickness: 100 $\mu$m) was formed by applying the syrup (a-20) to the release-treated surface of the cover film. The resultant was attached to the monomer-absorbable sheet (B-1) with a base material, the monomer-absorbing layer of which had been exposed by peeling the cover film, in such a manner that the monomer-absorbing layer and the polymerizable composition layer were in contact with each other. Thus, a laminate was formed.

Next, the laminate was left to stand at room temperature for 15 minutes. Thus, an unevenly distributed polymerizable composition layer was obtained. After that, both of its surfaces were irradiated with UV light (illuminance: 5 mW/cm$^2$) by using a black-light lamp as a light source for 5 minutes. As a result, the unevenly distributed polymerizable composition layer was photo-cured to form an unevenly distributed polymer layer. Thus, a flame-retardant polymer sheet (42) was produced.

(Example 43)

The cover sheet was peeled from the flame-retardant layer side of the flame-retardant polymer sheet (P-1) obtained in Synthesis Example 35, and then a drying step was performed at 130°C for 1 hour. Thus, a flame-retardant polymer sheet (43) was produced.

In the resultant flame-retardant polymer sheet (43), the polymer layer (B) had a thickness of 175 $\mu$m and the flame-retardant layer (A) had a thickness of 25 $\mu$m.

(Example 44)

The cover sheet was peeled from the flame-retardant layer side of the flame-retardant polymer sheet (29) obtained in Example 29, and then a drying step was performed at 130°C for 1 hour. Thus, a flame-retardant polymer sheet (44) was produced.

In the resultant flame-retardant polymer sheet (44), the polymer layer (B) had a thickness of 85 $\mu$m and the flame-retardant layer (A) had a thickness of 15 $\mu$m.

The polymer sheets of the examples and the comparative examples were subjected to the following evaluations. Tables 1 to 13 show the results.

<<Section observation>>

A section of the polymer sheet obtained in Example 1 was observed. A scanning electron microscope (SEM) (trade name: "S-4800," manufactured by Hitachi High-Technologies Corporation) was used as an apparatus. A piece measuring 5 mm by 5 mm was cut out of a sample for observation (the polymer sheet obtained in Example 1) with a razor, and was then cut from the base material film side of the monomer-absorbing layer with the razor. After that, the cover film on the unevenly distributed polymer layer side was peeled and then the remainder was subjected to Pt-Pd sputtering with a DC magnetron sputter (E-1030 manufactured by Hitachi High-Technologies Corporation) for 60 seconds. The resultant was observed at 1 Pa or less (high-vacuum mode) and an accelerating voltage of 10 kV.

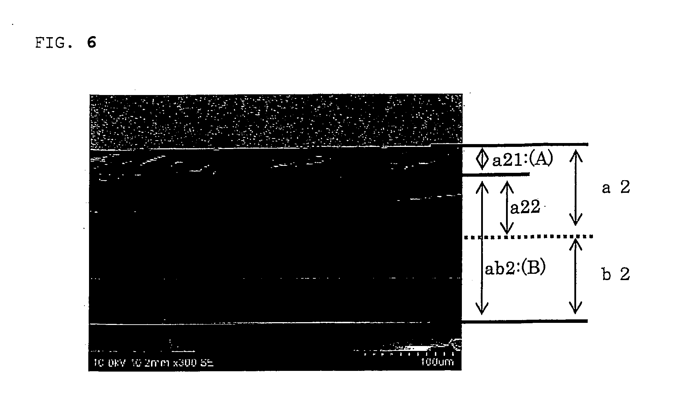

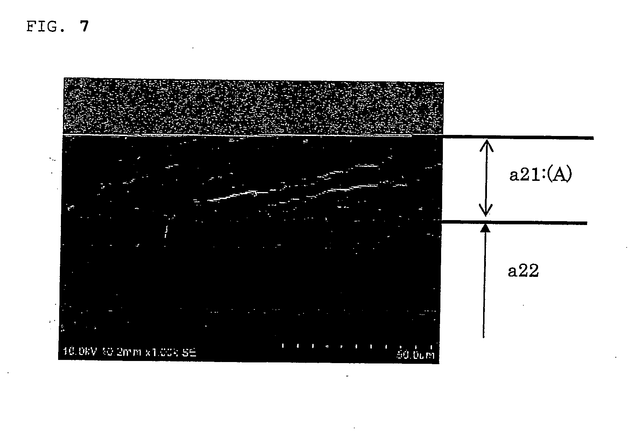

FIG. 6 is a scanning electron microscope photograph entirely showing a section of the flame-retardant polymer member of Example 1. FIG. 7 is a transmission electronmicroscope photograph showing the unevenly distributed portion (a21) of the layered inorganic compound (f) of the unevenly distributed polymer layer (a2) of the flame-retardant polymer member of Example 1, i.e., the flame-retardant layer (A). FIGS. 6 and 7 each show the appearance of an interface between the unevenly distributed portion (a21) where the layered clay mineral is unevenly distributed and the non-unevenly distributed portion (a22) where the layered clay mineral is not unevenly distributed in the unevenly distributed polymer layer (a2). It was able to be confirmed from the foregoing that the layered clay mineral was unevenly distributed toward the surface of the unevenly distributed polymer layer (a2) or a vicinity thereof in Example 1.

<<Ash content in flame-retardant layer>>

In order for a layer corresponding to a flame-retardant layer to be measured for the ratio of a layered inorganic compound in such layer, the ratio of the layered inorganic compound was calculated on the basis of an ash content when a powder produced by cutting the surface layer of such layer was burnt. A measurement method was in conformity with JIS-K2272. It should be noted that the layered inorganic compound used in each example has been subjected to an organizing treatment. 62 Weight percent of a "Lucentite SPN" is an organic compound and hence the ash content when the layered inorganic compound is used is calculated with reference to a theoretical value of 38 wt%. In addition, 66 wt% of a "Somasif MPE" is an organic compound and hence the ash content when the layered inorganic compound is used is calculated with reference to a theoretical value of 34 wt%.

<<Content of inorganic particles in polymer layer>>

In order for the ratio of inorganic particles in a polymer layer to be measured, the ratio of the inorganic particles was calculated on the basis of an ash content when a powder produced by cutting the surface layer of such layer was burnt. A measurement method was in conformity with JIS-K2272. It should be noted that the theoretical content of the inorganic particles in the base material used in each example is 61%.

<<Transparency>>

The cover film and the base material film on both surfaces of a polymer sheet were peeled, and then the total light transmittance and haze value of the remainder were measured with a haze meter ("HM-150" manufactured by MURAKAMI COLOR RESEARCH LABORATORY) in conformity with JIS7361.

<<Surface resistivity>>

The surface of such layer or portion as described below was exposed by peeling the cover film of a polymer sheet: the unevenly distributed portion (a21) (corresponding to the flame-retardant layer (A)) of the unevenly distributed polymer layer (a2) for each of the flame-retardant polymer sheets obtained in Examples 1 to 6, the layered inorganic compound-containing polymer layer (corresponding to the flame-retardant layer (A)) for each of the flame-retardant polymer sheets obtained in Examples 7 to 11, and the unevenly distributed portion (a21) (corresponding to the flame-retardant layer (A)) of the unevenly distributed polymer layer (a2) for each of the flame-retardant polymer sheets obtained in Examples 12 to 17. Next, the surface resistivity of the exposed surface was measured with a Hiresta resistance-measuring machine (manufactured by Mitsubishi Chemical Corporation).

<<Flame retardancy>>

A polymer sheet was evaluated for the following flame retardancy.
An evaluation for flame retardancy was performed by the horizontal firing test illustrated in FIGS. 3. FIGS. 3 illustrate a measurement method. Each polymer sheet was cut into a piece measuring 5 cm by 12 cm and then the piece was subjected to the evaluation. It should be noted that the cover films on both surfaces of each polymer sheet were peeled. The side of the layer corresponding to the flame-retardant layer (A) of the flame-retardant polymer sheet obtained in each example was defined as a lower surface.
The flame-retardant polymer sheet (31) was evaluated with regard to two cases, i . e . , the case where the surface a as the surface on the side of the flame-retardant layer (A1) was defined as a lower surface and the case where the surface b as the surface on the side of the flame-retardant layer (A2) was defined as a lower surface.
The flame-retardant polymer sheet (32) was evaluated with regard to two cases, i.e., the case where the surface a as the surface on the side of the flame-retardant layer (A) was defined as a lower surface and the case where the surface b as the surface on the side of the polymer layer (B) was defined as a lower surface.
In each comparative example, the side of the layer corresponding to the unevenly distributed polymer layer was defined as a lower surface.
A Bunsen burner was placed so that the flame port of the Bunsen burner was positioned at a lower portion distant from the central portion of the lower surface of a polymer sheet by 45 mm, and then the flame of the Bunsen burner having a height of 55 mm from the flame port was brought into contact for 30 seconds. A propane gas was used as the gas of the Bunsen burner and the test was performed in the air.

<<Flame retardancy: *1>>

A polymer sheet was evaluated for its flame retardancy on the basis of the following criteria by subjecting the polymer sheet to the horizontal firing test and observing the presence or absence of the combustion of the polymer sheet.

o: The polymer sheet does not ignite even after 30 seconds from the flame contact, and maintains its shape.

$\Delta$: The polymer sheet ignites within 30 seconds from the flame contact, but maintains its shape.

$\times$ : The polymer sheet ignites within 30 seconds from the flame contact, and does not maintain its shape.

<<Flame-blocking property: *2>>

A polymer sheet was evaluated for its flame-blocking property by: placing a White Economy 314-048 (manufactured by Biznet) as copy paper at a position 3 mm above the polymer sheet; and observing the presence or absence of the combustion of the copy paper through the same horizontal firing test as that described above.

o: The copy paper 3 mm above the polymer sheet does not ignite even after 30 seconds from the flame contact.

$\Delta$: The copy paper 3 mm above the polymer sheet ignites within 30 seconds from the flame contact, but does not ignite within 10 seconds therefrom.

$\times$: The copy paper 3 mm above the polymer sheet ignites within 10 seconds from the flame contact.

<<Flame retardancy of flame-retardant-treated product: $*_3$>>

A flame-retardant-treated product was evaluated for its flame retardancy as described below. A sample was obtained by attaching a White Economy 314-048 (manufactured by Biznet) as copy paper to the upper surface of a polymer sheet, and then the presence or absence of the combustion of the sample as an article subjected to a flame-retardant treatment was observed through the same horizontal firing test as that described above.

o: The flame-retardant-treated product does not ignite even after 30 seconds from the flame contact.

$\Delta$ : The flame-retardant-treated product ignites within 30 seconds from the flame contact, but does not ignite within 10 seconds from the flame contact.

$\times$: The flame-retardant-treated product ignites within 10 seconds from the flame contact.

<<Re-peelability>>

A sample having a width of 20 mm was crimped onto a standard stainless plate with a 2-kg rubber roller while the roller was rolled in a reciprocating manner once at a speed of 300 mm/min. After 30 minutes from the crimp, the sample was evaluated for its adhesion by being pulled with a tensile tester at 23°C and a rate of pulling (peel rate) of 50 mm/min in a 180° direction. In addition, the film was evaluated for its re-peelability by visually observing its state at that time.

o: The sheet is not broken and favorably peels off.

$\times$: The sheet is broken.

<<Cigarette resistance>>

A polymer sheet was placed on a K-Dry (manufactured by NIPPON PAPER CRECIA Co., LTD.) folded into quarters in order for heat conduction toward its lower portion to be prevented. A live cigarette was laid on the surface on the side of the unevenly distributed portion **(a21)** (corresponding to the flame-retardant layer (A)) of the unevenly distributed polymer layer (a2) of the polymer sheet (any one of the surfaces in the case of Comparative Example 2) for about 30 seconds. After that, the ash of the cigarette was wiped off with a K-Dry impregnated with water, and then the surface of the polymer sheet was examined for whether or not a singe and a hole were present.

With regard to singe:

o: No singe is present.

Δ: A light brown singe is slightly present.

×: A clear singe is present.

With regard to hole:

o: No hole is present.

Δ: A slight hole is present.

×: A clear hole is present.

The case where each of the results concerning the singe and the hole was Δ or o was acknowledged to have cigarette resistance.

<<Odor sensory evaluation>>

A sensory test for the odor of a polymer sheet in a sheet state was performed by five evaluators on the basis of the following six-stage odor evaluation and then the average of the test was shown.

0: No odor is felt.

1: An odor that can be felt with difficulty is felt.

2: A weak odor whose kind is understandable is felt.

3: An odor that can be easily felt is felt.

4: A strong odor is felt.

5: An overpowering odor is felt.

<<Weatherability>>

A resultant polymer sheet was irradiated with and exposed to light having an illuminance of 68 mW/cm$^2$ from a METALWEATHER for 120 hours under the conditions of a temperature of 83°C and a humidity of 50%. The L*'s, a*'s, and b*'s of the polymer sheet before and after the exposure were measured with a color-difference meter (SPECTROPHOTOMETER NF333 manufactured by Misec Corporation), and then change amounts ΔL*, Δa*, and Δb* between the values before and after the exposure were determined.

<<Total quantity of heat to be generated, smoke quantity>>

A polymer sheet was subjected to a combustion experiment with a cone calorimeter (600°C, 10 minutes), and then the total quantity of heat to be generated at the time of the combustion and a smoke quantity were measured.

<<Strong pressure-sensitive adhesive property>>

A sample having a width of 20 mm was crimped onto a standard stainless plate with a 2-kg rubber roller while the roller was rolled in a reciprocating manner once at a speed of 300 mm/min. After 30 minutes from the crimp, the sample was evaluated for its adhesion by being pulled with a tensile tester at 23°C and a rate of pulling (peel rate) of 50 mm/min in a 180° direction. In addition, the sheet was left to stand for 1 month from its attachment at room temperature (23°C), and was then evaluated for its long-term attachment property by visually observing its state at that time.

o: The sheet is favorably attached.

×: The floating or peeling of the sheet is observed.

<<Curl resistance>>

A polymer sheet was cut into a piece measuring 50 mm by 20 mm. The cover films on both surfaces of the polymer sheet were peeled and then the remainder was left at rest on a laboratory table. After 5 hours from the foregoing, the polymer sheet was evaluated for its curl resistance on the basis of the following criteria by observing a height from the laboratory table to an end portion of the sheet.

o: The height of the end portion of the polymer sheet is less than 0.1 mm and the entirety of the sheet does not float.

× : The height of the end portion of the polymer sheet is 0.1 mm or more and the sheet floats.

<<Gel fraction>>

A gel fraction in a polymer was measured as described below.
About 500 g of the polymer were collected and then a dry weight W1 (g) was measured. Next, the polymer was immersed in ethyl acetate at 23°C for 7 days. After that, the polymer was taken out and dried at 130°C for 2 hours, and then a dry weight W2 (g) of the resultant polymer was measured. Then, the gel fraction was calculated from the following equation.

$$\texttt{Gel fraction (wt\%)=(W2/W1)\times100}$$

<<Heat resistance>>

A polymer sheet cut into a square measuring 10 cm by 10 cm was loaded into an oven at 100 °C for 30 minutes, and then its dimensions before the loading and after the loading were measured. A dimensional change ratio for each of a TD direction and an MD direction was calculated from an equation "(after storage/before storage) $\times$100 (%) ."

<<Odorlessness>>

A sensory test for odorlessness was performed in a polymer sheet state by five evaluators on the basis of the following six-stage odor evaluation and then the average of the test was calculated. A smaller evaluation value for the odorlessness means higher low-outgas property (a larger extent to which the amount of an outgas is reduced).

0: Odorless

1: An odor that can be felt with difficulty

2: A weak odor whose kind is understandable

3: An odor that can be easily felt

4: A strong odor

5: An overpowering odor

<<Amount of volatile component during heating>>

The amount of a volatile component during heating was measured as described below. A measurement sample having an area of about 1 cm$^2$ was loaded into a vial bottle having a volume of 21.5 ml and then the bottle was tightly stopped. The bottle was heated with a Headspace Autosampler (Type 7694 manufactured by Hewlett-Packard Company) at 150°C for 3 minutes, and then a gas in a heated state was injected into a gas chromatography-measuring apparatus (Type HP-6890 manufactured by Hewlett-Packard Company). A DB-FFAP 1.0 $\mu$m (0.532 mm$\varphi\times$30 m) was used as a column, He (5.0 ml/min) was used as a carrier gas, a column head pressure was set to 24.3 kPa (40°C), and an FID detector was used.
[Table 1]

| | Polymerizable composition | Monomer-absorbable sheet with base material | Production method | Ash content in flame-retardant layer (A) (%) | Transparency | | Surface resistivity log ρ (Ω/□) | Flame retardancy | | |
|---|---|---|---|---|---|---|---|---|---|---|
| | | | | | Total light transmittance (%) | Haze value (%) | | Flame retardancy *1 | Flame-blocking property *2 | Flame retardancy of flame-retardant-treated product *3 |
| Example 1 | a-1 | B-1 | (1) | 25.7 | 92.4 | 1.7 | 10.5 | o | o | o |
| Example 2 | a-2 | B-1 | (1) | 32.1 | 92 | 3.7 | 9.8 | o | o | o |
| Example 3 | a-3 | B-1 | (1) | 25.7 | 92.2 | 2 | 11.1 | o | o | o |
| Example 4 | a-4 | B-1 | (1) | 22.7 | 92.6 | 1.5 | 11.4 | o | o | o |
| Example 5 | a-5 | B-1 | (1) | 20.7 | 91.6 | 1.5 | 10 | o | o | o |
| Example 6 | a-1 | B-2 | (1) | 23.2 | 92.1 | 2.3 | 10.6 | o | o | o |
| Example 7 | a-1 | B-2 | (2) | 8.41 | 92 | 1.3 | 11.4 | Δ | Δ | Δ |
| Example 8 | a-6 | B-2 | (2) | 11.8 | 91.8 | 2.2 | 11.2 | Δ | Δ | Δ |
| Example 9 | a-2 | B-2 | (2) | 10.8 | 92 | 2.2 | 9.9 | Δ | Δ | Δ |
| Example 10 | a-3 | B-2 | (2) | 3.02 | 92 | 2.3 | 11.7 | Δ | Δ | Δ |
| Example 11 | a-4 | B-2 | (2) | 10.7 | 92.3 | 1.4 | 14.7 | Δ | Δ | Δ |
| Comparative Example 1 | a-7 | B-2 | - | - | - | - | - | × | × | × |
| Comparative Example 2 | a-8 | B-2 | - | - | - | - | - | × | × | × |
| Comparative Example 3 | - | - | - | - | - | - | - | × | × | × |

EP 2 570 259 A1

(continued)

| | Polymerizable composition | Monomer-absorbable sheet with base material | Production method | Ash content in flame-retardant layer (A) (%) | Transparency | | Surface resistivity log ρ (Ω/□) | Flame retardancy | | |
| | | | | | Total light transmittance (%) | Haze value (%) | | Flame retardancy *1 | Flame-blocking property *2 | Flame retardancy of flame-retardant-treated product *3 |
|---|---|---|---|---|---|---|---|---|---|---|
| Comparative Example 4 | - | - | - | - | - | - | - | × | × | × |
| Comparative Example 5 | - | - | - | - | - | - | - | × | × | × |

[Table 2]

| | Polymerizable composition layer (a') | Polymerizable composition layer (b') | Production method | Ash content in flame-retardant layer (A) (%) | Transparency | | Surface resistivity log ρ (Ω/□) | Flame retardancy | | |
|---|---|---|---|---|---|---|---|---|---|---|
| | | | | | Total light transmittance (%) | Haze value (%) | | Flame retardancy *1 | Flame-blocking property *2 | Flame retardancy of flame-retardant-treated product *3 |
| Example 12 | a-9 | b-3 | (3) | 20.1 | 90.1 | 1.5 | 12.6 | o | o | o |
| Example 13 | a-10 | b-4 | (3) | 18.9 | 91.5 | 1.8 | 13.5 | o | o | o |
| Example 14 | a-10 | b-6 | (3) | 22.4 | 92 | 1.6 | 13.2 | o | o | o |
| Example 15 | a-11 | b-4 | (3) | 19.2 | 90.5 | 2 | 13.7 | o | o | o |
| Example 16 | a-12 | b-4 | (3) | 20.6 | 91.8 | 1.9 | 13.3 | o | o | o |
| Example 17 | a-12 | b-5 | (3) | 21.4 | 91.3 | 1.8 | 12.9 | o | o | o |

[Table 3]

| | Flame retardancy | | | Re-peelability | |
|---|---|---|---|---|---|
| | Flame-blocking property [1] | Flame-blocking property [2] | Flame retardancy of flame-retardant-treated product [3] | Adhesion (N/20 mm) | Re-peelability |
| Example 18 | o | o | o | 1.0 | o |
| Example 19 | o | o | o | 1.6 | o |
| Example 20 | o | o | o | 0.02 | o |
| Example 21 | o | o | o | 9.6 | o |

[Table 4]

| | Polymerizable composition | Monomer-absorbable sheet with base material | Transparency | | Surface resistivity log ρ (Ω/□) | Flame retardancy | | | Cigarette resistance | |
|---|---|---|---|---|---|---|---|---|---|---|
| | | | Total light transmittance (%) | Haze value (%) | | Flame retardancy *1 | Flame-blocking property *2 | Flame retardancy of flame-retardant-treated product *3 | Singe | Hole |
| Example 22 | a-12 | B-4 | 92.2 | 1.7 | 11.4 | o | o | o | o | o |
| Example 23 | a-13 | B-4 | 92.2 | 1.7 | 11.3 | o | o | o | o | o |
| Example 24 | a-14 | B-4 | 92.2 | 1.7 | 11.0 | o | o | o | o | o |
| Example 25 | a-15 | B-4 | 92.2 | 1.9 | 10.9 | o | o | o | o | o |
| Example 26 | a-16 | B-4 | 92.3 | 1.8 | 10.8 | o | o | o | Δ | o |
| Example 27 | a-17 | B-4 | 92.3 | 1.8 | 10.8 | o | o | o | Δ | o |
| Example 28 | a-9 | B-4 | 92.2 | 1.7 | 10.7 | o | o | o | × | o |
| Comparative Example 6 | - | - | - | - | - | × | × | × | × | × |

EP 2 570 259 A1

[Table 5]

| | Polymerizable composition layer (a') | Polymerizable composition layer (b') | Transparency | | Surface resistivity log ρ (Ω/□) | Flame retardancy | | | Cigarette resistance | |
|---|---|---|---|---|---|---|---|---|---|---|
| | | | Total light transmittance (%) | Haze value (%) | | Flame retardancy *1 | Flame-blocking property | Flame retardancy of flame-retardant-treated product *3 | Singe | Hole |
| Example 29 | a-12 | b-3 | 92.3 | 2.1 | 12.8 | o | o | o | o | o |
| Example 16 | a-12 | b-4 | 91.8 | 1.9 | 13.3 | o | o | o | o | o |
| Example 17 | a-12 | b-5 | 91.3 | 1.8 | 12.9 | o | o | o | o | o |
| Example 30 | a-12 | b-6 | 91.5 | 2.0 | 13.0 | o | o | o | o | o |

[Table 6]

| | Ash content in flame-retardant layer (wt%) | Transparency | | Surface resistivity log ρ (Ω/□) | Flame retardancy | | | |
|---|---|---|---|---|---|---|---|---|
| | | Total light transmittance (%) | Haze value (%) | | Flame retardancy *1 | | Flame-blocking property *2 | |
| | | | | | Surface a | Surface b | Surface a | Surface b |
| Example 31 | (A1) 25.7 (A2) 25.7 | 91.8 | 2.0 | 10.5 | o | o | o | o |
| Example 32 | (A) 25.7 | 92.4 | 1.6 | 10.5 | o | × | o | × |

[Table 7]

| | Syrup | Monomer-absorbable sheet with base material | Ash content in flame-retardant layer (A) (wt%) | Transparency | | Surface resistivity log ρ (Ω/□) | Flame retardancy | | | Odor sensory evaluation (point(s)) |
|---|---|---|---|---|---|---|---|---|---|---|
| | | | | Total light transmittance (%) | Haze value (%) | | Flame retardancy [*1] | Flame-blocking property [*2] | Flame retardancy of flame-retardant-treated product [*3] | |
| Example 33 | a-18 | B-1 | 23.8 | 92.2 | 1.6 | 10.8 | o | o | o | 1.2 |
| Example 34 | a-1 | B-6 | 24.7 | 92.3 | 1.6 | 10.6 | o | o | o | 1.4 |
| Example 1 | a-1 | B-1 | 25.7 | 92.4 | 1.7 | 10.5 | o | o | o | 3 |

[Table 8]

| | Syrup | Monomer-absorbable sheet with base material | Ash content in flame-retardant layer (A) (%) | Transparency | | Surface resistivity log ρ (Ω/□) | Flame retardancy | | | Weatherability (values measured with color-difference meter) | | |
|---|---|---|---|---|---|---|---|---|---|---|---|---|
| | | | | Total light transmittance (%) | Haze value (%) | | Flame retardancy [1] | Flame-blocking property [2] | Flame retardancy of flame-retardant-treated product [3] | $\Delta L^*$ | $\Delta a^*$ | $\Delta b^*$ |
| Example 35 | a-19 | B-7 | 25.2 | 92.3 | 1.8 | 10.6 | o | o | o | 0.21 | 0.2 | 0.22 |
| Example 36 | a-1 | B-1 | 24.1 | 92.3 | 1.7 | 10.5 | o | o | o | 5.43 | 0.44 | 0.21 |

[Table 9]

| | Syrup | Monomer-absorbable sheet with base material | Ash content in flame-retardant layer (wt%) | Content of inorganic particles in polymer layer (wt%) | Surface resistivity log ρ (Ω/□) | Flame retardancy | | | Cone calorie test | |
|---|---|---|---|---|---|---|---|---|---|---|
| | | | | | | Flame retardancy [1] | Flame-blocking property [2] | Flame retardancy of flame-retardant-trea ted product [3] | Total quantity of heat to be generated at time of combustion (MJ/m$^2$) | Smoke quantity (1/m) |
| Example 37 | a-1 | B-8 | 25.5 | 59 | 10.9 | o | o | o | 3.41 | 500 |
| Example 1 | a-1 | B-1 | 25.7 | o | 10.5 | o | o | o | 6.67 | 680 |

[Table 10]

| | Flame retardancy | | | Strong pressure-sensitive adhesive property | |
|---|---|---|---|---|---|
| | Flame retardancy [1] | Flame-blocking property [2] | Flame retardancy of flame-retardant-treated product [3] | Adhesion (N/20 mm) | Long-term attachment property |
| Example 38 | o | o | o | 14.2 | o |
| Example 39 | o | o | o | 14.0 | o |
| Example 32 | o | o | o | 1.0 | × |

[Table 11]

| | Transparency | | Flame retardancy | | | Curl resistance |
|---|---|---|---|---|---|---|
| | Total light transmittance (%) | Haze value (%) | Flame retardancy [1] | Flame-blocking property [2] | Flame retardancy of flame-retardant-treated product [3] | |
| Example 40 | 91.5 | 1.8 | o | o | o | o |
| Example 41 | 91.5 | 1.8 | o | o | o | × |

[Table 12]

| | Syrup | Monomer-absorbable sheet with base material | Ash content in flame-retardant layer (A) (%) | Transparency | | Surface resistivity log ρ (Ω/□) | Flame retardancy | | | Dimensional change after storage at 100°C (%) | |
|---|---|---|---|---|---|---|---|---|---|---|---|
| | | | | Total light transmittance (%) | Haze value (%) | | Flame retardancy [1] | Flame-blocking property [2] | Flame retardancy of flame-retardant-treated product [3] | TD | MD |
| Example 42 | a-20 | B-1 | 22.1 | 92 | 1.5 | 10.9 | o | o | o | 100 | 100 |
| Example 36 | a-1 | B-1 | 24.1 | 92.3 | 1.7 | 10.5 | o | o | o | 101.2 | 101 |

74

[Table 13]

| | Flame retardancy [*1] | Flame-blocking property [*2] | Odorlessness | Amount of volatile component during heating (ppm) |
|---|---|---|---|---|
| Example 43 | o | o | 0.5 | 500 |
| Example 44 | o | o | 0.6 | 600 |
| Example 32 | o | o | 3 | 8000 |

Industrial Applicability

The flame-retardant polymer member of the present invention can make various adherends flame-retardant by being attached to the various adherends.

Reference Signs List

| | |
|---|---|
| **A** | flame-retardant layer |
| **B** | polymer layer |
| **a** | polymerizable composition layer |
| **a'** | polymerizable composition layer |
| **a1** | unevenly distributed polymerizable composition layer |
| **a2** | unevenly distributed polymer layer |
| **a11, a21** | unevenly distributed portion of layered inorganic compound |
| **a12, a22** | non-unevenly distributed portion of layered inorganic compound |
| **b** | monomer-absorbing layer |
| **b'** | polymerizable composition layer |
| **b1** | monomer-absorbing layer |
| **b2** | cured monomer-absorbing layer |
| **C** | cover film |
| **D** | base material film |
| **E** | monomer-absorbable sheet with base material |
| **X** | laminate |
| **f** | incompatible layered inorganic compound |
| **m1** | polymerizable monomer |
| **m2** | polymerizable monomer |
| **p2** | polymer |

**Claims**

1. A flame-retardant polymer member, comprising:

   a polymer layer (B); and
   a flame-retardant layer (A) on at least one surface of the polymer layer (B),
   wherein the flame-retardant layer (A) comprises a layer containing a layered inorganic compound (f) in a polymer **(X).**

2. A flame-retardant polymer member according to claim 1, wherein in a horizontal firing test involving horizontally placing the flame-retardant polymer member with its side of the flame-retardant layer (A) as a lower surface so that the lower surface is in contact with air, placing a Bunsen burner so that a flame port of the Bunsen burner is positioned at a lower portion distant from the lower surface on the side of the flame-retardant layer (A) by 45 mm, and bringing a flame of the Bunsen burner having a height of 55 mm from the flame port into contact with the lower surface of the flame-retardant layer (A) for 30 seconds while preventing the flame from being in contact with an end portion of the flame-retardant polymer member, the flame-retardant polymer member has flame retardancy capable of blocking the flame.

3. A flame-retardant polymer member according to claim 1, wherein a thickness of the flame-retardant layer (A) accounts for 50% or less of a total thickness of the flame-retardant layer (A) and the polymer layer (B).

4. A flame-retardant polymer member according to claim 1, wherein the flame-retardant layer (A) has a thickness of 3 to 1,000 $\mu$m.

5. A flame-retardant polymer member according to claim 1, wherein a content of ash in the flame-retardant layer (A) is 3 wt% or more and less than 70 wt%.

6. A flame-retardant polymer member according to claim 1, wherein the layered inorganic compound (f) in the flame-retardant layer (A) comprises a layered clay mineral.

7. A flame-retardant polymer member according to claim 1, wherein the flame-retardant layer (A) and/or the polymer layer (B) each have/has pressure-sensitive adhesive property.

8. A flame-retardant polymer member according to claim 1, wherein the flame-retardant polymer member is obtained by laminating a syrupy polymerizable composition layer (a) formed of a polymerizable composition ($\alpha$) containing a polymerizable monomer (m) and the layered inorganic compound (f), and a solid monomer-absorbing layer (b) containing a polymer (**p**) and capable of absorbing the polymerizable monomer (m), and performing polymerization.

9. A flame-retardant polymer member according to claim 1, wherein the flame-retardant polymer member is obtained by laminating a solid layered inorganic compound-containing polymer layer ($a_p$), which is obtained by polymerizing a polymerizable composition layer **(a)** formed of a polymerizable composition ($\alpha$) containing a polymerizable monomer (m) and the layered inorganic compound (f), and a solid monomer-absorbing layer (b) containing a polymer (p) and capable of absorbing the polymerizable monomer (m).

10. A flame-retardant polymer member according to claim 1, wherein the flame-retardant polymer member is obtained by laminating a syrupy polymerizable composition layer (a') formed of a polymerizable composition ($\alpha$) containing a polymerizable monomer (m1) and the layered inorganic compound (f), and a syrupy polymerizable composition layer (b') containing a polymerizable monomer (m2) and a polymer (p2), and performing polymerization.

11. A flame-retardant article, which is obtained by attaching the flame-retardant polymer member according to claim 1 to an adherend.

12. A flame-retardant article according to claim 11, wherein the adherend comprises paper, lumber, a plastic material, a metal, a plaster board, glass, or a composite containing two or more thereof.

13. A flame-retarding method for an adherend, comprising attaching the flame-retardant polymer member according to claim 1 to an adherend to make the adherend flame-retardant.

14. A flame-retarding method for an adherend according to claim 13, wherein the adherend comprises paper, lumber, a plastic material, a metal, a plaster board, glass, or a composite containing two or more thereof.

FIG. 1

A

B

FIGS. 2

(1)

FORM (1)

(2)

FORM (2)

FIG. 3

5cm

1

5

1.0cm

5.5cm

4.5cm

4

3

2

SAMPLE S

5cm

12cm

FLAME-RETARDANT
LAYER (A)

FIG. 4

LAMINATING
STEP (1)

POLYMERIZING
STEP (2)

FIG. 5

FIG. 6

FIG. 7

<div align="center">**INTERNATIONAL SEARCH REPORT**</div>

| | International application No. |
|---|---|
| | PCT/JP2011/060264 |

| A. CLASSIFICATION OF SUBJECT MATTER |
|---|
| *B32B27/18*(2006.01)i |
| |
| According to International Patent Classification (IPC) or to both national classification and IPC |

| B. FIELDS SEARCHED |
|---|
| Minimum documentation searched (classification system followed by classification symbols) |
| B32B1/00-43/00, C08F2/00-2/60, C08K3/00-13/08, C08L1/00-101/14 |
| |
| Documentation searched other than minimum documentation to the extent that such documents are included in the fields searched |
| Jitsuyo Shinan Koho            1922-1996    Jitsuyo Shinan Toroku Koho    1996-2011 |
| Kokai Jitsuyo Shinan Koho    1971-2011    Toroku Jitsuyo Shinan Koho    1994-2011 |
| Electronic data base consulted during the international search (name of data base and, where practicable, search terms used) |
| |

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2003-12942 A  (Sekisui Chemical Co., Ltd.),<br>15 January 2003 (15.01.2003),<br>claims 1, 5, 12; paragraphs [0001], [0111],<br>[0131], [0135]<br>& US 2005/0260404 A1<br>claims 6, 44, 48; paragraphs [0001], [0155] to<br>[0157], [0184], [0193]<br>& JP 2002-138207 A        & JP 2002-138212 A<br>& JP 2003-49136 A        & WO 2002/016479 A1<br>& AU 8016801 A        & TW 284653 B | 1-2,4-14<br>3 |
| X | JP 2009-83150 A  (Kimoto Co., Ltd.),<br>23 April 2009 (23.04.2009),<br>claim 1; paragraphs [0002], [0091], [0093]<br>(Family: none) | 1-14 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 July, 2011 (19.07.11) | 02 August, 2011 (02.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2" align="center"><strong>INTERNATIONAL SEARCH REPORT</strong></td><td>International application No.<br>PCT/JP2011/060264</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2009-132030 A  (Nitto Denko Corp.),<br>18 June 2009 (18.06.2009),<br>claims 1, 3 to 4, 6 to 7; paragraphs [0027],<br>[0121] to [0142]<br>& EP 2221174 A1<br>claims 1, 3 to 4, 6 to 7; paragraphs [0030],<br>[0124] to [0145]<br>& US 2010/0304103 A1     & WO 2009/069486 A1<br>& KR 10-2010-0092460 A   & CN 101878114 A | 1,3-11<br>2,12-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005015620 A
- JP 2001040172 A
- JP 5009876 A